# EUROPEAN PATENT APPLICATION

(11) **EP 3 403 939 A1**
(43) Date of publication of application: **21.11.2018**
(21) Application number: 16832364.0
(22) Date of filing: 04.08.2016
(51) Int. Cl.: B65B 3/02, B65D 77/06, B65D 5/00

(54) **METHOD, MACHINE AND DEVICES FOR PRODUCING FLEXIBLE 3D PACKAGING, BY MEANS OF FOLDING A FLAP ON ITSELF**

(30) Priority: 04.08.2015 ES 201531164
(71) Applicant: López-Aróstegui, Sáenz, Guillermo, 48610 Urduliz (Vizcaya) (ES)
(72) Inventor: López-Aróstegui, Sáenz, Guillermo, 48610 Urduliz (Vizcaya) (ES)
(86) International application number: PCT/ES2016/000085
(87) International publication number: WO 2017/021570

(57) **Abstract**

Procedures and devices to transform three dimensional flexible sealed containers of at least two faces or sides and which in their interior contain at least one fluid and, optionally or complementarily, solid or solids, granulates or powders, by folding at least once over itself, towards at least one direction: at least part of at least one flap/triangular shap (36) or strip (37) over at least part of another part of the same flap/triangular shape (36) or strip (37), alongside with also previously and/or posteriously there will be a seal of at least one part by at least one face or side of the flap/triangular body (36) or strip (37) generated and/or being this one folded at least once over itself.

This system supposes improvements regarding the inalterability of the container, economic and ecological considerations by not having to cut the flaps or triangular shapes, keeping it intact, without fissures or tearings iin the initial container body, transformed in 3D.

At the same time, the following advantages are important:
-by guaranteeing the conservation and useful life of the container without porousness or leaks, from the moment of the 3D transformation until its later opening and consumption of the product contained within.
-by not requiring any sort of adhesive or contact glue to attach or fold the flap/triangular shape (36) or strip (37).
-by impeding that the Production Facility generates any defective container transformed in 3D.
-by having the invention containers be more stable because the support face or side is wider and more consistent, having at least part of the flap/triangular shape (36) or strip (37) as a support surface in the base.

## Description

### TECHNICAL FIELD OF THE INVENTION

It belongs to the industry of the manufacture of flexible three-dimensional, heat sealable, disposable or reusable packages which stand alone on their own because they generate, among other things, flat faces to lean on.

The machines and methods of this invention will participate jointly within an integral solution together with other machines already existing in the market, because the method of the invention is a transformation of an initial package or bag sealed by at least one side and of at least two faces that has been previously manufactured by another machine, although it can also be all integrated in a same machine that at the same time would make the initial packaging and then transform it into a 3D package.
- For example, machines of vertical/horizontal filling of liquids or solids are those that, previously, will manufacture the initial package from which we start, which is none other than a package with at least two faces (although it may have another secondary face or fold, as it is the case in the English type packages or in the stabilo pack®) sealed with one or more welds and that inside contains at least one fluid (for example: liquid/pasty or/and air/gas) and, optionally or in addition, a solid or solids, granulated or powdery.

The materials used to manufacture the initial packages are flexible of the film type in a coil such as plastic, aluminum or cardboard (the latter is dispensable since the welding lines of the invention provide rigidity and consistency to the package). In addition, they can be monolayer or multilayer/complex as for example: the attached sheets of different types such as plastic-aluminum or plastic-aluminum-cardboard. Likewise, they can also be arranged in tube or semi-tube.
- The procedure, the machine and the 3D-transformed packages of the invention are useful in well-differentiated sectors:
   A) Food:
      a.1) Plastic ice cubes for drinks (sangria, beer, champagne, wine, cider, gazpacho), organ transplant, etc. These are cubic packages, with water in their interior, of plastic material type film in coil that are going to be sterilized by the outer contour of the plastic and, depending on the case, they will be wrapped in a second wrap.
      a.2) three-dimensional packages that contain liquid or pasty foods and, in addition, solid foods, such as beverages, yoghurts, purees, sauces.
      a.3) three-dimensional packages that contain solid foods such as: corn flakes, nuts, chips, olives, snaks.
   B) Non-food:
      b.1) three-dimensional packages that contain liquids or pasty and, in addition, solids, such as: mineral or synthetic oils, gels or shampoos, perfume-colognes, creams, paints, chemicals or cleaning products.
      b.2) 3D packages that contain solids inside such as: hardware (screws, washers, etc.), toy or household items.

### RELEVANT STATE OF THE TECHNIQUE

This Application for Patent of invention is a continuation or is related to two Applications for Patent of invention that I have previously submitted and published: PCT/ES2012/000261-WO2013/039037 dated 13-09-2013 and PCT/ES2014/000041-WO2014/140464 dated 11-03-2014. They describe different procedures and machines to transform flexible initial packaging into final packages in the form of three-dimensional geometric bodies such as the cube, rectangular prism, rhomboidal pyramid, cylinder or multiple and varied forms of irregular polyhedra.

On the other hand, the flexible initial packaging of at least two sides can be manufactured by means of other filling and sealing machines such as: vertical or horizontal machines existing in the market for about 25 years or more.

In general, the initial packages are double-sided, although they can also have another secondary one, such as: packages of the type stabilo pack®, English type (with flaps inwards), doy pack, etc. The vertical or horizontal machines that make the initial packaging can use different formats and materials:
A) In tube (monolayer/multilayer and complex) in which the machine makes two seals or transverse welds up and down.
B) Semitube (monolayer/multilayer and complex) in which the machine makes three seals or welds: two transversals up and down and one longitudinal to one side left or right.
C) Laminates (monolayer/multilayer and complex) in which the machin can make three, four or more seals or welds: two or more transversals up and down and others, one, two or more longitudinal to one side (left or/and right) or in the middle on the front face or/and the one on the back.

Therefore, the transformation in 3D can be carried out in any type of initial packaging that is flexible, of at least two faces and with at least one welding line.

There are other methods that also make a package that stands on its own, but are different from the invention; they are the following:
- The packages type tetrabrik®, SIG®, IpI®, which must necessarily be made with cardboard film-type film in coil - apart from others such as aluminum and plastic -, since this material is the one that confers rigidity and consistency to the package. In addition, previously, to this sheet of cardboard are made marks or indentations as a die cut that serve as a guide so that, a posteriori, acquires the cubic or three-dimensional form at the time of being compressed around by rollers, when the film in a coil, that has already formed a vertical cylindrical tube, moves from top to bottom in a vertical liquid filling machine.
- The package of the Doy pack system has a support base face but is less stable, less volumetric and less economical (since it requires a special three-layer complex plastic in order to provide rigidity and consistency to the package). In addition, this package is almost flat - except from just the bottom part - and with two lines of welding on the sides: it makes it more difficult to dose or use it because it generates a narrow mouth and, also, because in the case of containing liquids in its Inside, less pressure is exerted on the packaged product.

### TECHNICAL PROBLEM TO BE SOLVED

1- In the case of flexible initial packages of at least two sides (such as the sachet, pillow, pouch, stand up, stabilo, flat bottom or English type, etc.) that have been transformed into three-dimensional flexible packages by means of sealing and cutting at least one flap or triangular body:
   - On the one hand, it solves and guarantees that these three-dimensional packages remain tightly closed without leaks, preventing and avoiding the fluid [(liquid and / or pasty) or/and (air and/or gas)] packaged inside from escaping or evacuating from the package through the seal welding line of the cut flap. This is because just at the centre or middle of this weld line there is a zone or point at which there is a narrow gap (generated when the flap is formed when two contiguous perimeter sides of the initial package are joined) that is going to generate an escape route, since it does not contain enough plastic to heat-seal well this point or area.
      That is why over time or when pressing on the outer contour of the package (for example, when another package is placed on top of it): the fluid packed inside escapes or flows out and, in the case of contain packaged foods inside, these are contaminated.
   - On the other hand, it also solves and guarantees that none of the packages are manufactured defective since it is common (approximately 40%) when the flaps (or triangular bodies) are generated, that folds or wrinkles are formed in the line of intersection between the flap (or triangular body) and the rest of the package causing pores or cracks to arise (where the fluid will escape) once the flap is sealed, precisely, by this line of intersection.
   - Therefore, the system to fold at least once on itself the flap/triangular body or strip and, previously and/or subsequently, seal it at least once: it allows not only not to cut the flap (triangular body) or strip, but also allows to seal the intersection area of the flap/triangular body and the body of the package with lower temperature and less time, thus preventing cracks or pores from forming in this welding line, as well as avoids pores or cracks in the cases in which a wrinkle or crease has formed in this area when the flap is generated). In addition, when this line of welding is going to serve as an opening line through which serving the packaged product inside the package: it will facilitate with greater convenience the opening of this line, being sealed with less intensity.
   - Likewise, the initial packaging containing solids, granules or powders inside, these will also generate pores and cracks {to stay residual precisely between the two sides of the flap (or triangular body) generated} at the time of seal and cut the flap. That is why it is essential that the flap/triangular body can be sealed with a low temperature and sealing time to obtain a reliable and safe three-dimensional flexible packaging that enables the commercialization of these. Finally, it also solves and guarantees that the three-dimensional transformed package permanently maintains the same three-dimensional body shape intact, since it does not crush or wrinkle, because of the fact that is does not lose fluids.
2- In the case of flexible packaging of at least two sides (such as sachet, pillow, pouch, stabilo, flat bottom or English type, etc.) that have been transformed into three-dimensional flexible packages by means of adhering or attaching at least one flap (or triangular body) to the body of the flexible packeages:
   - It resolves and guarantees that these flaps stuck or adhered to the body of the package do not distort and alter the acquired three-dimensional shape of the package (especially in the face that acts as a base), because the triangular flaps or body exert pressure (pulling it) on the package causing it to bulge producing a deformation and less vertical stability of the package.
   - It also prevents the flap from peeling off or loosening, so it is guaranteed that the packaging does not alter its three-dimensional body shape or the stability of the package.
   - Likewise, from the economic and environmental point of view: it is essential that it is not necessary to use adhesives or glues, such as contact glue or a plastic strip, to adhere or stick the flaps or triangular bodies to the package.

### EXHIBITION OF THE INVENTION

- Procedure for manipulating or transforming the flap (or triangular body) or at least part of the flap (or triangular body) or strip, generated from a flexible package or flexible wrapper, which can be, for example, any type of plastic or cardboard, as well as, for example, being a wrapper in tube, semitube or laminates (monolayer, multilayer, complex). Different modes of manipulation are given, mainly by folding or bending at least once on itself and towards at least one direction, at least a part of at least one triangular flap/body or strip on at least part of another part of the same flap/triangular body or strip.
- Procedures and devices for transforming packages or initial flexible sealed packages of at least two faces and containing in their interior at least one fluid (for example, air or/and gas) and optionally or in addition solid or solids, granules or powders, in three-dimensional packages, by means of different manipulation modes of the flap/triangular body (or at least part of the flap or triangular body) or strip [or also in any other configuration manner, in which the flap or triangular body previously, in a former, first stage is sealed and cut] (generated from the flap/triangular body) but, mainly, by folding or bending at least once on itself and towards at least one direction of at least a part of at least one flap/triangular body (or at least part of at least one flap or triangular body) or strip (or any other configuration) toward or over at least part of at least another part of the same or another flap/triangular body (or at least part of at least one flap or triangular body) or strip (or of any other configuration).

In addition, this system involves improvements in terms of the inalterability of the package, the economic and the ecological, as well as three-dimensional packaging products of different shapes are configured in terms of their external appearance related to the triangular flaps/bodies (36) or the strip (37) (or any other configuration).
- Then, the different procedures for manipulating at least one flap (or triangular body) generated from an initial flexible package or package that is to be transformed into a three-dimensional package are set forth:
   1- The flap (or triangular body) is permanently attached to the body of the flexible package, when folded, bent or joined at least once to at least one direction (towards the body of the package or any of the adjacent sides of the package) at least part of at least a part of the flap or triangular body on at least part of at least another part of the same or another triangular flap (or at least part of at least the flap or triangular body) {one together to the other or also side by side}, in which they can also be, for example: superimposed in parallel or with some degree of rotation to one side or another, as well as folding/bending at least once the flap (or triangular body) on itself, for example, rectilinearly, obliquely or semicircularly.
      Subsequently, the flap/triangular body (or at least part of at least the flap or triangular body) will be sealed (which is folded or bent at least once on itself of at least two parts or two halves, which they can be making contact or being next to each other} by at least one side and being able to choose between any of the following options:
      1a) sealing with at least one welding line (they can be, for example: rectilinear, diagonal, oblique, semicircular concave/convex, saw, in two or more directions, etc.) by at least one face of at least part of the edge (or at least part of the edge and in turn also at least part of the area contiguous to the edge) generated by bending or folding over itself the flap (or triangular body).
      1 b) sealing at least once with at least one welding line (rectilinear, semicircular, oblique, diagonal, saw, in two or more directions, etc.) by at least one face at least part of the area adjacent to the edge generated by bending or folding on itself the flap or triangular body and, preferably, in parallel, although it can also be made, for example, obliquely, diagonally or semicircularly.
      1c) sealing with at least two welding lines (they can be, for example: rectilinear, diagonal, oblique, semicircular concave/convex, saw, in two or more directions, etc.) of which at least one is made prior to the folding or bending of the flap/triangular body and, at least one more, is carried out after folding the flap/triangular body, as described below:
         First: sealing, prior to the bending or folding over itself of the flap/triangular body, at least one welding line (rectilinear, semicircular, diagonal, saw, in two or more directions, etc.) at the height which is wanted, or, in the line or zone of intersection between the flap/triangular body and the body/rest of the package, or, separated above the zone or line of intersection between the flap/triangular body and the body/rest of the package.

      Likewise, the combination between these two options can be given, in such a way that it can be sealed for example with a welding line (they can be, for example: rectilinear, diagonal, oblique, semicircular concave/convex, in saw, in two or more directions, etc.) the zone or line of intersection between the flap/triangular body and the body/rest of the package and at the same time, separated from the previous welding line, at least one welding line (can be, for example: rectilinear, diagonal, oblique, semicircular concave/convex, saw, in two or more directions, etc.) separated and parallel to the welding line that has been made in the intersecting area of flap or triangular body and the body of the package.
      In addition, any of these welding lines prior to bending or folding the flap or triangular body, optimize the folding or bending procedure of the flap/triangular body on itself because it facilitates quickly and conveniently that the flap/triangular body is fold or bent over itself, precisely, by the intersection area of the flap/triangular body and any one of the welding lines made prior to bending or folding the flap/triangular body on itself as for example the one made in the intersection of flap/triangular leather and package body.
      Second: sealing, once the flap/triangular body is already folded or bent at least once on itself, with at least one welding line (rectilinear, semicircular, diagonal, in saw, in two or more directions, etc.) by at least one of its faces. Two options can be given, either sealing on at least part of the edge that is generated when bending or folding over the flap (or triangular body), or sealing at least once over at least part of the area contiguous to the edge. Likewise, both options can be combined, so that it can be sealed, for example: with a welding line (they can be, for example: rectilinear, diagonal, oblique, semicircular concave/convex, saw, in two or more directions, etc.) all the edge and, at the same time, separated from the previous welding line, other one or two welding lines (they can be, for example: rectilinear, diagonal, oblique, semicircular concave/convex, saw, in two or more directions, etc.) separated from each other and parallel, or not, to the welding line that has been made on the edge.
   2- The flap or triangular body is sealed (by at least one of its faces) and cut (or cauterized) in the manner [or in any other manner of configuration, in which the flap or triangular body previously in an earlier, first stage has been sealed and cut/cauterized] next: in the lower part, a welding line (rectilinear, oblique, diagonal, semicircular, etc.) by at least one face in the intersection area between the flap/triangular body and the body of the package and, followed by the previous one upwards, two welding lines (they can be, for example: rectilinear, diagonal, oblique, semicircular concave/convex, saw, in two or more directions, etc.) vertical, parallel and separated between them that are joined and converge to the anterior transverse weld line forming, preferably, a 90 degree angle.
      In this way, a strip can be generated because at least two segments of triangular configuration on the left and right side of the flap or triangular body are sectioned or cut, and because at least part of the segment is also left uncut/un-cauterized at least part of the longitudinal zone/strip of just half of the flap (or triangular body) since runs on one side of the triangular body/flap of the transversal a welding line that has been made at the time of manufacturing of the initial package (specifically, it is the transverse welding lines that close up and down the initial package). Therefore, when not cutting this welding line is found longitudinally dividing the flap or triangular body from the tip of its peak towards the middle of the welding line made in the intersection area of the flap/triangular body and the body of the package, on the one hand, it is obtained a flap or triangular body reduced in size in the form of a strip that occupies less space and does not hinder and, on the other hand, a reliable and safe package because it prevents leakage of the fluid packaged in the inside of the package.
      The most optimized way of sealing and cutting is when a welding line is made (it can be, for example: straight, diagonal, oblique, semicircular concave/convex, saw, in two or more directions, etc.) with the same shape similar to that traced by the capital letter "L" and with the peculiarity that both the "L" on one side and the other: their respective vertical sticks are flanking this welding line that corresponds to the transverse welding line up and down made before the initial packaging was made.
- At the same time, optionally, this strip can be manipulated by choosing between any of the procedures and steps outlined above in points [1, 1a, 1b, 1c], so that it can now be called: [2.1, 2.1a, 2.1b, 2.1c].
   3- The flap (or triangular body) is permanently attached to the body of the flexible package, because it comprises two steps:
      by folding or bending at least once to at least one direction (towards the package body or any of the adjacent faces of the package) at least part of at least a portion of the flap or triangular body over at least part of at least another part of the same or another flap (or triangular body) {one next to the other, or but also, side by side}, which also may be, for example: superimposed in parallel or with some degree of rotation towards one side or the other, as well as folding/bending at least once the flap (or triangular body) on itself, for example, straight, obliquely or semicircularly, and adhering or gluing, by means of an adhesive or glue like a contact glue or a heat strip, at least once by at least one face of at least part of at least a part of the flap/triangular body (36) or strip (37) on at least part of at least another part of the same flap/triangular body (36) or strip (37), in which both parts have been folded or bent at least once upon themselves.
   4- In any of the options [1], [1a], [1b], [1c], [2.1], [2.1a], [2.1b], [2.1c], [3] optionally, it can also be taken additional steps consisting of manipulating only the part of the flap/triangular body or strip [or any other configuration mode, in which the flap or triangular body previously in an earlier, first stage has been sealed and cut/cauterized] which remains loose from the last welding line made in the flap/triangular body to the peak or the tip of the flap (since this is not folded/bent and/or sealed together with at least another part of the same flap), choosing from any of the following options:
      i) crushing the flap or loose strip on the body of the package (because it is already next to the body of the package), by means of a push mode, and at least part of this flap (or triangular body) or loose strip is stuck to the body of the package by means of an adhesion mode such as for example contact glue.
      ii) sealing, by means of a heat source such as for example a resistance or ultrasound, at least once by at least part of at least one of the faces of the flap (or triangular body) or loose strip.
      iii) sealing, by means of a heat source such as for example a resistance or ultrasound, at least once on at least part of at least one of the faces of the flap (or triangular body) or loose strip; crushing the flap or loose strip on the body of the package (because it is already next to the body of the package), by means of a push mode, and paste this flap/triangular body or strip (or any other form of configuration) to the package body by means of an adhesion mode such as, for example, contact glue.
      iiii) cutting (or cauterizing), by means of a cutting mode such as that of a blade, totally or partially, at least part of the flap or strip that is loose.
      iiiii) sealing, by means of a heat source such as for example a resistance or ultrasound, at least once on at least one face of the flap or loose strip; and cutting (cauterizing), by means of a cutting mode such as that of a blade, totally or partially, at least part of the flap (or triangular body) or strip that is loose.
      iiiiii) attaching, by means of a folding or bending system, at least once to at least one direction of at least a part of the flap (or triangular body) or loose strip towards at least part of at least another part of the same flap (or triangular body) or loose strip and, followed, this flap (or triangular body) or loose strip that is folded or bent at least once on itself, will be manipulated by choosing between any of the options [i], [ii], [iii], [iiii] and [iiiii] described above.

      Optionally, a previous step can be given in which this flap (or triangular body) or loose strip is sealed at least once by at least one face.
   5- The flap (or triangular body) or also the strip that is generated when sealing and cutting the flap or triangular body arches due to the use of a wrapping with a flexible material between 20 to 40 microns thick (or approximately) and of the type, for example, of Polypropylene, Biorentated Polypropylene or mono-oriented and monolayer or multilayer Polypropylene (for example: 2 layers), and because the welding lines are made (for example: straight, diagonal, oblique, n saw, semicircular concave/convex, in two or more directions, etc.) following:
      4a) when at least another welding line is made (rectilinear, semicircular, oblique, diagonal, saw, in two or more directions, etc.) separated from the previous one, approximately, between at least 0.1 to 5 millimetres {when it is more optimized is between 0.1 and 2 millimetres} and, preferably, parallel: from the welding line (rectilinear, semicircular, oblique, diagonal, saw, in two or more directions, etc.) made in the intersection of the flap (or triangular body) or the strip and the body of the package, in such a way that the flap (or triangular body) or the strip: folds (although it is unstable because its bending is not consistent) and it also arches (in the area where the welding lines are made) towards at least one side of the package (towards the side faces, the package being upright, and towards the base faces from above and below, the package being in a horizontal position).
      4b) when the flap or strip (or triangular body) is sealed completely or at least 3/4 (or approximately), in which the flap (or triangular body) or strip arches towards the side of the package.
   6- All the procedures and processes described above can be carried out individually or combined randomly between any of them, for the same flexible package transformed three-dimensionally. So the flaps (or triangular bodies) or strips of the same package can be manipulated in many different ways, as shown in the combinations of the following examples:
      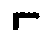 when the two flaps (or triangular bodies) or strips of the upper part of the package are handled by means of the process [4-] and the two below by the process [2a)].
      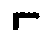 when the two flaps or triangular bodies of the upper part of the package are handled by means of the process [1] and the two below by means of the process [2b)].
      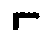 when one of the flaps (or triangular bodies) or strips of the upper part of the package is handled by the process or procedure of point [2b] and the other [2a)], and the two below by means of the process [1)].
      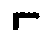 when one of the flaps or triangular bodies of the upper part of the package is handled by the process of point [4.2) and the other [4.3a)], and the two below by the process [4.3a)].
      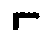 when the four flaps or triangular bodies of the package are handled by means of the process or procedure [2b)].
      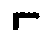 when the two flaps or triangular bodies of the upper part of the package are handled by means of the process [4], and the two below by means of the processes: [3a)] and [iiiii] of the process [5]].
   7- All the Procedures of points 1 to 6 set forth and described above, can also be given as refinement and improvement of other manufacturing processes of packages of three-dimensional configuration that are manufactured with flexible materials, where the process comprises the following steps:
      - generating a package body starting, for example, from the film in a reel, and
      - generation means of at least one flap or triangular body.
   8- The invention is also protected in two types of machines:
      8a) The machines that transform flexible initial packages into three-dimensional packages, in which the package shelters at least one fluid and optionally or in addition can shelter a solid or solids, granules or powders, equipped mainly with:
         at least one support, at least one sensor for detecting the initial package or the package initially introduced in the machine, and
         at least one movable impact body [driven by means of linear or rotational displacement] or/and immobile: intended to press in one, two or more lateral directions of the outer perimeter contour, of at least part of at least one or more perimeter lateral sides to generate at least one flap/triangular body or strip, and
         at least one sealing jaw or sealing and cut jaw operated by means of linear or rotational displacement, intended to seal or seal and cut, by means of a cutting mode such as that of a blade, by one or more of the faces and/or in part of the perimeter or lateral outer contour, of at least part of at least one of said flaps (or triangular body) or strip, in which the sealing jaws have at least one mode of heat source, to maintain permanently supporting face or additional face generated, where the machine is characterized by what is comprises
      8b) Filling and sealing machines for flexible packages that contain at least one fluid inside and, optionally or in addition, can shelter a solid or solids, granules or powders, comprising:
         - means for generating package bodies,
         - at least one device of jaws or set of two parallel jaws with which they are sealed and cut transversely and horizontally (above and below) the flexible packages, and
         - means for generating at least one flap/triangular body or also a strip (37) {generated by sealing and cutting the flap or triangular body} to be manipulated.

Any of the machines [8a] or [8b], will be equipped with:
- at least one device intended to join, by means of a folding or bending mode, at least once on itself towards at least one direction: at least a part of a flap/triangular body or strip on at least part of at least another part of the same flap/triangular body or strip, as indicated and expressed in each point of sections [A1], [A.1.1], [A.1.2], [A.1.3], [A .1.4], [A2], [A.2.1] and [A.2.2], and
- at least one, two or more adhesion or attachment systems such as, for example, contact glue or at least one welding system (arranged, each time, for a flap/triangular body (or at least part of the flap/triangular body) or strip}, by means of a heat source such as a resistance, laser or ultrasound, which can be fixed, for example, on at least one of the lateral faces {which will be in contact with at least one of faces of the flaps/triangular bodies (or at least part of the flap/triangular body) or strip, when this is generated} of an impact body or/and of a closing jaw: intended to seal,
   on the one hand, optionally and prior to the triangular flap/body (or at least part of the flap/triangular body) or strip being folded or bent at least once on itself: at least one, two or more times (2a), 2b, 2ae, 2be) by at least one side of the flap/triangular body (or at least part of the flap/triangular body) or strip, in such a way that it will subsequently facilitate the flap/triangular body (or at least part of the flap/triangular body) or strip is folded or bent, precisely, by at least any of the welding lines (2a, 2b, 2ae, 2be) {can be, for example: rectilinear, diagonal, semicircular concave/convex, saw, etc.} that have been wanted and,
   on the other hand, after the flap/triangular body (or at least part of the flap/triangular body) or strip is folded or bent at least once on itself, at least sealing one, two or more times (2ac, 2bc, 2ad, 2bd) by at least one side of the flap/triangular body (or at least part of the flap/triangular body) or strip on at least part of the edge {generated by folding or bending at least once the flap/triangular body (or at least part of the flap/triangular body) or strip} or/and of the contiguous zone and separated from this edge, in such a way that it will permanently maintain the triangular body/flap (or at least part of the flap/triangular body) or strip folded or bent at least once on itself; and, optionally, it can also be provided:
- at least one adhesion or fixing system such as, for example, contact glue or at least one welding system {by means of a heat source such as, for example, a resistance element, for sealing at least once with at least one line of welding at least part of at least one face of the flap/triangular body (or at least part of the flap/triangular body) or loose strip} or/and cutting/cauterizing system {by means of a cutting mode such as a blade for cutting all or at least part of the flap/triangular body (or at least part of the flap/triangular body) or loose strip}, arranged for the flap/triangular body (or at least part of the flap or triangular body) or strip that remains loose after being folded or bent at least once on itself. Furthermore, they can be fixed, for example: on at least one of the lateral faces {which will come into contact with at least one of the faces of the flaps/triangular bodies (or at least part of the flap/triangular body) or strip, when it is generated} or in the cavity of both the impact body or/and a closing jaw.
- Next, we describe different devices for manipulating at least one flap (or triangular body) generated from an initial flexible container of at least two faces and which is transformed **into a three-dimensional container. These devices can be fixed both in the impact bodies (those that generate the flaps) and in the closing grips (located on the sides of the impact body).**

### A.1- System or device, mainly, by means of at least one cavity and one stylet (or thrust body) with which the flap (or triangular body) or strip is folded or bent at least once over itself, as well as sealing or/and sealing and cutting at least one, two or more times the flap (or triangular body) or strip on at least one face of at least part of the generated edge or/and the area or line adjacent to this edge.

For this, the impact body (the one that generates the flap or triangular body) or/and the closing grip (which when activated, once the flap or triangular body has been generated, joins the impact body to trap and crush the flap or triangular body that is located between them), have the following devices:
**A.1.1)** at least one **slot-hole and cavity,** located on at least one of the side faces of the impact body or of the closing grip, where the flap (or triangular body), when generated, comes into contact with this side face when being parallel and at par, so that in this way and after introducing at least part of the flap (or triangular body) through the slot-hole, into the cavity, it folds or bends over itself, at least two parts of the flap (or triangular body) toward at least one of the faces adjacent to the flap or triangular body.
   The slot-hole, optionally, can be covered by means of a closing mode such as, for example, that of a **mobile gate,** in which it will also be able to open or close, alternatively, by means of a mode of displacement such as: turning over itself or moving up and down. This allows -once the closing grip meets the impact body- that almost the entire surface of the two faces of the flap (or triangular body) are pressed against each other, obtaining as a result the extraction towards the body or rest of the container, of the packaged contents (liquid / thick or/and air / gas) that is at that moment between the two faces of the flap or triangular body.
**A.1.2)** at least one mode of displacement of the flap (or triangular body) such as that of a stylet (or thrust body), which being narrower than the slot-hole and thus, able of being introduced into the cavity, will be able to also, at the same time, drag or introduce into the cavity at least part of the flap or triangular body; thereby generating a folding over itself of at least part of the flap or triangular body.
   The driving stylet (thrust body) can be fixed, either in the same impact body with or without slot-hole, or in the closing grip, with or without slot-hole.
**A.1.3)** at least one welding system unit (or heat source) or/and welding system and cauterization system (or cutting) which, being located inside the cavity and above or/and below at least one part of the two folded parts of the flap or triangular body, they will seal or/and seal and cauterize (or cut) at least once the generated edge or the area adjacent to the edge of the flap or triangular body, when operating and moving downwards or/and upwards.
**A.1.4)** optionally or in addition, at least one welding system unit located on at least one of the faces (which comes into contact with at least one of the faces of the flap or triangular body) of the impact body or/and closing grip and at the height desired {above or below (preferably, in the area of intersection between the flap and the body or rest of the container) of the height at which the slot-hole is}, so that in this way, at least one welding line is made previously (once the closing grip, when activated, comes into contact with the impact body and the flap/triangular body: crushing and trapping it).

Also, a way to optimize the procedure of folding or bending the flap/triangular body is when, prior to folding or bending, at least part of at least one welding line is made in the same line/area of intersection between the flap/triangular body and the body/rest of the container, or/and, above it: because it facilitates quickly and comfortably the folding or bending of the flap/triangular body, just above finishing any of these welding lines that are made before folding or bending the flap or triangular body.

In addition, this welding line can be made in different ways such as: rectilinear, semicircular (so that the initial container transformed has the shape of a cylinder) or diagonal.

### A.2- System or device, mainly, by means of at least one stylet (or thrust body) with which the flap (or triangular body) or strip is folded or bent at least once over itself, as well as, subsequently or/and previously: it seals and/or seals and cuts at least one, two or more times the flap (or triangular body) or strip per at least one face of at least part of the edge (generated by folding the flap over itself) or/and the area adjacent to this edge.

For this, the impact body (the one that generates the flap or triangular body) or/and the closing grip {the one that when activated, once the flap or triangular body has been generated, joins the impact body to trap and crush the flap or triangular body that is now located in the middle}, have the following devices:
**A.2.1)** at least one mode of displacement of the flap (or triangular body) such as, for example, that of a **stylet** (or thrust body), which will displace at least part of the flap (or triangular body) toward at least one of the faces adjacent to the flap (or triangular body) generated, in such a way that at least one folding or bending over itself of at least part of the flap or triangular body is generated.
   The stylet (or thrust body) can be fixed, on the one hand, to the impact body or/and the closing grip and, on the other hand, for example, it can be fixed both horizontally and diagonally so that when operating or moving, it will follow a straight or diagonal path.
**A.2.2)** at least one welding system unit or welding and cutting system (or cauterization), located on at least one face (which comes into contact with at least one of the faces of the flap or triangular body) of the impact body or/and closing grip and at the desired height, so that in this way it is carried out before or after the folding or bending of the flap (or triangular body): at least one welding line (once the closing grip, when activated, comes into contact with the impact body and the flap/triangular body crushing and trapping it) by at least one face of the flap (or triangular body) or/and by at least one of the faces of the flap (or triangular body) already folded at least once over itself. So it can be, for example, at the height of the generated edge or area adjacent thereto, or else more above or more below (preferably, at the intersection area of the flap and the body of the container). Also, a way of optimizing the procedure of folding or bending the flap/triangular body is when, prior to folding or bending, at least part of a welding line is made above the line of intersection of the flap and the body of the container, because it facilitates quickly and comfortably the folding or bending of the flap (or triangular body) just in the intersection area of the flap/triangular body and this welding line that is made before folding and bending the flap or triangular body over itself.
   In addition, any of these welding lines can be made in different ways, such as: rectilinear, semicircular (so that the initial container transformed has the shape of a cylinder), oblique or saw.
**A.3)** The flap/triangular body or strip can also be folded or bent to at least one side and folded or bent at least once over itself: by dividing into at least two (or at least three units or pieces when the impact body has a closing grip on two sides) pieces or units the impact body or/and the closing grip, in which at least one of the pieces or units at the top is mobile {activated by means of a mode, such as for example a linear cylinder or linear translation unit which can additionally be fixed to the side faces or base faces in which the flap or strip does not come into contact with them}, in such a way that at least one of these units will be able to move, for example, to the sides or up or down: destined, in a first instance, to fold or bend towards at least one side the flap/triangular body (or at least part of the flap/triangular body) or strip and, in a second instance, fold or bend at least once over itself the flap/triangular body (or at least part of the flap/triangular body) or strip (by means of a thrust mode such as for example a stylet, a rotating rod or guillotine (moving from top to bottom) fixed on at least one of the faces of the impact body or/and the closing grip}; as well as sealing {previously or/and subsequently to the folding or bending over itself of the flap (or at least part of the flap/triangular body) or strip} at least once with a welding line (which can be, for example: rectilinear, diagonal, oblique, semicircular concave/convex or in two or more directions) at least one part of the flap (or at least part of the flap/triangular body) or strip without folding or folded over itself.

Next, an execution mode of the Procedure or device in six steps:
- First, the impact body and the closing grip are going to come together (when at least one of them is activated, but especially the closing grip) in order to, on the one hand, block or trap especially at least part of two faces from the bottom of the flap/triangular body or strip and, on the other hand, optionally, seal at least once with a welding line (which can be, for example: rectilinear, diagonal, oblique, semicircular concave/convex, in saw or in two or more directions) {by means of a heat source such as a resistance or a strip that can be fixed both in the impact body and in the closing grip} in the intersection area of the flap/triangular body and the body of the container or area adjacent to the previous welding line.
- Second, when wanting to fold the flap or strip towards the outside face, the piece or unit of the top part of the closing grip will move out leaving a space between the two pieces above.
- Third, the piece or unit of the upper part of the impact body is going to move outwards to fold the flap or strip when pushing the desired part of these, and that, in this case, is going to be the intersection area {of the welding line made in the intersection area of the flap and the body of the container} and the rest of the flap or strip.
- Fourth, the piece or unit of the bottom part of the closing grip will return to the starting point, moving outwards, in order to free up space so that the flap or strip can be folded to the side face of the container, by means of a thrust mode such as a stylet, a rotating rod or guillotine (moving from top to bottom) installed or fixed on the underside face or side face of the piece or unit of the upper part of the impact body or also, as the case may be, in the closing grip.
- Fifth, the piece or unit of the bottom part of the closing grip is activated to seal at least once with a welding line (which can be, for example: rectilinear, diagonal, oblique, semicircular concave/convex, in saw or in two or more directions) the flap/triangular body (or at least part of the flap/triangular body) or strip (or in any other configuration) that is folded or bent over itself, for which the stylet or the rotating rod, in a synchronized manner, will be introduced into the impact body or return to the starting point to allow it to meet the lower part of the impact body. Also, the rotating rod, being able to have more width than the flap or strip folded over itself: it is not necessary for it to return to the starting point as it is not going to get in the way of the piece or unit from the lower part of the closing grip.

On the other hand, the unit of the upper part of the impact body can be kept protruding outwardly because it facilitates the fixing of the flap or strip folded at least once over itself.
- Sixth, both the piece or unit of the upper part of the impact body and the piece or unit of the lower part of the closing grip will return to the starting point.

### B- System or device to seal (by at least one of its faces) and cut (or cauterize) the flap or triangular body prior to it folding, bending or joining at least one part in at least one direction towards or over itself.

Next, I describe by means of an example a way to realize this system [B] with one of the most efficient ways to do it.

### System or device to seal (at least once on at least one face or side) and cut (or cauterize) two segments of triangular configuration on the left and right side of the flap/triangular body, which is also left without cutting/cauterizing at least part of the longitudinal area/strip of just half of the flap (or triangular body), in such a way that a strip is generated.

In this strip, on one of its faces, there is or runs a welding line that corresponds precisely with the top and bottom transverse welding lines that are made when the initial containers are made, for example, of the tube or pillow type.

Therefore, a welding line is going to be made that configures the following form:
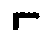 In the lower part, a line (rectilinear, oblique, diagonal, semicircular, etc.) transverse to the flap in the area of intersection between the flap/triangular body and the body/rest of the container.
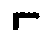 At the top, two welding lines (which can be, for example: rectilinear, diagonal, oblique, semicircular concave/convex, in saw, in two or more directions, etc.) vertical, parallel and separated between them {in the extend that frees, at least, just the welding line that runs to the longitudinal half and on one of the faces of the flap or triangular body} that converge and are joined to the transversal welding line forming a 90 degree angle.

To do this, the impact body (the one that generates the flap or triangular body) or/and the closing grip (which when activated, once the flap or triangular body has been generated, joins the impact body to trap and crush the flap or triangular body, which is now located in the middle), have the following devices:
**B.1.1)** at least one unit of a welding system or heat source, such as a resistor or by ultrasonics, to seal the flap or triangular body.
**B.1.2)** at least one unit of a cutting or cauterizing system such as a blade, for cutting two triangular segments of the flap or triangular body.
   - This welding or cutting line has a shape as described above in the second and third paragraphs of section **[B],** but it can also be done in different ways such as: rectilinear, semicircular (so that the initial container transformed has the shape of a cylinder), diagonal, etc.
   - Optionally, once this strip is obtained as a result of the sealing and cutting (or cauterizing) of the flap or triangular body, this can be manipulated in the same way as the flap or triangular body, as it is explained and described in each point of sections **[A1], [A.1.1], [A.1.2], [A.1.3], [A.1.4], [A2], [A.2.1]** and **[A.2.2].**

### C- The flap/triangular body or strip that is manipulated as set forth in any of the previous sections [A1], [A.1.1], [A.1.2], [A.1.3], [A.1.4], [A2], [A.2.1], [A.2.2], [B], [B.1] and [B.2], additionally and optionally, it will also be possible to manipulate the part of the flap (or triangular body) or strip that is loose {from the last welding line made to the flap/triangular body or strip to the peak or tip of the flap or strip, as it is not folded/bent or/and sealed together with at least one other part from the same flap or strip}, choosing from any of the following options:

**C.1)** the flap or loose strip is crushed on the body of the container (because it is already next to the body of the container) by means of a thrust mode; and at least part of this flap (or triangular body) or loose strip is glued to the body of the container, by means of an adhesion mode such as, for example, contact glue.
**C.2)** it is sealed, by means of a heat source such as a resistor or by ultrasonics, at least once in at least part of at least one of the faces.
**C.3)** it is sealed at least once on at least part of at least one of the faces of the flap (or triangular body) loose strip; the flap or loose strip is crushed on the body of the container (because it is already next to the body of the container) by means of a thrust mode, and this flap/triangular body or strip is glued to the body of the container, by means of an adhesion mode such as, for example, contact glue.
**C.4)** it is cut (cauterized), by means of a cutting mode such as that of a blade, totally or partially at least part of the flap or triangular body that is loose.
**C.5)** it is sealed, by means of a heat source such as that of a resistor or by ultrasonics, at least once by at least part of at least one of the faces; and it is cut (cauterized), by means of a cutting mode such as that of a blade, totally or partially at least part of the flap (or triangular body) or strip that is loose.
**C.6)** joining, by means of a folding or bending system, at least once to at least one direction of at least a part of the flap (or triangular body) or loose strip towards at least part of at least one other part of the same flap (or triangular body) or loose strip and, next, this flap (or triangular body) or loose strip that is folded or bent at least once over itself, will be manipulated by choosing between any of the options **[C.1], [C.2], [C.3], [C.4]** and **[C.5]** described above.

Optionally, a pre-step can be made in which this flap (or triangular body) or loose strip is sealed at least once by at least one face.

### - Other Procedures and Processes that complement the Procedure and machines of the invention

**A-** Procedure for transforming flexible initial sealed containers of at least two faces and containing in their interior at least a fluid and optionally or complementarily solid or solids, granulated or powdery, in three-dimensional containers: by means of pressing with a 45° inclination at least part of the end of a perimeter lateral side of the container.
   It is characterized by the fact that in the stage of pressing an initial container: a flap and a peak (or peak neck) is generated at the same time, which is subsequently transformed into a flap or triangular body, by means of the following steps:
   First step: pressing by using at least one impact body in the direction of the interior of the container with an inclination of approximately 45 degrees, or, first pressing in parallel and then pressing with an inclination of approximately 45 degrees on at least part of the total part of the left or right side of the same lateral side of the initial container, so that part of the fluid is displaced towards the contour of the container, increasing the pressure inside the container, as well as producing a local inflation effect, obtaining:
      at least one support face or additional face, and
      at least one flap or triangular body, and
      at least one peak (or a peak-shaped neck) on the opposite side of the same perimeter lateral side where the impact body has not impacted, which is formed by at least two faces of the container.
   Second step: pressing by using at least one double set of one or two grips or/and one or two impact bodies, towards the interior of the container, positioned facing each other and moving: on at least one part of the two perimeter lateral sides adjacent to the peak (or peak neck), so that part of the fluid is displaced towards the contour of the container, increasing the pressure inside the container, as well as producing a local inflation effect, obtaining:
      at least one support face or additional face, and
      one flap or triangular body.
**B-** Optional procedure and prior to the pressing stage in which at least one flap or triangular body is generated, characterized in that it comprises the displacement preferably of the solids (for example: lettuce, vegetables, cereals or nuts), granulated or powdery packed and located in the corners or areas adjacent to the vertices of an initial container: in the direction towards the interior, preferably towards the middle and the center of the initial container (such as square or rectangular of two sides, which has four vertices or corners), in order to free up from at least one solid or solids the area adjacent to the vertex or corner where it is going to generate, precisely, a flap or triangular body.

The procedure comprises two steps:
- pressing by using at least one impact body or grip {activated by means of a mechanical mode such as at least one linear or rotating cylinder} in the direction of the interior of the container with a preferably oblique path of 45 degrees (or approximately) from the end of the vertex to the middle and/or the center of the initial container [or in parallel (or approximately) in at least part of at least one peripheral lateral side adjacent to the vertex, preferably, the area closest to this vertex], so that the content packed inside, especially that which is located precisely in the area or the lateral sides adjacent to the vertex where a flap or triangular body is going to be generated, will be moved or introduced towards inside, preferably, towards the middle and center of the container, and
- next, at least this impact body or grip (or impact bodies or grips) that has been introduced into the container, returns or moves to the starting point of departure, to obtain a free area of mainly solids adjacent to the vertex or corner where the flap is going to be generated, in such a way that once it is deployed (or unrolled) and goes backwards [for example: when pressing the container or initial container with the clamping grips] the part of the wrapper that has been folded or introduced into the container, obtaining:
   an empty space in this area, in order, on the one hand, to facilitate that the flap forms well and, on the other hand, to allow the welding line (preferably, by the line of intersection between the flap and the rest of the container) of at least part of at least one of the faces of the flap or triangular body to be performed optimally, for example, by sealing complet ly through the ntire welding line without generating folds, fissures or pores, as well as without producing temperature alterations.

In addition, also the device that is going to introduce the vertex or the corner towards the inner enclosure of the container can be made by means of a set of at least two grips activated by means of a mechanical mode, such as for example a clamp cylinder or/and linear cylinders, in which in addition this set of two grips before and during the procedure (explained in two steps) of displacement or dragging of solids, they will exert the following function: grab and trap between the two grips at least part of the vertex or at least part of the lateral sides or sides adjacent to the vertex, obtaining:
- in the first step: an improvement in the folding of the vertex towards the interior and center of the container, by directing with more control and precision the orderly folding of the corresponding part of the wrapper of the container.
- in the second step: it allows to place again in the initial position the part of the wrapper and folded vertex because, during the whole procedure of the two steps, the set of two grips will not release the part of the vertex (or lateral sides adjacent to the vertex or corner) that holds gripped, so that when it returns backward {activated, for example, by mechanical means such as at least one linear or rotating cylinder} to the initial starting point or intermediate point (where the grips are separated or opened), it will drag back to the vertex, causing the initial container to recover the original shape of for example: an initial square or rectangular two-sided container.

### C- Procedure of transforming an initial container of at least two faces into a three-dimensional container, by means of creating a cavity in which the initial container adapts and engages, generating the flaps or triangular bodies, as well as the 3D shape of the initial container.

First Stage:
   the initial container is introduced or will be placed between sets of grips or impact bodies, so that, when activated, they will form a cubic or three-dimensional cavity on at least three sides and, at the same time, blocking and pressing the perimeter lateral sides of the initial container this, in an inductive and spontaneous way, will acquire the three-dimensional shape by adapting and coupling to the created cavity {cubic or three-dimensional} whose formation has been desired, as well as one, two, three, four or more flaps or triangular bodies.
Second Stage: next, by means of a displacement mode such as, for example, at least one linear or rotating cylinder, at least one impact body will be activated in order to hit at least one of the faces where at least one flap or triangular body has been generated, so that in this way, first, the triangular bodies/flaps are better formed and, secondly, it also serves as a support and part of a two-part set consisting of an impact body and a closing grip with which to manipulate the flap or triangular body, choosing between any of the following options:
   Optionally, sealing {by means of a heat source mode such as for example a resistor or by ultrasonics} at least once per at least one side of the flap/triangular body; folding or bending the flap/triangular body at least once per at least one face at least part of at least two parts of the flap or triangular body and, finally, resealing at least once per at least one face at least part of the generated edge {when folding the flap/triangular body over itself} or/and at least once per at least one face of at least part of the adjacent and separated area to the edge. Also, the loose flap or triangular body, by means of a sealing system {by means of a heat source such as a resistor or by ultrasonics} and/or cutting {by means of a cutting system such as a blade}, it will be able to be manipulated between the following options: crushing and gluing/adhering to the body of the container; sealing, crushing and gluing/adhering to the body of the container; only sealing; only cutting or sealing or cutting.

### D- Procedure to transform an initial container or flexible bag of at least two faces and sealed with fluid (liquid and/or air/gas) and with solids in its interior: into a container with a three-dimensional geometric body shape such as a cube, rectangular prism, cylinder, elliptical cylinder or irregular polyhedron.

In this procedure, in order for these flaps to be generated and that at the same time the initial container that has fluids with solids in its interior acquires the pretended three-dimensional geometric body shape, the initial container will be placed, preferably, in q vertical position so that the solids fall down and thus leave a solid / granular / powder free zone in the part, at least, above the container or adjacent area of at least one of the perimeter lateral sides of the uppermost part of the container.

The procedure comprises the following steps:
First: by means of at least one grip or a set of two or more clamping grips, the initial container is grasped or/and locked by any of the zones or parts thereof, with the exception of the adjacent zone of at least one of the perimeter lateral sides of the upper part of the container in which at least one flap or triangular body will originate. At the same time that the initial container is held or/and locked, optionally, a constant pressure force can be maintained therein and with adjustable cushioning towards the interior of the same initial container by at least one or more of its sides, in order to insufflate at least the packaged fluid inside the container towards the outer contour of the container or towards at least one of the perimeter lateral sides that is located in the upper part of the container.
   It can also be used, in a supplementary and optional way, at least one grip or a set of two or more pusher grips and which, depending on the case, can fulfill at least one more of the following functions:
   - facilitate or ensure that the container is placed in a specific place and can move it.
   - make the container stay or stand upright, before and/or during the transformation of the container into 3D.
   - insufflating at least the packaged fluid inside the container towards the outer contour of the container or towards at least one of the perimeter lateral sides that is located in the upper part.

   At least one pusher grip or/and at least one set of two or more pusher grips may be, for example, fixed to:
   - the clamping grips, on the outer side and both on top or/and below or also on any of their faces. These, in turn, may or may not be adjustable in intensity, and be rolled back or not by means of a mode.
   - at least one column or any other support mode.
   - to the rod of a linear cylinder or of a single-rod rotation cylinder, or to the rods of a linear clamp cylinder or rotating cylinder.
   - to no cylinder that activated them, as they are fixed or immobile.
Second: on at least one perimeter side of the uppermost part of the initial container, at least one flap/triangular body will be generated (or at least part of at least one flap or triangular body) by means of at least one impact body as well as, at the same time, at least one flat surface or supporting face is generated and, likewise, the initial container will suffer (the corresponding part) a transformation of its volumetry into a three-dimensional geometric body shape, when an effect of inflation of the container occurs.
Third: at least one of the flaps or triangular bodies will be manipulated, being able to choose, for example, from among the options of sections [A], [B] or [C].
   In any of these options, it will allow the container to permanently maintain the corresponding shape of a three-dimensional geometric body.
Fourth: followed immediately, by means of a way to flip the container that is in vertical position, it will turn this container 180 degrees (or approximately) over itself so that, in this way, on the one hand, the solids packed inside the container will fall downwards by the gravitational effect {thus releasing the area where at least one flap (or triangular body) is to be generated and manipulated on at least one other perimeter side of the container} and, on the other hand, positioning at least one of the perimeter lateral sides (previously located in the lower part of the container) towards the uppermost part of the container.
   This rotation can be done in two different ways:
   a) at least one or two flaps (sealed or unsealed) that are first generated, are trapped between the sealing, cutting, clamping and folding/bending grips of the flap over itself, so that in this way and by not cutting the flap or triangular body: these grips or sets of grips can rotate 180° (or approximately) to the container. In this way, the lateral side that was previously positioned in the base or bottom of the container, will now be placed or positioned in the upper part so that the flaps/triangular bodies can be generated and manipulated (or at least part of at least one flap or triangular body).
   b) it is the same process explained in section (a), but with the exception that the container will rotate it by 180° (or approximately) only the clamping grips, so that the flaps will not be trapped between the grips and where, in addition, only one set of grips or impact and sealing grips or sealing and cutting grips are needed on the machine. The machine is one story.
- Fifth: Finally, steps one, two, three and four are going to be followed again.

### ADVANTAGES OF THE INVENTION

### 1.1 Economic Advantages

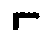 For the fact of not having to install a system for cutting flaps (or triangular bodies) such as a blade.
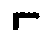 For the fact of not having to set up the machine to ensure that the flaps (or triangular bodies) that have been cut are not deposited in the 3D transformer of initial containers of at least two faces. 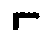 For the fact of not having to have a worker and container to collect the flaps (or triangular bodies) that have been cut or cauterized.
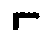 For the fact that there is no need of any adherent such as for example: contact glue, glue or a piece of sticky tape in order to adhere the flap (or triangular body) to the body of the container.

### 1.2 Hygienic-Sanitary Advantages

For the fact of preventing cross contamination of food, because the flaps/triangular bodies or the area that delimits the contour of the strip is not going to be cut, causing no pores or leaks to be generated by the cutting line of the entire flap/triangular body, thus avoiding packaged food inside the containers to come in contact with other elements such as air or humidity.

### 1.3 Environmental Advantage

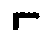 It is not necessary to use adhesives or contact glues such as glue or a piece of sticky tape in order to keep the flap (or triangular body) or strip folded or next to the body of the container.
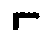 Less garbage units are generated and both recycling and garbage collection are simplified, as there is no need to cut one, two, three, four or more flaps or triangular bodies for each container.
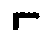 Since it is possible to manufacture reliable three-dimensional flexible containers without pores or leaks such as a cube, rectangular prism, cylinder, rhomboid or trapezoidal pyramid, this eliminates the need to use cardboard sheets, thus favoring energy savings on fossil fuels {not having to cut trees, extract pulp or distribute it by road transport}; as well as encouraging the use of elaborated biological plastic materials, for example, from the peeling of potatoes or from olive bones, being able to assume the increase of the price of these biological plastics with the saving in cardboard sheets.

### 1.4 Product Advantages

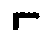 The folding or bending and subsequent sealing system (so that it remains folded or bent over time) of the flap/triangular body, as well as the sealing and cutting of the flap/triangular body to obtain a strip or/and subsequent folding or bending and sealing thereof: guarantees to 100% in both cases, the useful life of the container {since its transformation into 3D, later opening and consumption of the packaged product}: the non-deformation and non-alteration of its three-dimensional configuration, keeping all its visual and commercial aesthetics.
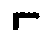 Not as is the case, for example, with flexible containers in which the flaps or triangular bodies, in some cases, have been sealed and cut, or, in other cases, have been adhered (for example, with contact glue) to the body of the container: due to the fact that this system bulges the containers and also because the base face is not kept flat, as well as the fact that also in a percentage of approximately 10% the flaps/triangular bodies are detached of the container by the pressure exerted by the fluid packed inside the container.

### 1.5 Production Advantages

By ensuring that in the Production Plant none of the initial containers transformed into 3D are defective, due to three reasons:
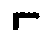 By avoiding the problem when during sealing and cutting the flap (or triangular body) a piece or section of a solid packed in the interior, for example, lettuce, chips or cereals stays right in between the two faces of the flap, specifically, in the area where it is going to be sealed. Therefore, the problem is solved by folding the flap at least once over itself and sealing it, since this avoids having to cut the flap/triangular body and because it also allows to make a welding with lower temperature and time.
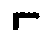 By avoiding the use of a blade, a more compatible and safe machine is achieved by reducing the risk of accidents, as well as reducing noise pollution.
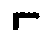 By preventing pores or cracks from arising (where the fluid may escape or exit) through the sealing line made at the intersection between the flap/triangular body, the strip and the rest of the container, as it allows the sealing of this intersection line: with less intensity in terms of temperature and, also, less time.
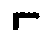 By eliminating the need to cut/cauterize the flaps or triangular bodies.

### 1.6 Advantage of Opening the container

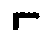 For the fact that any of the containers of the invention can easily and conveniently be opened without the need for scissors, but especially it is based on the fact that the flap/triangular body or strip folded/bent at least once over itself and sealed at least once by the edge (generated by folding or bending the flap at least once over itself) can be torn or detached by pulling them, tearing precisely by this sealed edge.
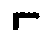 Using the folding or bending system of the flap or triangular body also facilitates the opening just by the sealing line that is made in the line or area of intersection between the flap and the body/rest of the container, since it allows that this welding line can be made with lower temperature intensity and shorter sealing time, so there is less adhesion or gluing of the sealed plastics: thus facilitating the opening by this sealing line.
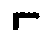 The opening of the strip {generated when sealing and cutting the flap or triangular body}, is also very easy and comfortable: because you only have to grab and stretch outwards at least part of the two faces adjacent to the strip, so as to make the container open by the welding line that is around the strip and

### 1.7 Advantage in container stability

The container is more stable because the support face is wider and more consistent, as more support surface is generated in the base because part of the flap (or triangular body), folded/bent at least once over itself, remains flat and in extension, as a wing, of the side face of the container and that, depending on the case, may have smaller or larger surface area and less or greater rigidity, depending on the number and width of the welding lines available to each wing.

### 1.8 Marketing Advantage

Innovative designs that can break into the market very successfully for their simplicity, efficiency, design and ease of consumption.

### EXHIBITION OF A MODE FOR CARRYING OUT THE INVENTION

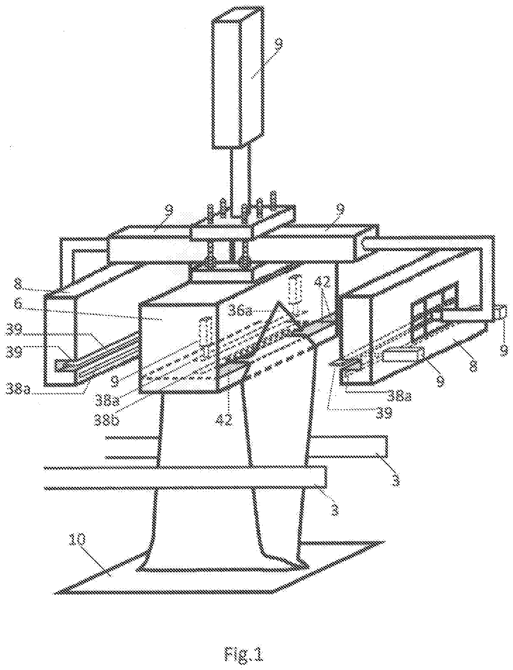

**Fig1****:** shows a detailed view of the elevation of part of the components of a vertical machine that transforms flexible initial containers into 3D containers, where the devices to seal (optional), fold/bend the flap at least once over itself in two parts and, subsequently, seal the folded or bent flap can be appreciated.

The initial container (manufactured by a vertical or horizontal machine for filling liquids or solids, available in the markets for more than 20 years), which in this case is square, double-sided and also inside it has been packed at least a fluid and optionally with solids or without them, is located -in this case- between the clamping grips (3) {activated by means of a drive mode such as for example the clamp cylinder or linear or rotating cylinder} that are grabbing and pressing it (not necessarily) to facilitate the formation of the flap. In the upper part of the initial container there is a triple set {an impact body (6) in the center, and a closing grip (8) to the left and right} of manipulation of the flaps or triangular bodies, where the impact body (6) which is activated has hit downwards and towards the inside of the perimeter lateral side of the upper part of the initial container generating two flaps (36a) or triangular bodies (36a) located next to the lateral faces of the impact body.

The side faces of the impact body (6) {in this case is immobile because the initial container is the one that hits or collides against the impact body, in order to generate the flaps. If, on the contrary, it is mobile, it will be activated by means of a mode such as, for example, a linear cylinder (9) or a rotating cylinder}, in this case, they have a cavity (42b) and two welding systems (or sources of heat) fixed inside the impact body (6), which are located above and below (although it could be, for example, only below or also only above) of two parts of the folded flap and, in addition, each of these are activated -in this case- by means of two linear cylinders (9) in vertical position.

The two closing grips (8) have, on the one hand, a stylet (46a) {activated, in this case, by two linear cylinders (9)} located in an interior cavity of the side face that precisely makes contact with the flap (36a) when the closing grip (8) is activated and, on the other hand, optionally, has two welding systems (38ae) (or heat source) fixed above and below the stylet (46a) with which the flap will be sealed, in this case, transversely with a rectilinear welding line. Also, the heat source system at the bottom, which is optional, is arranged at that particular height so that the intersection area between the flap and the rest of the container is sealed, in order to give consistency and rigidity to the container; and, additionally, the heat source system of the upper part, which is optional, is arranged at that particular height, for two reasons: First, to give consistency and rigidity to the folding or bending of the flap and, secondly, so that this welding line (38ae), once the flap is folded, coincides just next to the generated edge, so that later on when the edge is sealed the flap can easily be torn.

The stylet (46a), when activated and advancing forward, with the closing grip (8) {in this case, activated by a linear cylinder (9)} next to the impact body (6), will introduce at least part of the flap/triangular body inside the cavity (42b) of the impact body (6), resulting in the folding or bending of the flap/triangular body into two parts.

In the lower part of the drawing, there is a hatch (10) holding the initial two-sided, square flexible container, in which this can be static (if only one or two flaps/triangular bodies are to be generated in the initial container or, on the contrary, the initial container is rotated 180 degrees so that also one or two flaps are generated on the perimeter lateral side of the bottom part) or mobile activated by at least one displacement mode such as for example a linear (9) or rotating cylinder.

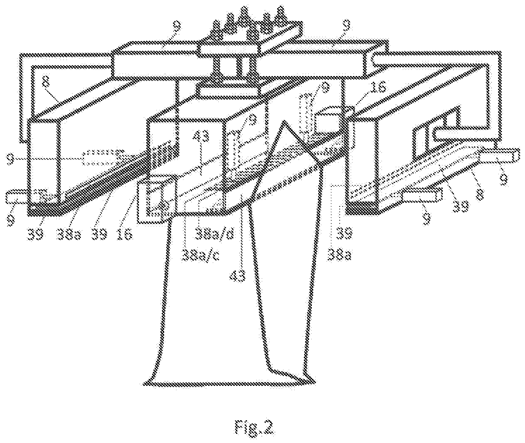

**Fig2****:** shows the same detailed view of the elevation of figure 1, but in this case the impact body (6) and the closing grip (8) have been modified, because it illustrates another system for sealing (optional), folding or bending the flap over itself at least once in two parts and, subsequently, sealing at least once the flap folded or bent.

In addition, also the impact body (6) of the triple set of grips (6, 8) is immobile because it is not fixed to the rod, for example, of a linear or rotating cylinder that activates it. For this reason, in this case, a means -either manually or otherwise using automated mechanical means such as a robot claw- has been used in order to activate or to reach the perimeter lateral side of the initial container towards/to the impact body (6).

Next, I describe only the differences in the operation and the different elements, devices and parts with respect to the machine of the invention exposed in figure 1, 2 and 3:
The side faces of the impact body (6) -although they can also be fixed in the closing grip (8)-have, in this case, a gate (43b) activated by a rotating cylinder (16) so that it can turn 90 degrees inwards), and also have two welding systems (or heat sources) fixed in the upper part inside the impact body (6), which are located on top (although it could be, for example, only down, or up and down) of the two parts of the folded flap and, in addition, each of these are activated -in this case-by means of two linear cylinders (9) in vertical position.

The two closing grips (8) have, on the one hand, a stylet (46a) {activated, in this case, by two linear cylinders (9)} located in the interior cavity of the side face which, precisely, makes contact with the flap when the closing grip is activated (8) and, on the other hand, optionally, has a welding system (38ae) (or heat source) fixed above the stylet (46a) with which the flap is to be sealed, in this case, transversally with a rectilinear welding line. In addition, this heat source system, which is optional, has been arranged at that specific height for two reasons: First, to give consistency and rigidity to the folding or bending of the flap and, second, so that this welding line (38ae), once the flap is folded, coincides just next to the generated edge, so that, later, after the edge is sealed, the flap can be torn easily.

The operation of the impact body (6) and the closing grips (8), is as follows:
Once the flap or triangular body is generated, the closing grip (8) is activated by crushing the flap to thereby expel the packaged content inside the two faces of the flap and, on the other hand, to seal the flap.

Next, simultaneously or before the stylet (46a) is activated: the gate (43b), in order to open a hole, will rotate 90 degrees inwards into the impact body (6), and the stylet (46a) will advance horizontally forward to thus enter the interior of the impact body (6) and, at the same time, also introduce at least part of the flap in order to fold or bend the flap in two parts over itself.

Immediately after, the stylet (46a) returns to the starting point and, next, the welding system is activated which, in this case, has two differentiated heat sources (39ac, 39ad): in order to seal the generated edge when bending or folding the flap over itself and, also, the area adjacent and parallel to this edge; both welding lines (which can be, for example: rectilinear, diagonal, oblique, semicircular concave/convex, two or more directions, etc.) are separated by the desired distance in millimeters.

Finally, both the welding system (39ac, 39ad) and the closing grip (8) [although the latter can also do so when the stylet (46a) returns to the starting point] will return to the starting point, releasing the container already transformed into 3D.

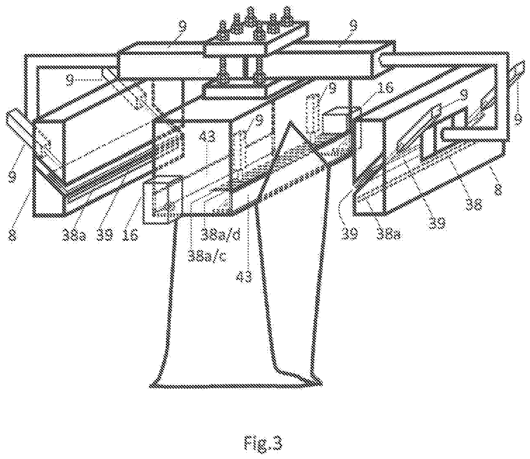

**Fig3****:** shows the same detailed view of the elevation of figure 2, but in this case only the stylet (46a) has been modified, since it is arranged and fixed to the closing grip (8) in a diagonal position. Therefore, it has the same operation and the same elements, devices and parts as the vertical machine that transforms initial containers into 3D or three-dimensional containers.

The stylet (46) diagonally has been designed in this way to optionally enable or fix one more welding system: just in the lower part of the closing grip (8) with which to seal a welding line (38a) in the area or line of intersection between the flap and the container body. Thus, in order to be able to make at least two welding lines (38a, 38ae) prior to bending or folding the flap, which can be, for example: rectilinear, diagonal, oblique/semicircular concave/convex, etc.).

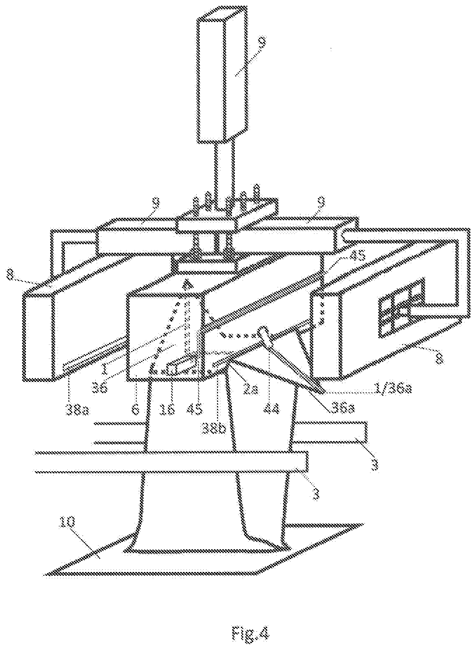

**Fig4****:** shows the same detailed view of the elevation of figure 1, 2, and 3 but in this case the impact body (6) and the closing grip (8) have been modified, because it illustrates another system for sealing (optional), folding or bending the flap over itself at least once in two parts and, subsequently, sealing the folded flap at least once.

Next, I describe only the differences in the operation and the different elements, devices and parts with respect to the machine of the invention exposed in figure 1, 2 and 3.

The side faces of the impact body (6) -although they can also be fixed in the closing grip (8)-, in order to fold or bend the flap over itself, in this case, have at least one inclined stylet (44) or/and a rotating rod (45) {both can be activated by means of a mode such as a linear cylinder (9) or a rotating cylinder (1)}, and can also optionally have at least one welding system (38bc) (or heat sources) set to the precise height as desired to be able to seal choosing between the following options: the area of intersection between the flap and the body of the container, or/and (the edge generated when folding or bending the flap, or/and, at least once, the area or line adjacent to the edge and, preferably, in parallel).

The closing grips (8), optionally, can also have fixed at least one welding system (38a) (or heat sources) with the same characteristics as those described in the previous paragraph.

Also, this welding system/heat source, which is optional, has been set at that specific height for two reasons: First, to give consistency and rigidity to the folding or bending of the flap and, second, so that this welding line (38ae), once the flap is folded, coincides right next to the generated edge, so that later on when the edge is sealed the flap can easily be torn.

The operation of the impact body (6) and the closing grips (8), is as follows:
Once the flap or triangular body is generated, the closing grip (8) is activated by crushing the flap to thereby expel the packaged content inside the two faces of the flap and, on the other hand, to seal the flap.

Next, simultaneously or before the stylet (46a) is activated, the gate (43b), in order to open a hole, will rotate 90 degrees inwards into the impact body (6), and the stylet (46a) will advance horizontally forward to thus enter the interior of the impact body (6) and, at the same time, also introduce at least part of the flap in order to fold or bend the flap in two parts over itself.

Immediately after, the stylet (46a) returns to the starting point and, next, the welding system is activated which, in this case, has two differentiated heat sources (39ac, 39ad): in order to seal the generated edge when bending or folding the flap over itself and, also, the area adjacent and parallel to this edge; both welding lines (which can be, for example: rectilinear, diagonal, oblique, semicircular concave/convex, two or more directions, etc.) are separated by the desired distance in millimeters.

Finally, both the welding system (39ac, 39ad) and the closing grip (8) [although the latter can also do so when the stylet (46a) returns to the starting point] will return to the starting point, releasing the container already transformed into 3D.

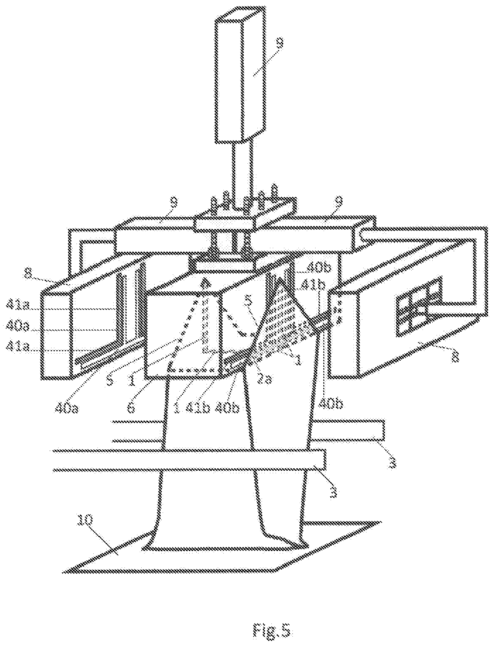

**Fig5**: shows the same detailed view of the elevation of figure 1, 2, 3 and 4 but in this case the impact body (6) and the closing grip (8) have been modified, because it illustrates another system of manipulation of the flap or triangular body, in which by means of sealing (optional), folding or bending the flap over itself at least once in two parts and, subsequently, sealing the folded flap at least once.

Next, I describe only the differences in the operation and the different elements, devices and parts with respect to the machine of the invention exposed in figure 1, 2 and 3.

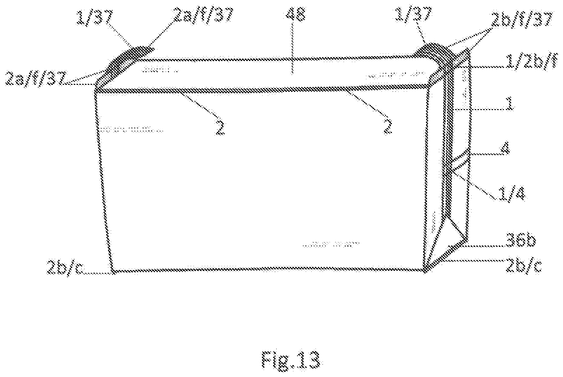

In this case, only one triple set of grips (6, 8) is shown: where {by hitting or colliding one of the lateral sides of the initial container against/on the lower face of the impact body (6)} two flaps/triangular bodies have been generated on the left and right face of the impact body (6). On the other hand, in this particular case, there is a device fixed on the right side faces of both the impact body (6) and the closing grip (8) on the left, in order to obtain a strip (37fig13) from each flap, by means of a sealing system {in this case, a resistor (40a, 40b)} and by means of a cutting system {in this case, a blade (41a, 41b).

This device, in this case, has the shape of a transverse rectilinear welding line (which can be, for example: rectilinear, diagonal, oblique, two or more directions, semicircular concave/convex, etc.) in the area of intersection between the flap and container body and two vertical rectilinear welding lines (which can be, for example: rectilinear, diagonal, oblique, semicircular concave/convex, two or more directions, etc.), parallel and separated from each other {to the extent that at least the welding line (1) flowing through the longitudinal half of the face of each flap that is making contact with the side faces of the impact body (6) is released} converging and being joined to the transverse welding line forming a 90 degree angle.

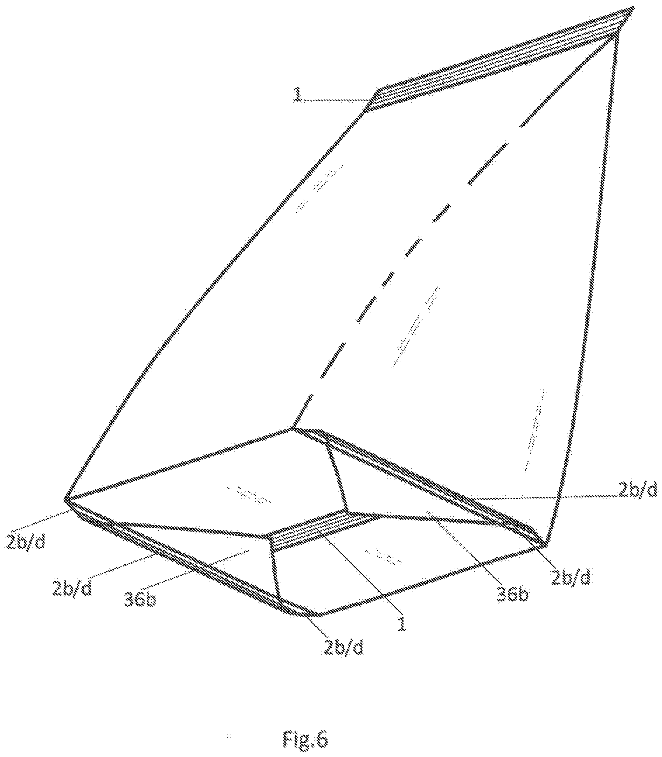

**Fig6****:** shows a view from the base face of the elevation of a flexible container in the shape of a basket, in a vertical position. In addition, it has a rectangular base face.

The container may have been generated, for example, by another procedure or machine not of the invention that has or has acquired any of the devices of the invention in order to seal, fold over itself and seal the flap/triangular body or, on the contrary, the initial container used to be transformed into 3D, has the shape of a rectangle and, in this case, is of the tube type with two welding lines at the top (1) and below (1), and in addition has been generated only two flaps (or triangular bodies) on one of the perimeter lateral sides of shorter length.
- On the left and right side of the underside of the basket container, the flap (or triangular body) has been folded (over itself) towards the bottom face (36b) and, subsequently, the area or parallel and adjacent line has been sealed (separated, in this case, about two millimeters) to the edge (d) {generated when bending or folding the flap over itself} with a rectilinear welding line (2b) [made by the impact body (6)].
- In the top of the container no flaps have been generated, so there is only the welding line (1) where the container will be opened.

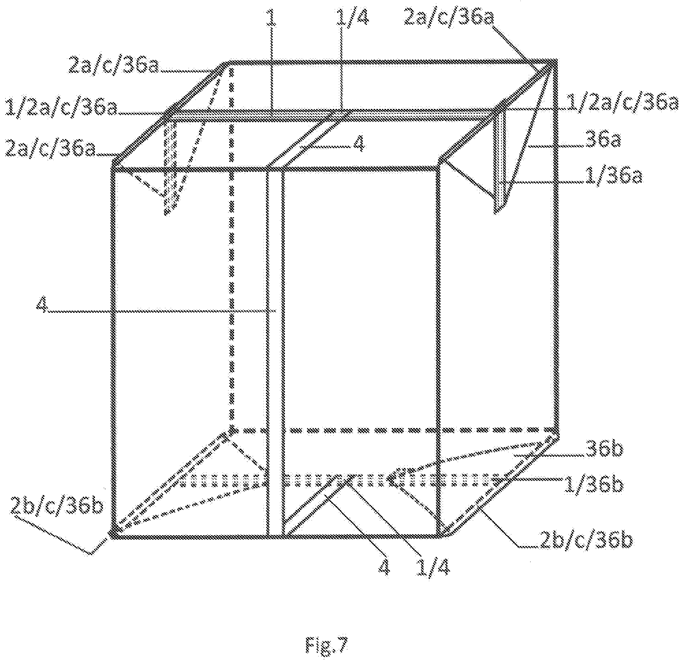

**Fig7****:** shows a view of the elevation of a flexible cube-shaped container.

The initial container used to be transformed into 3D has a square shape and, in this case, is of the pillow type with three welding lines: two parallel {the one above (1) and the one below (1)} and one longitudinal and perpendicular (4) to the previous ones {in the middle of the front face or the rear face}. In addition, four flaps have been generated: two flaps on two of the perimeter lateral sides of shorter length.
- On the left and right side of the top face of the cube-shaped container, the flap (or triangular body) has been bent (over itself) towards the side face (36a) and, subsequently, the edge has been sealed (c) {generated when bending or folding the flap over itself} with a rectilinear welding line (2a) [made by the closing grip (8)].
- On the left and right side of the bottom face of this cube-shaped container, the flap (or triangular body) has been bent (over itself) towards the bottom face (36b) and, subsequently, the edge has been sealed (c) {generated when bending or folding the flap over itself} with a rectilinear welding line (2b) [made by the impact body (6)].

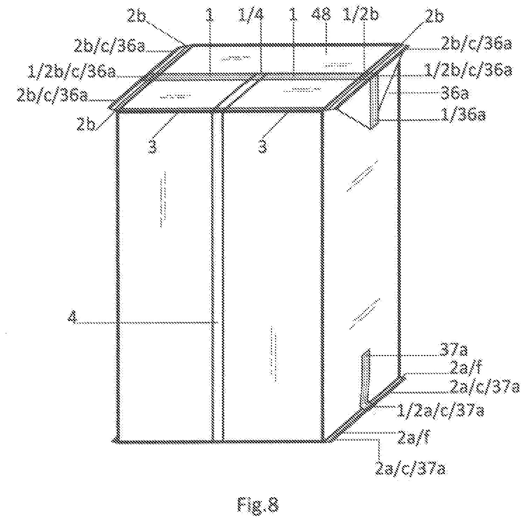

**Fig8****:** shows a view of the elevation of a flexible container in the shape of a rectangular Prism, in a vertical position.

The initial container used to be transformed into 3D has a rectangular shape and, in this case, is of the pillow type (for example: containers containing chips) with three welding lines: two parallel {the one above (1) and the one below (1)} and one longitudinal and perpendicular (4) to the previous ones (in the middle of the front face or the rear face}. In addition, four flaps have been generated: two flaps on two of the perimeter lateral sides of shorter length.
- On the left and right side of the top face of the rectangular Prism container, the following steps have been taken: first, the flap/triangular body (36a) has been sealed with a welding line (2b) [made by the impact body (6), having a welding system fixed on its side face] in the area of intersection between the flap and the body of the container; second, this sealed flap (2b) has been folded (over itself) towards the lateral face, just by a parallel line and separated about 7 millimeters from the welding line (2b); third, the edge (c) {generated when bending or folding the flap over itself} has been sealed with a rectilinear welding line (2b) [made by the impact body (6)].
- On the left and right side of the underside of this rectangular Prism container, a strip (37a) has been generated from sealing (2af) a flap (on each side) and, subsequently, each of these strips (37) has been folded (over itself) towards the side face (37a) and, next, the edge has been sealed (2ac) {generated when bending or folding the flap over itself} with a rectilinear welding line (2a) [made by the closing grip (8)].
- On the top face, a cover (48) is generated, after tearing the flap along the edge, when the container is opened by the following welding lines (which can be, for example: rectilinear, diagonal, oblique, semicircular concave/convex, two or more directions, etc.), on the left and right side two perpendiculars (2) {in the area of intersection between the flap and the body of the container} and one of edge (3).

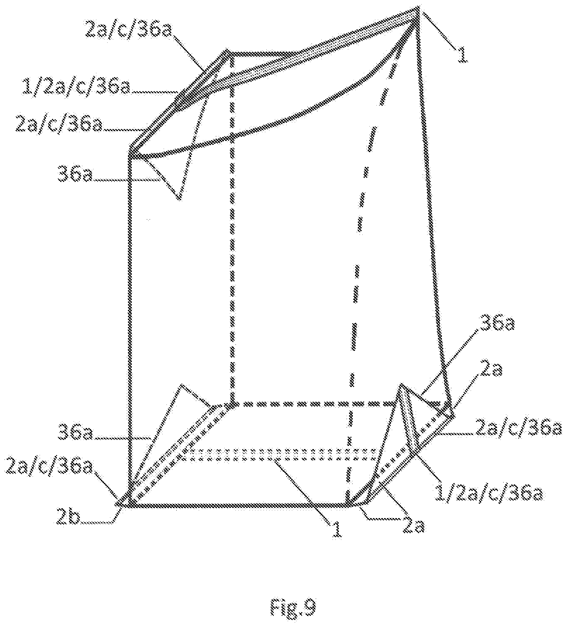

**Fig9****:** shows a view of the elevation of a flexible container in a shape similar to a Jug, in a vertical position.

The container may have been generated by another procedure or machine not of the invention or, on the contrary, may have been generated by a procedure of the invention, in which the initial container used to be transformed into 3D, has a rectangular shape and, in this case, it is of the tube type with two welding lines above (1) and below (1). In addition, three flaps or triangular bodies have been generated: two flaps on the perimeter lateral side of shorter length of the lower part, and one flap on the lateral side of shorter length of the upper part.
- On the left side of the top face of this Jug container, the flap (or triangular body) has been folded or bent at least once over itself (at the desired height) towards the side face (36a) and, subsequently, the vertex (c) {generated when bending or folding the flap over itself} has been sealed with a rectilinear welding line (2a) [made by the closing grip (8)].
- On the left and right side of the underside of this Jar container, a flap (36) has been generated, which has been sealed -prior to being folded or bent at least once over itself-with a welding line (2a) [made by the closing grip (8), having a welding system fixed on its side face] in the area of intersection between the flap and the body of the container; next, this sealed flap (2a) has been folded or bent at least once over itself, towards the side face of the container, just in the line of intersection between the welding line (2a) and the rest of the flap or triangular body and, finally, the edge (c) {generated when bending or folding the flap over itself} has been sealed with a rectilinear welding line (2a) [made by the closing grip (8)].

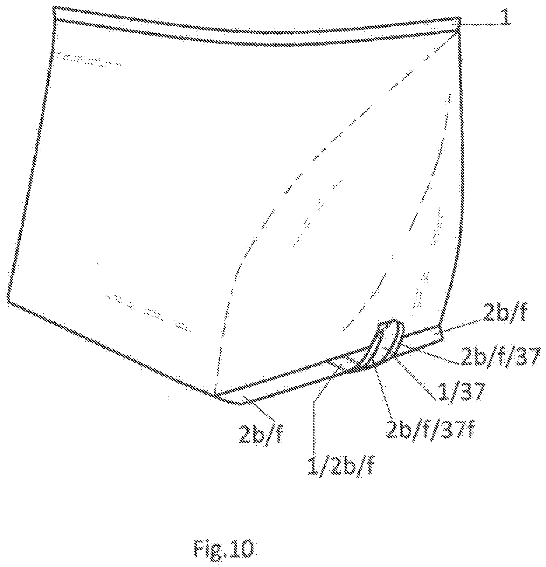

**Fig10****:** shows a view of the elevation of a flexible container with a shape similar to a Basket, in a horizontal position.

The initial container used to be transformed into 3D has rectangular shape in a horizontal position and, in this case, is of the tube type with two welding lines above (1) and below (1), and it has been generated only two flaps or triangular bodies on one of the perimeter lateral sides of longer length. Subsequently, two segments of triangular configuration to the left and right have been sealed and cut to each flap, as well as being sealed (2b/f) with a rectilinear welding line (2) in the area of intersection between the flap and the body of the container: obtaining as a result a Strip (37) which, in this case, is arched because the strip has also been sealed (the whole, 3/4 of it or with at least one or two welding lines (they can be, for example: rectilinear, diagonal, semicircular concave/convex, two or more directions, etc.) separated from each other between the two welding lines that flank it on both sides and by at least one face before or after being generated. If it is not sealed, precisely this area remains rectilinear.

Therefore, on the left and right side of the underside of this Basket container, a strip (37) has been generated on each side from a flap.
- In the top of the Basket container, a welding line has been made, precisely where the container will be opened.

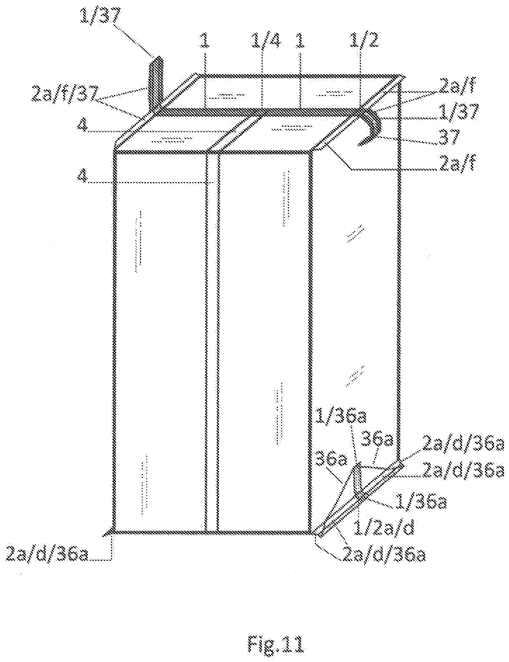

**Fig11****:** shows a view of the elevation of a flexible container in the shape of a rectangular Prism, in a vertical position.

The initial container used to be transformed into 3D has a rectangular shape in a vertical position and, in this case, is of the pillow type with three welding lines: two parallel {the one above (1) and the one below (1)} and one longitudinal and perpendicular (4) to the previous ones {in the middle of the front face or the rear face}.

In addition, four flaps have been generated: two flaps/triangular bodies on the perimeter lateral side of shorter length of the bottom, and two other flaps on the perimeter lateral side of shorter length of the top and which, subsequently, have been transformed into Strips (37) by sealing (2af) the flap or triangular body.
- The strip (37a) from above to the right, in this case, is arched because the strip has also been sealed (the whole, 3/4 of it or with at least one or two welding lines separated from each other) between the two welding lines (which can be, for example: rectilinear, diagonal, semicircular concave/convex, two or more directions, etc.) that flank it on both sides and by at least one side and, on the left, it is in a rectilinear position because it has only been sealed in the flanked area (2a/f) around the strip (37) and not inside; in addition, it also carries the welding line at the intersection of the flap/triangular body (36) and the body of the container (2a).
- On the left and right side of the underside of this rectangular Prism container, the flap (or triangular body) has been folded (or bent at least once over itself) towards the side face (36a) of the container and, subsequently, the parallel and adjacent area has been sealed (separated, in this case, by about 4 millimeters to the edge (d) {generated when bending or folding the flap over itself} with a rectilinear welding line (2a/d)) [made by the closing grip (8)].
- On the top side, the container is opened by any of the two {(2a/37a), where the packaged product of the interior will be served.

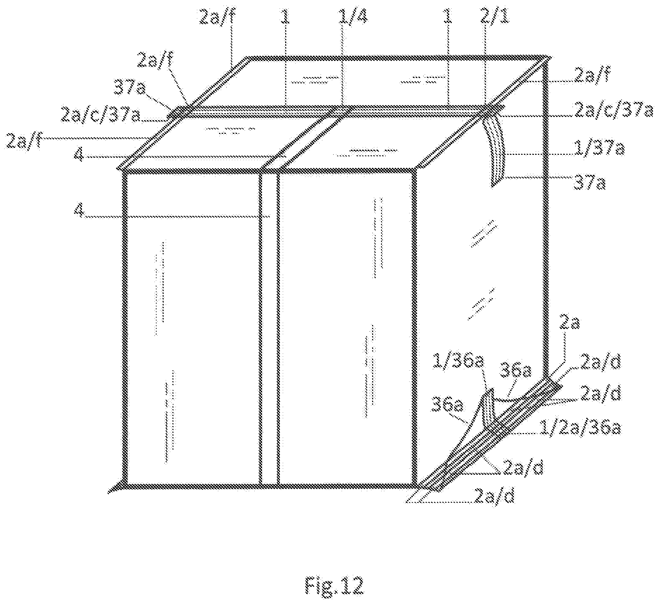

**Fig12****:** shows a view of the elevation of a flexible cube-shaped container.

The initial container used to be transformed into 3D has a square shape and, in this case, is of the pillow type with three welding lines: two parallel {the one above (1) and the one below (1)} and one longitudinal and perpendicular (4) to the previous ones {in the middle of the front face or the rear face}. In addition, four flaps or triangular bodies have been generated to the initial container: two flaps/triangular bodies on one of the perimeter lateral sides and two more flaps on the perimeter lateral side parallel to the anterior perimeter lateral side.
- On the left and right side of the top face of this cube-shaped container, a strip (37a) has been generated by sealing (2af) a flap or triangular body (on each side) and, subsequently, each of these strips (37) has been folded (over itself) towards the side face (37a) and, next, the edge has been sealed (c) {generated when bending or folding the flap or triangular body over itself} with a rectilinear welding line (2a) [made by the closing grip (8)].
- On the left and right side of the top face of the cube-shaped container, the flap or triangular body (36) has been folded (over itself) towards the side face (a) and, subsequently, it has been sealed with two rectilinear welding lines (2a/d) (which can be, for example: diagonal, semicircular concave/convex, two or more directions, etc.) [made by the closing grip (8)] and parallel (separated between them, in this case, about four millimeters), which, in turn, are parallel and contiguous (d) (separated, in this case, by about three millimeters) to the edge generated by bending or folding the flap or triangular body over itself.
- On the top side, the container is opened by either of the two welding lines (2af / 37a), so that the product packaged inside can be served. Optionally, prior to the opening of this welding line (2af / 37a), the strip (37a) can be torn at the edge (2ac) to facilitate, later on, the opening of the container by the welding line (2af) of the intersection area of the flap / triangular body and the body of the container.

Fig 13: presents the elevation of a flexible container in the shape of a rectangular Prism, in a horizontal position.

The initial container that will be transformed into 3D, has a rectangular shape in horizontal and, in this case, is of the pillow type with three welding lines: two parallel (the top one (1) and the bottom one (1)} and one longitudinal and perpendicular (4) to the previous ones {in the middle of the front face or the back face}.

In addition, four flaps have been generated: two flaps on two of the longer side perimeter sides.
- On the left and right side of the top face of this rectangular Prism container, a Strip (37), has been generated from a flap (or triangular body) by sealing (2af, 2bf) and cutting around the longitudinal zone, and the middle of the flap / triangular body has been arched because the strip has also been sealed (in the whole, 3/4 of it or with at least one or two welding lines separated from each other) between the two welding lines (can be, for example: rectilinear, diagonal, two or more directions, semicircular concave / convex, saw, etc.) that flank on both sides and on at least one face before or after being generated.
- On the left and right side of the underside of the rectangular Prism container, the flap (or triangular body) has been bent (on itself) towards the side face (36b) and, subsequently, the edge has been sealed (c) {generated when bending or folding over the flap} with a rectilinear welding line (2a) [made by the closing jaw (8)].
- On the top side, a cover (48) is generated, when the container is opened by the following welding lines: on the left and right side two welding lines (they can be, for example: rectilinear, diagonal, semicircular concave / convex, etc.) perpendicular (2af, 2bf) {in the area of intersection between the flap and the body of the container} and one at the edge (3). Likewise, the cap (48) generated can also be detached completely by pulling it outward, especially if the other parallel edge (3) of the top face has also been sealed.

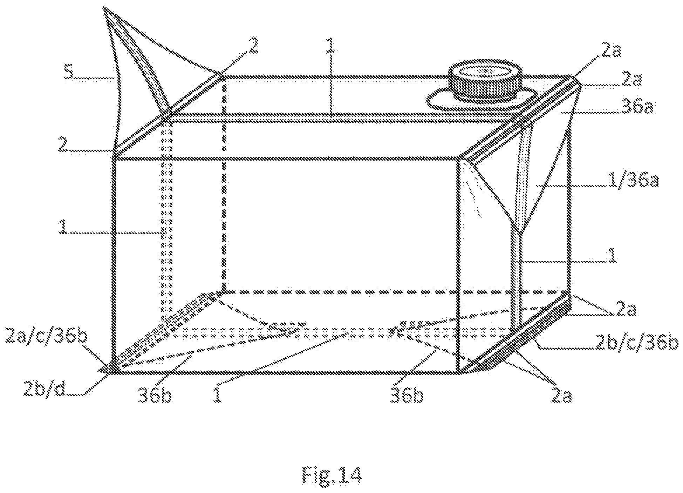

Fig14: presents an elevation of a flexible rectangular Prism-shaped container in a horizontal position. In addition, optionally, a cap has been adhered or stuck on the top face.

The initial container that will be transformed into 3D, has a rectangular shape and, in this case, is of the tube type with two welding lines above (1) and below (1). In addition, four flaps or triangular bodies have been generated in the initial container: two flaps/triangular bodies on one of the longer side perimeter sides and two other flaps on the side perimeter side of greater length parallel to the previous one.
- On the upper left side, the flap or triangular body has not been bent or folded at least once on itself, but it has been sealed with a rectilinear welding line (2a) in the intersection area between the flap and the impact body (6).
- On the upper right side, the flap or triangular body has arched towards the side face (it has not been folded or bent at least once on itself) but it does not join with the body of the container, because the plastic of the wrapper is a complex material with a thickness of approximately 30 microns and because it has also been sealed with two rectilinear welding lines (2a) although they can be, for example: diagonal or semicircular concave / convex: one in the area of intersection between the flap and the impact body (6) and the other, parallel and separated from the previous one by at least one or two millimeters. The same result is also obtained, but with less arching: if a welding line of at least 10 millimeters width is made.
- On the left side of the underside of this container, the flap or triangular body (36) has been folded at least once on itself {Device A} towards the bottom face (b) and, subsequently, it has been sealed with two rectilinear welding lines (they can be, for example: diagonal, oblique or semicircular concave / convex) and parallel: one (2a/c) [made by the impact body (6)] in the area intersecting between the flap and the body of the container and the other (2b/d) [made by the closing jaw (8)], parallel and contiguous with the edge (c) {generated when bending or folding the flap on itself}, in which both are separated, in this case, by about two millimeters.
- On the right side of the underside of this container, first, a flap (36) has been generated that has been sealed - before folding it at least once on itself - with two welding lines (2a) {they can be, for example: rectilinear, diagonal, semicircular concave / convex, two or more directions, saw, etc.} [made by the closing jaw (8), having a welding system fixed in its lateral face]: one in the area of intersection between the flap and the body of the container and the other (2a/d), parallel and contiguous to the previous one in which both are separated, in this case, about two millimeters.

Then, this sealed flap (2a) has been folded at least once on itself toward the side of the container, just at the line of intersection between the second line of welding (2a) and the rest of the flap or triangular body and, finally, the edge (c) {generated when bending or folding over the flap} has been sealed with a rectilinear welding line (2b/c) [made by the impact body (6)].

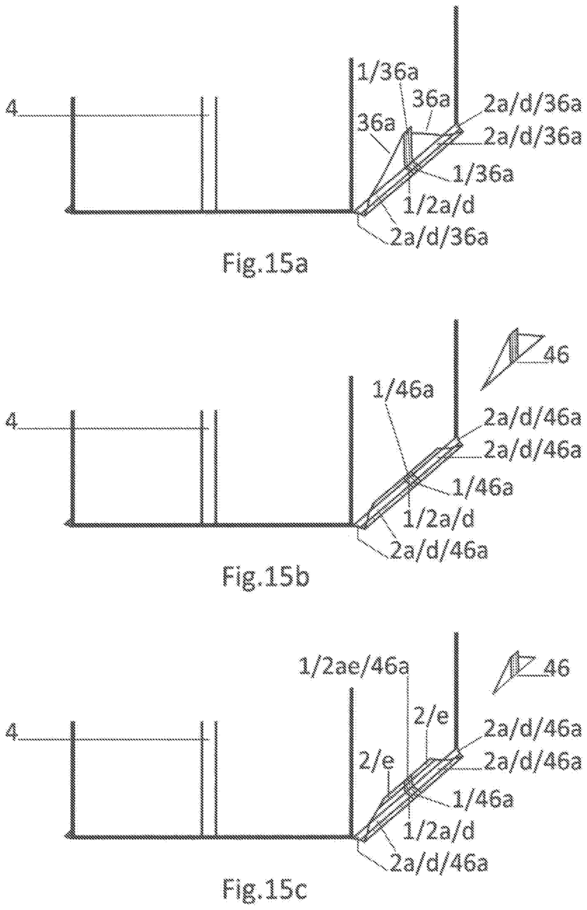

Fig15a: shows in detail the same view of the bottom of the container of figure 11, in which this is a container with a rectangular prism shape, in vertical position.
- On the left and right side of the underside of this rectangular prism container, the flap (or triangular body) has been folded or bent at least once on itself towards the side face (46a) of the container and, subsequently, the parallel and contiguous zone (separated, in this case, by about 4 millimeters from the edge) has been sealed (d) to the edge (c) {generated when bending or folding over the flap} with a line of rectilinear welding (2a / d) [made by the closing jaw (8)].

Fig15b: presents the same container as the one in figure 15a, but this time a further step has been taken by cutting/cauterizing (e), in this case, the parallel and contiguous zone or line with a separation of about three millimeters: to the rectilinear welding line (2a/d). A sectioned section of the flap (or triangular body) generated is thus obtained, in such a way that space is released. Likewise, it can also make the package even more stable in cases where the flap is folded on itself on the supporting face.

Fig15c: presents the same container as in figure 15a, but this time it has also been sealed (e) and cut/cauterized (e), in this case, a section of the flap or triangular body smaller than that in figure 15a. So the rectilinear welding line of the seal (2e) and cut (e) of the flap or triangular body, has been made parallel and contiguous to the welding line (2a/d) but with a separation between them of approximately 6 millimeters.

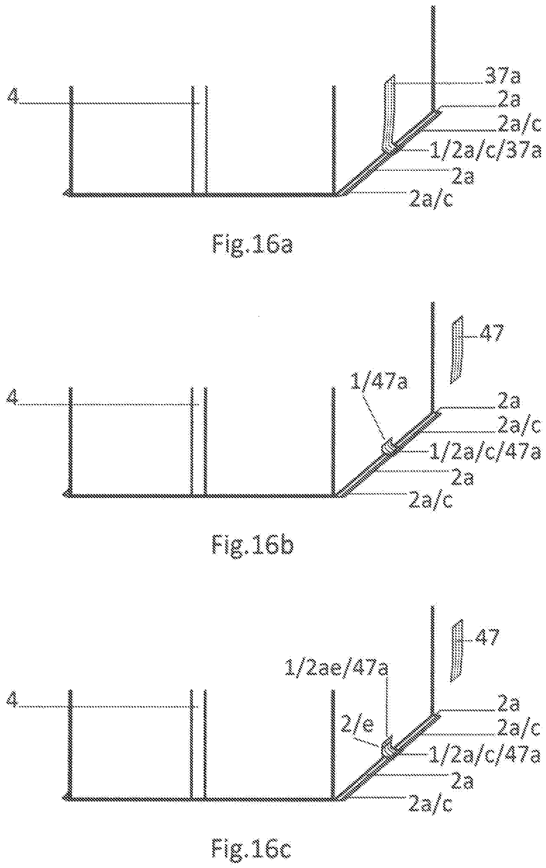

Fig16a: shows in detail the same view of the container as in figure 15a but replacing the flap/triangular body (36) with the strip (37).

Fig16b: shows in detail the same view of the container as in figure 15b but replacing the flap/triangular body (36) with the strip (37).

Fig16c: shows in detail the same view of the container as in figure 15c but replacing the flap/triangular body (36) with the strip (37).

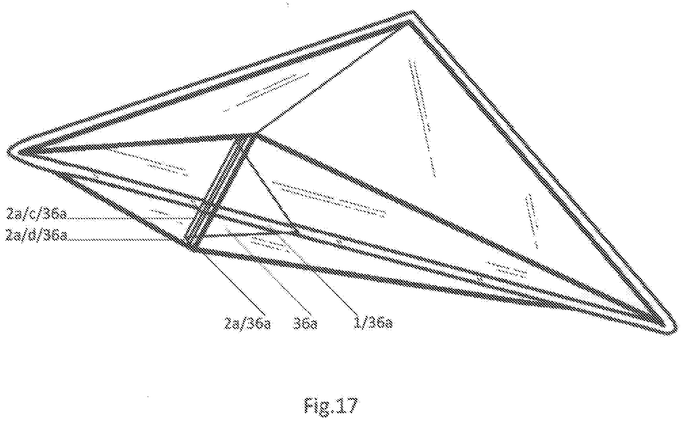

Fig17: presents the elevation of a flexible container shaped like a rhomboid pyramid. The container has been generated by a method proper of the invention, in which the initial container from which it is split to be transformed into 3D, has the quadrangular shape and, in this case, has four seals on each side, as well as only one flap (or triangular body) has been generated on one of the perimeter lateral sides.
- First, the flap (36a) of the base has been sealed - before being bent or folded at least once on itself
- with two welding lines (2a/36b) {they can be, for example: rectilinear, diagonal, semicircular concave/convex, etc.} [made by the closing jaw (8), having a welding system fixed on its side face]: one in the intersection area (2a) between the flap and the body of the container and, the other (2a/d), parallel and contiguous to the previous one in which both are separated, in this case, about three millimeters.

Then, this sealed flap has been folded once on itself towards the side of the container just at the intersection line between the second weld line (2a/d) and the rest of the flap or triangular body and, finally, the edge {generated by bending or folding over the flap) has been sealed with a rectilinear welding line (2a / c) [made by the impact body (6)]. -In the longitudinal perimeter outline and half of this 3D container, the welding line (1) made on the four perimeter sides of the initial container can be seen.

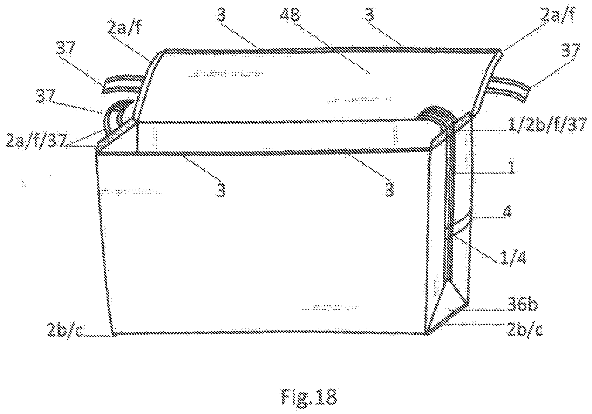

Fig18: shows the elevation of a flexible container in the shape of a rectangular Prism, in a horizontal position.

The container is the same as in Figure 13, but in this case the lid (48) of the open upper side is shown. In this case, the lid (48) was opened by three welding lines (although it could also have been opened completely if the other edge of the top face had also been sealed): the edge (3) generated in the intersection of the top face with the opposite face and the two welding lines (2a/f/37, 2b/f/37) generated when sealing and cutting the flap or triangular body. One way to open the lid (48) is by pulling outwards and in opposite directions with two or three fingers of the adjacent sides {facing away, in opposite directions} from both the welding line from top to the left (2a/f/37) {sealed (a) only the right side} as the one on the upper right (2b/f/37) {seal also only on one side and, in this case, is the right side (b) or outside (when the container is in horizontal position)}, to open a mouth in these welding lines. Next, pull the cover (48) to finish opening the edge welding line (3).

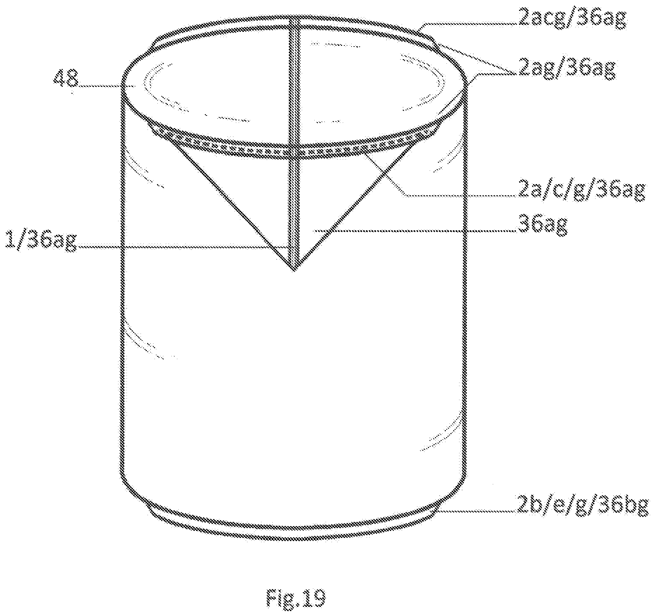

Fig19: shows the elevation of a flexible cylinder-shaped container.

The initial container that is going to be transformed into a 3D container, has a rectangular shape and, in this case, is of the tube type with two welding lines above (1) and below (1). In addition, four flaps or triangular bodies (two of them on one of the perimeter sides of shorter length and the other two on the other side of a shorter length parallel to the previous one) have been generated with a semicircular setting because the impact body (6) and the closing jaw (8) can have a configuration in at least the side to be joined: either semi-cylindrical-concave, or semi-cylindrical convex, in such a way that they are to be assembled (to introduce section of one within section of the other) inserted into each other in order to arch the triangular flap / body in a semicircular configuration.

At the top, the two triangular flaps/bodies generated, first, have been sealed -before each being folded or bent at least once on itself- with a welding line {one on the outside (2ag) and, the top back, inside (2bg)} in the intersection area of the flap / triangular body with the body of the container, second, have been folded on themselves towards (outside) the side of the container, third, they have been sealed again with a welding line {the one on the front, wider and on the outside (2acg), and the one on the back, narrower and on the inside (2bcg)} in the area of the edge generated at fold the flap or triangular body over itself.

At the bottom, the two triangular flaps / bodies generated in a semicircular configuration, first, have been folded on themselves towards (inside) the base of the container, second, they have been sealed with a weld line (2beg) on the edge (c) generated by folding the flap or triangular body over itself.

Also, once the flaps of the top face are torn by the edges {generated in the intersection area of at least two folded sections of the flap / triangular body}, the welding lines (2a/g/36a, 2b) /g/36b) will open (pulling outward in opposite directions at least section of each face adjacent to these welding lines) generating an opening mouth so as to subsequently detach or separate the cap generated from the top side: when pulling it up.

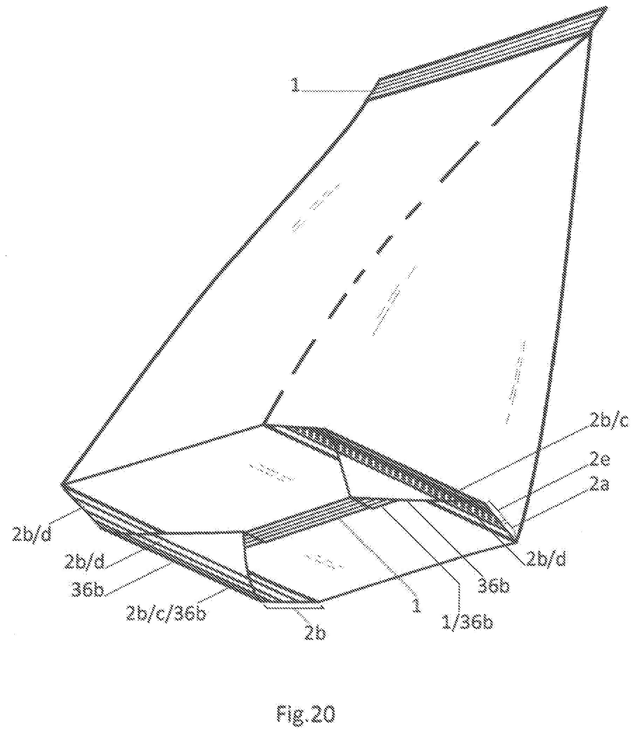

Fig20: shows the elevation of a flexible container in the shape of a basket, in vertical position. In addition, it has a square base.

The initial container that is going to be transformed into 3D, has the shape of a rectangle and, in this case, is of the tube type with two welding lines above (1) and below (1); it only has two flaps (or triangular bodies) on one of the perimeter side edges of shorter length.
- On the left side of the underside of the basket container, the flap (or triangular body), first, has been sealed (2b) with a rectilinear welding line (although it can also be, for example: diagonal, oblique or semicircular concave or convex) in the intersection area of the flap / triangular body and the body of the container}, it has been made with a width of about 12 millimeters; second, the flap / triangular body has been folded once on itself towards the base: precisely by the intersection area of the flap / triangular body and the previous welding line made in the area of intersection of the flap / triangular body and container.

Finally, the flap / triangular body folded on itself (by means of a heat source such as a resistance or by ultrasound) has been sealed with two rectilinear welding lines (although it can also be, for example: diagonal, oblique or semicircular) concave or convex), parallel and separated one from the other: an edge welding line (2b/c/36b) and a rectilinear welding line contiguous (2b/d) to the previous one and which, in this case, is located to the middle of the welding line (2b).
- On the right side of the underside of the basket container, first, the flap (or triangular body) has been sealed on the outside with two rectilinear welding lines (although they can also be, for example: diagonal, oblique or concave or convex semicircular): one (2a) in the intersection area of the flap / triangular body and the body of the container and, the other (2a/e), parallel and separate from the previous one -in this case- by one or two millimeters; second, the flap / triangular body has been folded once on itself and towards the base: precisely by the intersection area of the flap / triangular body and the previous welding line (2a/e).

Finally, the flap/triangular body folded on itself (by using a heat source such as a resistance or by ultrasound) has been sealed with two rectilinear welding lines (although it can also be, for example: diagonal, oblique or semicircular) concave or convex), parallel and separated one from the other an edge welding line (c) and a rectilinear welding line (d) which, in this case, is located in the middle of the welding line (2b).
- In this case, two broad ledges as eaves on both sides in the lower section of the container has been left, as well as a small section of the triangular flap / body has been folded or bent over the other section of the flap / triangular body: so the container is more stable and the flap / triangular body is even closer to the base, once the welding lines (c) and (d) have been made.
- In the top of the container no flaps have been generated, there is only the welding line (1) where the container will be opened.

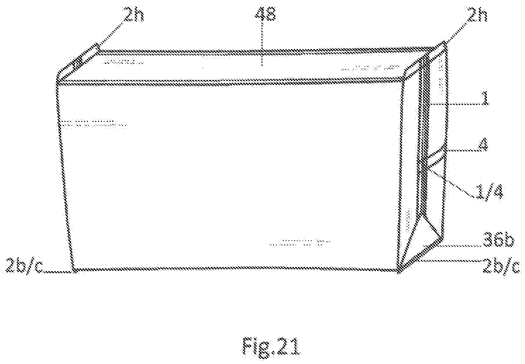

Fig21: shows the elevation of the flexible container as in figure 13 with a rectangular Prism shape in horizontal position, but in this case the two flaps or triangular bodies generated on the top have been sealed (2) and cut (2h) in the intersection area of the flap / triangular body and the body of the container.

Therefore, this drawing serves as an example of how in any of the flexible containers in addition to being manipulated the flaps / triangular bodies as expressed in any one of the Procedures or Devices of this invention, they can also be in a same flexible package where, at least, one flap / triangular body can be handled in another way such as for example by sealing (2) or sealing and cutting (2h); although this Procedure is not effective and safe for the preservation of the container or for the product packed inside it.

### HERE IS AN EXPLANATION OF A MANUFACTURING METHOD USING A CONTAINER AS EXAMPLE (FIG 9), AS WELL AS ALSO DIFFERENT WAYS OF MANIPULATING THE TRIANGULAR BODY/FLAPS (36)

1- In this case, as an example, we are going to start with a flexible two-sided initial container in tube format {two-sealed square container: the two transverse and parallel ones, above and below} which has inside chips and air / protective atmosphere (this causes that the container is inflated, but not at all), and we are going to transform it into a three-dimensional container with the shape similar to that of a jar (see figure 9) by folding once on itself: three of the flaps or triangular bodies generated in the initial container.

The procedure includes the following stages:

### 1st stage

The container is placed standing upright on a hatch and between a set of two clamping jaws (3), followed by a sensor mode (optical, infrared, motion, etc.) that detects the initial container: it will give the order to actuate the jaws (3) {operated by a drive mode such as a clamp cylinder or linear cylinder or turn} to grip and block (exerting pressure but with cushioning allowing the container to inflate at the time of generating the flaps) the initial container, in which they will also maintain a constant but cushioned pressure (to allow the container to inflate when it becomes a three-dimensional geometric body) each of these two clamping jaws (3) on the faces of larger size of the initial container.

### 2nd stage

The hatch (10) which is optional, driven by a linear or rotating cylinder: is separated from the machine and, immediately, two are activated (one for each lateral side perimeter of the square container to be transformed in 3D) impact bodies (6) {which can be chosen, for example, from the following options: a double set (one impact body and a closing jaw, for each corner of the initial container), triple (one impact body and two closing jaws) to the sides, for each lateral side perimeter of the initial container) or quadruple (two impact bodies connected by a clamp cylinder and two clamping jaws on the sides) by means of a displacement mode such as a linear or rotating cylinder {also, in this case, the impact bodies are to be positioned in parallel (one above and the other below two parallel perimeter lateral sides of an initial square container with four corners)}, in order to collide each of the two impact bodies, in this case, in the middle of one of the perimeter lateral sides of the initial container): generating, on one hand, four flaps (triangular bodies) located each one of them at the ends of the lateral sides perimeter as well as parallel to one of the side faces of the impact body (two flaps for each body of impact) and, on the other hand, the initial packaging will acquire the intended shape of a three-dimensional geometric body, in which the clamping jaws (3) have been opened but keeping the pressure on the container, in order to allow the container to inflate (or redistribute the volumetrics in 3D) and also, at the same time, keep holding or / and locking the container already transformed into 3D and that, in this case, at the moment, has a cube shape because four flaps have been generated

### 3rd stage

Then, four closing jaws (8) [one for each flap or triangular body] are operated by a displacement mode such as, for example, a linear or rotating cylinder, in which they are also positioned or located in parallel to the side faces of the impact body (6): in order to come into contact with the flaps generated and join the side faces of the impact body (6), and at the same time fixing / blocking the flap and eject the content packaged inside such as for example liquid / pasty or / and air / gas, since these are crushed when caught between the impact body and the closing jaw.

### 4th stage

Immediately afterwards the flaps or triangular bodies will be manipulated.

In the explanation of this stage, as an example, we will take as reference figure 9 where only three flaps or triangular bodies have been generated.

As follows: (see the devices of figures 1, 2, 3, 4).
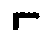 The two flaps or triangular bodies generated on the face or the bottom of the container, on the left and right.
   ▪ First, in this particular case, (38a, 38b, 38ac, 38bc, 38ae, 38be) will be sealed at the height you want with at least one rectilinear welding line (although it could be, for example, diagonal or semicircular) by means of at least one mode of welding system or heat source (38a, 38ae), which may be fixed on the side face of the closing jaw (8) or / and of the impact body (6). Therefore, it can be positioned: in the zone or line (39a) of intersection between the flap / triangular body and the body / rest of the container, below the stylus, or / and, in the area or line above the stylus.
      Also, the welding line that may or may not be made before folding the flap will facilitate, especially in the case of the device [c] - that precisely the flap is folded or bent over this welding line (38a) or just the area of intersection between the last welding line (38a) and the rest of the flap or triangular body, as well as to facilitate the tearing of the flap or triangular body by the edge generated by bending or folding the flap over itself, mainly because it has been sealed twice: the first, with the welding line (38a) before folding or folding the flap and, the second, with the line of welding of the edge (38bc) made after bending or folding the flap or triangular body.
      Any of the welding lines (Example: fig9 2a, 2b, 2a/c) can have the millimeters (1; 2; 3; 4; 5; 6; 7; 8; 9; 10 or more) required, both in width and in length.
   ▪ Second, each flap will fold or fold over itself at least once [fig1, 2 and 3 (42, 43, 46); fig4 (38a) (16, 44, 45)].

Next, three different ways of folding or folding the flap (36) or triangular body (36) are exposed. DEVICE A: (fig1)

Once made, in this case, the first seal (38ae) of the flap / triangular body (could also not have been made) and the closing jaw (8) is positioned next to the impact body (6), at least one stylus (46a) {driven by a displacement mode like that of a linear cylinder (9) and which in this case is also fixed inside the closing jaw (8)} is going to advance forward the distance that is so as to be inserted into the cavity (42b) and, at the same time, also introduce into the cavity a section of the flap or triangular body: obtaining the folding or bending at least once on itself of at least a section of at least two sections of at least one flap / triangular body (or at least one section of at least two sections of at least one flap or triangular body).

Next, the stylus (46a) returns to the starting position and, immediately, at least one welding system or heat source is activated (driven by a displacement mode such as that of a linear cylinder (9) or rotating and that, in this case, are fixed inside the impact body (6) above and below the folded flap}, but this case two will be fixed: the one above (39ad), positioned more outwardly, will seal at least section (preferably, in the entire transverse area of the flap/triangular body) of a rectilinear welding line (although it could be, for example, semicircular, diagonal or oblique) and, preferably, parallel [although they could be one or more perpendiculars, and at the desired distance) to the edge generated when the flap (or triangular body) has been folded and the bottom one (39bc), which, being positioned more inwards, will seal at least section (preferably, in the entire transversal area of the flap/triangular body) of a rectilinear welding line (although it could be, for example, semicircular, diagonal or oblique) just on the edge generated when bending or folding on itself the flap or triangular body, or it can also be on the same edge (c) and in turn on at least section of the area or line contiguous to the edge (c).

### DEVICE B: (fig2 and 3)

Once a first seal is made (38a) of the flap / triangular body (could also not have been made) and with the closing jaw (8) positioned next to the impact body (6), simultaneously -or first the gate- they will be activated: at least one gate (43b) that will be opened (operated by means of a displacement mode such as, for example, a linear cylinder (9) or a rotating cylinder (16)), and can also be fixed both inside as on the outside of the impact body or / and the closing jaw (6)} and at least one stylus (46a) {operated by a displacement mode like that of a linear cylinder (9), and furthermore it can be fixed inside both the closing jaw (8) and the impact body (6)}, in this case, in horizontal position (46afig2) although it can also be, for example, diagonal: it will advance forward to thus enter inside the cavity (42b) {generated by the open gate (43)} and also, at the same time, introducing to the cavity (42b) at least section of two folded or bent sections of the flap or triangular body (36).

Then, the stylus (46a) returns to the starting position and, immediately, at least one welding system or heat source is activated [fig2 and 3 (39ac, 39ad)] {operated by a displacement mode as that of a linear (9) or rotating cylinder that can be fixed above or/and below the folded flap and both in the impact body (6) and in the closing jaw (8): in order to seal at least section of the edge generated by folding or folding over the flap (39ac), or/and, at least sealing (39ad) at least once the section (preferably, in the entire transverse area) of the area or line contiguous to the edge (c) with a rectilinear welding line (although it could be, for example, semicircular, diagonal or oblique) and, preferably, parallel (although they could be, for example, one or more perpendiculars and at the desired distance).

### DEVICE C: (fig4)

Once made, at least a first seal (2a, 38a) of the triangular flap / body (may also not have been made) in at least section of the transverse or intersecting zone or line between the flap and the container body, and the closing jaw (8) being positioned next to the impact body (6): the closing jaw (8) will return to the starting point in order to free space so that the flap can be folded.

Then, immediately, the triangular flap / body that remains upright next to the side face of the impact body (6), will be displaced downward, to make the flap fold in at least two sections, by a push mode such as for example: that of a rotating rod (45b) that is to rotate (16) downward and toward the side of the flap, preferably 180 degrees; or that of an inclined stylus (44b): which will move from top to bottom, preferably at an angle of 60 degrees. Both are driven by means of a displacement mode, such as, for example, that of at least one linear cylinder (9) or one of rotation (16).

Likewise, the welding line (2a) that is made before folding the flap will facilitate the flap to be folded or bent above just this welding line (38a) or just the area intersecting between the last welding line (38a) and the rest of the flap or triangular body, as well as later facilitate the tearing of the flap or triangular body by the edge generated by bending or folding on itself the flap, due mainly to that it has been sealed twice: first, with the welding line (38a) before folding or folding the flap and, second, with the welding line of the edge (38bc) made after folding or folded the flap or triangular body.

Once the flap/triangular body is folded, again the closing jaw (8) will move forward until it makes contact with the flap and joins the impact body (6): to seal (38a) the folded flap, on one or both of its sides (a, b), by at least one section of at least one rectilinear welding line (can also be, for example, semicircular, diagonal or oblique) in at least one section of the flap folded, preferably, in the entire transverse area and also in the entire area or line of the edge (38bc), or / and, in the area or line contiguous with the edge (38a) with a rectilinear welding line (although it could be, for example, semicircular, diagonal or oblique) and, preferably, parallel (although they could be at least one or many more perpendicular welding lines) and at the desired distance.

In the case of the revolving rod (45): once rotated (16) down 180 degrees to fold the flap can either return to the starting point by rotating (16) up 180 degrees, or, remain positioned at the bottom (having rotated 180 degrees) during the process of sealing the flap / triangular body that is folded or folded at least once on itself in at least two sections, in order to facilitate sealing, but that once the sealing is finished and the closing jaw (8) has returned to the starting point: the rotating rod (45) will return to the starting point when climbing 180 degrees.

In the case, of the inclined Stylus (44): it can be inserted inwardly, before the closing jaw (8) is actuated to join the flap and the impact body (6); or else, it can be put inside the impact body (6) inside-in this case-of the impact body (6), in a synchronized and at the same time, just as it moves forward {until making contact with the flap and the impact body (6)} the closing jaw (8) with which the triangular flap / body that has been folded or folded at least once is to be sealed at least once.

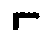 One of the flaps or triangular bodies generated on the face or top of the container, being able to choose the one on the left or the right.
▪ First, in this particular case, it will not be sealed (39a, 39b, 39ac, 39bc, 39ad, 39bd, 39ae, 39be) with no welding line (rectilinear, diagonal, semicircular, etc.) prior to folding or bending of the flap or triangular body.
▪ Second, the flap on the left or on the right is going to fold or fold at least once on itself [fig1, 2 and 3 (39a / b / ac / ad / ae / bc 46, 43); fig4 (39a, 39bc, 44, 45)] just on the same top line (at the end of welding) of the welding line of the intersection area between the flap and the rest of the container. Next, three different ways of folding or folding over the flap or triangular body are shown below.

### DEVICE A: (fig1)

With the closing jaw (8) positioned next to the impact body (6), at least one stylus (46a) {operated by a displacement mode like that of a linear cylinder (9) and that, in this case, is fixed inside the closing jaw (8)} is going to move forward the distance that is wanted in order to enter inside the cavity (42b) and, at the same time, introduced towards the cavity at least section of the flap (or triangular body) to fold or bend over itself two sections.

Afterwards, the stylus (46a) returns to the starting position and, immediately, at least one welding system or heat source is activated (driven by a displacement mode such as that of a linear cylinder (9) or and in addition, in this case, it is fixed inside the impact body (6) above (39ad) of the folded flap}, which will be positioned just above the edge (c) generated when bending or folding over itself the triangular flap / body, in such a way that it will seal at least section (preferably, in the entire transverse area of the flap / triangular body) of a rectilinear welding line (although it could be, for example, semicircular, diagonal or oblique) on the same edge (generated when the flap is folded or folded), or it can also be on the same edge (c) and in turn on at least section of the area or line contiguous with the edge (d).

### DEVICE B: (fig2 and 3)

With the closing jaw (8) positioned next to the impact body (6), all the content (air/gas or/and liquid / pasty) packaged inside the flap / triangular body (36) has been ejected, that there is a mobile gate (43) on the side face of the impact body (6) that is in the closed position.

Immediately afterwards, or simultaneously, the gate (43b) will open (operated by a displacement mode such as, for example, a linear cylinder (9) or a rotating cylinder (16)), and it can also be fixed both inside as on the outside of the impact body or / and of the closing jaw (6)} moving, in this case, 90 degrees of backward rotation, for at least one stylus (46a) {operated by a displacement like that of a linear cylinder (9)} which in this case is also fixed inside the lateral face of the closing jaw (8): it will advance forward the desired distance so as to be introduced inside the cavity (42b) and, at the same time, also introduce into the cavity at least one section of two folded sections of the flap / triangular body (36).

Then, the stylus (46a) returns to the initial position and, immediately, at least one welding system or heat source is activated (driven by a displacement mode such as that of a linear cylinder (9) or turn and that, in this case, is fixed above (39ad) the interior of the cavity of the impact body (6) of the flap folded or folded on itself}, which will be positioned above the edge (c) generated by folding over the flap/triangular body (36), in such a way that it will seal at least section (preferably, the entire transverse area of the flap/triangular body) of a rectilinear welding line (it can be, for example: semicircular, diagonal or oblique) on the same edge (c), although it can also be sealed, in turn, on at least section of the area or line contiguous with the edge (c). Finally, once the container has been transformed into 3D: the gate (43b) will close when turning upwards to the right 90 degrees.

### DEVICE C: (fig4)

In this case, because the flap (or triangular body) is not going to be sealed prior to being bent (fig9): at least one locking system mode will have to be attached to the impact body (6) for example a Hook or Pin, in order to grasp -before being bent- at least section of the area or transversal line of the flap or triangular body (at the desired height) so that later on, it can be folded just by the line or area where at least one Hook or Pin is blocking the flap. If the hook or pin is not used, the flap cannot be folded on itself, since the flap will fold over the line of intersection between the flap and the body of the package and, therefore, an edge is not going to be generated.

Here are described the steps that this procedure comprises from generating the flap:
In the first stage, the flap that is located next to and on the side of the impact body (6): will be blocked or grabbed (at the height desired by at least one Hook or Pin {powered by a displacement mode, such as, for example, the one of at least one linear cylinder (9) or of a rotation cylinder in the zone or line of the flap / triangular body that is desired, preferably, above the line of intersection between the flap and the body of the container.

In the second stage, the flap / triangular body will be displaced downwards, so as to cause the flap to fold in at least two sections, by a push mode such as: a rotating rod (45b) which is to rotate (16) downward and to the side of the flap, preferably 180 degrees; or an inclined stylus (44b) to be moved from top to bottom, preferably at an angle of 60 degrees. Both are operated by means of a displacement mode, such as, for example, that of at least one linear cylinder (9) or one of rotation (16).

In the Third stage, once the flap / triangular body is folded: one or more Hooks or Pins are going to return to the initial point, in order to allow the closing jaw (8) to join the impact body (6), as well as crush the lapel that is in between.

In the fourth stage, the closing jaw (8) will advance forward, until it makes contact with the flap and joins the impact body (6): in order to seal (38a) the folded flap, one or both of the sides (a, b), by means of at least a portion of at least one rectilinear welding line (may also be, for example, semicircular, diagonal or oblique) in at least section of the folded flap, preferably in the entire cross-sectional area and also in the entire area or line of the edge (38bc), or / and, in the area or line contiguous with the edge (38a) with a rectilinear welding line (although it could be example, semicircular, diagonal or oblique) and, preferably, parallel (although they could be at least one or many more perpendicular welding lines) and the desired distance.

In the particular case of Figure 9, it is only going to be sealed with a rectilinear welding line: just the whole of the edge generated when the flap is folded on itself, in which section is also sealed at the same time of the zone or line contiguous to the edge (c).

In the case, of the rotating rod (45): once rotated (16) down 180 degrees to fold on itself the flap can, or return to the starting point by rotating (16) upwards 180 degrees, or, remain positioned in the lower section (having rotated 180 degrees) during the process of sealing the flap / triangular body that is folded or folded at least once on itself in at least two sections, in order to facilitate the sealed, but once the sealing is completed and the closing jaw (8) has returned to the starting point: the rotating rod (45) will return to the starting point when climbing 180 degrees.

In the case, of the inclined Stylus(44): it can be inserted inwardly before the closing jaw (8) is actuated to join the flap and the impact body (6); or else, it can be inserted into the impact body (6), in a synchronized manner and at the same time, just as it moves forward (until it makes contact with the flap and the impact body (6)} the closing clamp (8) with which the triangular flap / body that has been folded at least once will be sealed at least once.

In the fifth stage, once the manipulation of all the triangular flaps/bodies has been completed which, in this case, are three (it could have been only one): the closing jaws (8) and the impact body (6) [also they can do it at the same time the clamping jaws (3), or if not later] they will return or move to the starting point (or start) releasing the container, in order to allow the folded flap (or triangular body) to be placed (adhere without adhesives) continuously over time: together some of the adjacent sides of the flap or triangular body, in which letter [a] expresses the face that is on the side(s) of the container already transformed into 3D and, letter [b], expresses the face that is up or down (supporting face) of the container already transformed in 3D.

On the other hand, the cylinder(s) (for example: a clamp cylinder or linear or rotating cylinders) that drive the clamping jaws (3) {since there may be one, two, three or more of four clamps (3) or sets of clamping jaws (3)} can, in turn, be fixed to one or more rotating or linear cylinders: in order to be able to move the 3D transformed container sideways, as well as finally be able to deposit the container, for example, on a transformer belt that is located next to the transformer of initial packaging in 3D containers.

### BELOW IS THE EXPLANATION OF THE OPERATION OF THE DEVICE IN FIGURE 5, BY WHICH A STRIP (37) OF A FLAP OR TRIANGULAR BODY IS OBTAINED

2- Once at least one flap (or triangular body) has been generated next to the impact body (6), and this is positioned (alone) and parallel to the side face of the impact body (6); the following steps are given:
   - First Step: the closing jaw (8) is operated by a displacement mode such as, for example, a linear or rotating cylinder, in which, in addition, these are positioned or located parallel to the sides of the impact body (6): in order to come into contact with the generated flap (which is located in the middle) and join the side faces of the impact body (6), and at the same time to fix / block the flap and eject the contents packaged inside such as for example liquid / pasty or / and air / gas, since these are crushed when caught between the impact body and the closing jaw.
   - Second Step: Instantly, the flap or triangular body (5) is going to be sealed (2af, 2bf), for example, with a resistance (40a, 40b) or ultrasounds and then cut with a blade (41a, 41b); in which in addition any of them may be fixed on the side face of the impact body (6) or/and on the lateral face of the closing jaw (8).
      So that a strip (37) is obtained in this way, because the triangular flap / body is to be sealed and cut, mainly, with a rectilinear welding line (although it can be, for example, diagonal or semicircular) crosswise in the area of intersection between the flap and the body of the container and, also, two vertical rectilinear welding lines (although it may be, for example, diagonal or semicircular), parallel and separated from each other as far as possible, at least, just the weld line (1) that runs along the longitudinal half and on one of the faces of the flap or triangular body} that converge and are joined to the transversal welding line forming a 90 degree angle [ 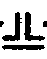 ].
      Any of the welding lines (Example: fig9 2a, 2b, 2a/c) can have the millimeters desired: 1, 2, 3, 4, 5, 6, 7, 8, 9, 10 or more.
   - Third step: the closing clamp (8) is separated when returning to the initial point to, on one hand, release the container and, on the other, let the two triangular segments (left and right) that have been cut or cauterized fall or separate from the flap or triangular body.

The impact body (6), if it is mobile: will also separate and return to the starting point in order to free the container that has already been transformed into 3D; but, when the impact body (6) is immobile {the container is the one who hits or collides, by a driving mode as for example manually or by mechanical means such as the grip of a robot, against/in the impact body (6) so that the flaps or triangular bodies are generated}, then the one moving to separate from the 3D transforming machine: is the container.

Additionally, once obtained this strip as a result of the sealing and cutting (or cauterizing) of the flap or triangular body, it can be manipulated {sealed at least once (optional), folded at least once and finally sealed at least once} in the same way as the flap (or triangular body), as set forth and explained above: in Stage 4 of the first example described (just after the description of the figures) about the PRESENTATION OF A METHOD TO CARRY OUT THE INVENTION.

## Claims

1. Process to transform a flexible container, a container provided with at least two faces that delimit an interior enclosure, and which in turn said faces are delimited by a perimeter exterior contour defined by at least one perimeter side, and / or by less a sealing line or fold that closes the container partially or in its entirety, in which the container houses at least one fluid and optionally or in addition can house at least one solid or solids, granular or powdery, where the process is **characterized by** which comprises the following stages:
- pressing, for example, in the direction of the interior of the container, using at least one impact body (6) [or, for example, by means of a thrust mode as directed air] on / against / with / between / at less a section [or, also, for example, against / with / between / in the intermediate zone, partial zone, complete zone] of at least one peripheral side or zone of two perimeter lateral sides contiguous with one end or vertex; or, vice versa, the perimeter lateral side is the one that hits on / against / with / between / in the impact body (6) or, but also, in any case being in movement both the initial container and the impact body (6): so that section of the fluid is displaced towards the contour of the container, increasing the pressure inside the container, as well as producing a local inflation effect, obtaining: at least one support face or additional face in the area of the container impacted by the impact body which allows the container to stand as well as modify the geometric configuration of the container, and
at least one flap or triangular body (or at least section of the flap or triangular body) contiguous with the supporting face (or additional face) and formed by section of at least two faces of the container;
- Folding, bending or joining, by a mechanical, pushing or air-directed mode, at least once towards at least one direction and / or to (or on) itself: at least section of at least one flap (36) / triangular body (36) [or at least section of a flap or triangular body] towards at least section of at least another section of the same or another flap (36) / triangular body (36) [or at least section of the flap or triangular body]. Furthermore at least section of these two sections of at least one triangular flap / body (or at least section of the flap or triangular body) may be, for example: superimposed in parallel or with some degree of rotation to one side or the other, as well as also folding or bending at least once the triangular flap (or at least section of the flap or triangular body) on itself, for example, rectilinearly, obliquely or semicircular convex / concave; obtaining:
at least a section of at least one section of at least two sections or halves of at least one triangular flap (or at least section of at least one flap or triangular body), which will be folded or folded at least one once towards at least one direction and towards (or over) at least section of another section of the same or another flap (36) / triangular body (36) (or at least section of it or another triangular body / flap), and
an edge or fold generated at the intersection of at least two sections or halves of at least one flap (36) / triangular body (36) (or at least section of the flap or triangular body), where the package is going to keep the container permanently watertight without pores or leaks.

2. Process to transform a flexible container, said container being provided with:
at least two faces delimiting an interior enclosure, and which in turn are also delimited by a perimeter exterior contour defined by at least one perimeter side, and/or
at least one sealing line or fold that closes the container partially or in its entirety, wherein the container houses at least one fluid and optionally or in addition may house at least one solid or granular or powdery solid, and
wherein the container houses at least one fluid and in addition solids, granules or powders, wherein the method is characterized as it comprises the following steps:
First Stage: press in the direction of the interior of the container [preferably, from the top of the container when standing vertically, because this area is free, for example, of solids] using at least one body of impact (6) [or, for example, by pushing such as directed air] on / against / with / between / in at least one section [or, also but, for example, against / with / between / in the intermediate zone, partial zone, complete zone] of at least one peripheral side or zone of two perimeter lateral sides contiguous with one end or vertex [for example, located in the upper section of the container; or, vice versa, the perimeter lateral side is the one that hits on / against / with / between / in the impact body (6) or, but also, in any of the cases being in movement both the initial container and the impact body (6):
so that section of the fluid is displaced towards the contour of the container, increasing the pressure inside the container, as well as producing a local inflation effect, obtaining:
at least one support face or additional face in the area of the container impacted by the impact body which allows the container to stand stably as well as, in turn, modify the geometric configuration of the container, and
at least one flap (36) / triangular body (36) [or at least section of at least one flap or triangular body] contiguous with the support face and formed by at least two sides of the container, and
Second stage:
- By folding, bending or joining, by a mechanical, pushing or air-directed mode, at least once to at least one direction and/or to (or on) itself: at least section of at least a flap (36) / triangular body (36) [or at least section of a flap or triangular body] towards at least a section of at least another section of the same or another flap (36) / triangular body (36) [or less section of the flap or triangular body]. Furthermore at least section of these two sections of at least one triangular flap / body (or at least section of the flap or triangular body) may be, for example: superimposed in parallel or with some degree of rotation to one side or the other, as well as also folding or bending at least once the triangular flap (or at least section of the flap or triangular body) on itself, for example, rectilinearly, obliquely or semicircular convex / concave; getting:
at least one section of at least a section of at least two sections or halves of at least one triangular flap (or at least section of at least one flap or triangular body), which will be folded or folded at least one once towards at least one direction and towards (or over) at least section of another section of the same or another flap (36) / triangular body (36) (or at least section of it or another triangular body / flap), and
an edge or fold generated at the intersection of at least two sections or halves of at least one flap (36) / triangular body (36) (or at least section of the flap or triangular body), where the package is going to keep permanently watertight without pores or leaks.
Third Stage: followed, immediately, by a way of flipping the container that is, preferably, upright, the container will be rotated 180 degrees (or approximately) on itself so that, on the one hand, the solids packed inside the container fall downwards due to the gravitational effect and, on the other hand, at least one of the perimeter lateral sides (which previously, for example, was located in the lower section of the container) turns towards, for example, the upper section of the container.
Fourth step: on at least one perimeter that is now located at the top of the container, steps one, two and three described above in this procedure are going to be repeated.

3. Process to improve other procedures for the production of containers of three-dimensional configuration, which are manufactured with flexible materials; wherein the method comprises the following steps:
- generating a container body starting, for example, from the film in coil,
- sealing media, by means of at least one mode of heat source, and
- generation media of at least one flap / triangular body (36) (or at least section of a flap or triangular body) or strip (37);
wherein the method is **characterized by** the following:
- By folding, bending or joining, by a mechanical, push or air-directed mode, at least once to at least one direction and/or to (or on) itself: at least section of at least one flap (36) / triangular body (36) [or at least section of a flap or triangular body] towards at least section of at least another section of the same or another flap (36) / triangular body (36) [or at least section of the flap or triangular body]. Furthermore at least section of these two sections of at least one triangular flap / body (or at least section of the flap or triangular body) may be, for example: superimposed in parallel or with some degree of rotation to one side or the other, as well as folding or bending at least once the triangular flap (or at least section of the flap or triangular body) on itself, for example, rectilinearly, obliquely or semicircular convex / concave; getting:
at least one section of at least a section of at least two sections or halves of at least one triangular flap (or at least section of at least one flap or triangular body), which will be folded or folded at least one once towards at least one direction and towards (or over) at least section of another section of the same or another flap (36) / triangular body (36) (or at least section of it or another triangular body / flap), and
an edge or fold generated at the intersection of at least two sections or halves of at least one flap (36) / triangular body (36) (or at least section of the flap or triangular body), and
a container transformed with at least one area or with at least one flap (36) / triangular body (36) (or at least a section of the flap or triangular body), wherein at least a section of at least a section of the less a triangular flap (or at least section of the flap or triangular body) is folded or folded at least once to at least one direction or to (or on) at least a section of at least another section of at least the same or another triangular flap (or at least section of it or another flap or triangular body), where the container is to be permanently sealed without pores or leaks.

4. Procedure according to any one of claims 1, 2 or 3, **characterized by** that prior to the folding, bending or joining step at least once to at least one direction or/and towards (or over) itself of at least part of at least one flap/triangular body [or at least part of a flap or triangular body] towards at least part of at least another part of the same or another flap/triangular body [or at least part of the flap or triangular body]:
it is to be sealed, by means of a way such as for example a heat source (such as that of a resistor, laser or ultrasound), at least once [for example, with at least one welding line (2a; 2b; 2ae; 2be) which may be, for example, rectilinear, semicircular concave / convex or oblique] by at least part of at least one face or side of at least one flap / triangular body (or at least part of one flap / triangular body); thus obtaining:
at least one welding line that will keep at least one of the supporting faces or additional face permanently stable, and
at least one more rigid and stable flap / triangular body (or of at least part of at least one flap / triangular body), if after it has been folded or bent at least once over itself.

5. Procedure according to claim 4 **characterized by** that the sealing step is performed at least once by at least part of at least one face or side of the flap / triangular body (or at least part of one flap / triangular body) and in the intersection area of the flap (or triangular body) with the container body (or the supporting face/additional face). In turn, the sealing can be done, for example, with a welding line (2a; 2b) and, in addition, be for example: parallel, perpendicular or in different inclination degrees, as well as, at least one or more than one can be made in different ways such as: straight, diagonal, oblique or semicircular; thus obtaining:
at least one welding line that will keep at least one of the supporting faces or additional face permanently stable, and
at least one more rigid and stable flap / triangular body (or of at least part of at least one flap / triangular body), if a posteriori it has been folded or bent at least once over itself; especially due to the fact that the folding or bending has been done precisely by the welding line of the intersection area of the flap / triangular body (or of at least part of at least one flap / triangular body) and the body of the container, due to the fact that a more rigid area (corresponding to this welding line) is generated in the manner of an eave protruding outwards and in a horizontal plane that makes the container more stable.

6. Procedure according to claims 4 or 5, **characterized by** that the sealing step is carried out at least twice in at least two different areas:
it is sealed at least once, for example, with a first welding line by at least part of at least one face or side of the intersection area of the flap (or triangular body) with the body of the container or the support face (or additional face), and
it is sealed at least once, for example, with a second welding line (e) by at least part of at least one face or side of the flap (or triangular body) but in an area comprised between the previous weld (or first) and the rest of the flap (or triangular body). Also, this sealing or second welding line can be made contiguous or separate from the first (or previous) welding line.
In addition, the sealing can be carried out, for example, with a welding line, for example: it can be made parallel, perpendicular or in different inclination degrees, as well as, at least one or more than one can be made in different ways such as: straight, diagonal, oblique or semicircular.

7. Procedure according to claim 4, 5 or 6 **characterized by** comprising, prior to the folding, bending or joining step at least once to at least one direction or/and towards (or over) itself of at least part of at least one flap / triangular body [or at least part of a flap or triangular body] towards at least part of at least another part of the same or another flap/triangular body [or at least part of the flap or triangular body]:
an additional cutting or cauterizing step, by means of a cutting method or heat source such as for example a blade/resistor/laser, in whole or in part at least one flap / triangular body (or at least part of at least one flap / triangular body) is carried out.

8. Procedure according to claims 1, 2, 3, 4, 5, 6 or 7 **characterized by** additionally incorporating [since that at least, as minimum: at least part of the flap (36) / triangular body (36) (or at least part of the flap / triangular body) is folded or bent at least once towards one direction or/and towards (or over) itself or towards at least part of another part of it or another flap (36) / triangular body (36) (or at least part of the flap / triangular body), the step of:
- sealing {by means of a way such as that of a heat source such as that of a resistor or ultrasound and, for example, with at least one welding line (2a, 2b, 2ae, 2be) which may be, for example, parallel, perpendicular or oblique, as well as may also be, for example, rectilinear, oblique or semicircular concave / convex}, at least once by at least part of at least a face or side (preferably the outer face or side) of at least one of the parts (either the part that is folded or bent, or the part that at least part of it is in contact with the intersection area between the flap and the container body) of at least two parts or halves of at least one flap (36) / triangular body (36) (or of at least part of the flap / triangular body); to, thus, keep permanently stable;
at least one of the supporting generated faces or additional face, and
at least one part of at least two parts of the flap (36) (or triangular body) folded or bent at least once over itself, thus obtaining:
the permanent positioning of the flap (or triangular body) towards the body of the container or towards at least one of the adjacent faces (for example: a, b), in which, in addition, at least part of this flap (or triangular body) will also be making contact (although, in some cases, may not be in contact) permanently with at least one of the adjacent sides of the container, and
an edge {generated at the intersection of at least two parts or halves of at least one flap (36) / triangular body (36) (or at least part of the flap/triangular body), in which at least part of at least one part or half is folded or bent at least once towards at least one direction with respect to (or over) at least part of at least another part of the same or another flap (36) / triangular body (36) (or at least part of it or another flap or triangular body)} better shaped and delimited, as well as more rigid or consistent, especially, if it is sealed on at least part of at least one face or side of this edge (c) (or intersection area).

9. Process for transforming a flexible container, said container being provided with:
at least two faces that delimit an inner enclosure, and that in turn said faces are delimited by an outer perimeter contour defined by at least one perimeter side, and/or
at least one sealing line or fold that closes the container partially or in its entirety, in which the container houses at least one fluid and optionally or in addition can house at least one solid or solids, granules or powders,
wherein the procedure is **characterized by** comprising the following steps:
- pressing, for example, towards the container's interior, using at least one impact body (6) [or, for example, by means of a push method as directed air] over / against / with / between / in at least one part [or, also, for example, against / with / between / in the intermediate area, partial area, entire area] of at least one perimeter side or area of two perimeter lateral sides contiguous to an end or corner; or, vice versa, the perimeter lateral side is the one that hits on / against / with / between / in the impact body (6) or, but also, in any of the cases being both the initial container and the impact body (6) in motion (6):
so that part of the fluid is displaced towards the contour of the container, increasing the pressure inside the container, thus producing a local inflation effect, obtaining:
at least one support face or additional face in the area of the container hit by the impact body, which allows the container to stand stably as well as, in turn, modify the geometrical configuration of the container, and
at least one flap or triangular body contiguous to the supporting face (or additional face) and formed by part of at least two sides of the container; and
- sealing, by means of a method such as for example a heat source [such as that of a resistor (40a, 40bfig5), laser or ultrasound], with at least one welding line for at least part of at least one face or side of at least one flap (36) / triangular body (36) (or of at least part of a flap / triangular body) of a container, as described below:
on one hand, with a welding line, for example, rectilinear (although it can also be, for example, diagonal, oblique or semicircular) in the intersection area of the flap (or triangular body) with the body of the container (for example, the supporting face or additional face). Also, just in the middle of this intersection line where the welding line (1) is {the top and bottom cross one that all initial container of at least two faces has}, optionally, it can be left unsealed, and
on the other hand, two vertical rectilinear welding lines (although they can be, for example, diagonal, oblique or semicircular), parallel and separated from each other {to the extent that at least the welding line (1) that runs in the longitudinal half and in one of the faces of the flap or triangular body is free} that converge and are joined to the cross welding line forming a 90 degree angle and that, as the case may be, may have a shape similar to a reverse capital "T" but with two vertical sticks instead of one: " 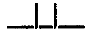 ", due to the fact that a single welding line has been made, or a shape similar to two capital "L" but facing away in opposite directions: " 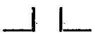 ", because two welding lines have been made, thus obtaining:
a welding line that will keep permanently stable at least one of the supporting faces or additional face of the container, and
a welding line that will permanently maintain the sealed package without pores or leaks; and
- cutting (or cauterizing), by means of a cutting method such as that of a blade (41a, 41b), in the area delimiting the Strip (37), in such a way that it is going to partially cut (or cauterize) the flap (or triangular body): by at least the two parts delimited by the two left and right welding lines that have the shape similar to two capital "L" but facing each other in opposite directions, in such a way that the cut will be made, either, bordering and very close to these welding lines, or, on the same welding line but in the outermost area; thus obtaining:
a narrower part of the flap (or triangular body) similar to that of a strip (37), projecting from the container, which corresponds to the central and longitudinal area of the flap (or triangular body) running from the intersection line between the flap and the body of the container, to the V-shaped end of the flap or triangular body.

10. Procedure for improving and enhancing other procedures for the preparation of three-dimensional containers that are manufactured with flexible materials, where the process comprises the following steps:
- generate a container body starting, for example, from the film in coil,
- sealing means, by means of at least one heat source method, and
- methods for generating at least one flap or triangular body;
wherein the procedure is **characterized by** comprising the following steps:
- sealing, by means of, for example, a heat source such as a resistor, laser or ultrasound, with at least one welding line on at least one side of at least one flap or triangular body of a container, as described below:
on one hand, with a welding line, for example, rectilinear (although it can also be, for example, diagonal, oblique or semicircular) in the intersection area of the flap (or triangular body) with the body of the container (for example, the supporting face or additional face). Also, just in the middle of this intersection line where the welding line (1) is {the top and bottom cross one that all initial container of at least two faces has}, optionally, it can be left unsealed, and
on the other hand, two vertical rectilinear welding lines (although they can be, for example, diagonal, oblique or semicircular), parallel and separated from each other {to the extent that at least the welding line [the top and bottom cross one that all initial container of at least two faces has] that runs in the longitudinal half and in one of the faces of the flap or triangular body is free} that converge and are joined to the cross welding line forming a 90 degree angle and that, as the case may be, may have a shape similar to a reverse capital "T" but with two vertical sticks instead of one: " 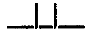 ", due to the fact that a single welding line has been made, or a shape similar to two capital" L " but facing away in opposite directions:" 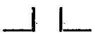 ", because two welding lines have been made, thus obtaining:
a welding line that will keep permanently stable at least one of the supporting faces or additional face of the container, and
a welding line that will permanently maintain the sealed package without pores or leaks; and
- cutting (or cauterizing), by means of a cutting method such as that of a blade (41a, 41b), in the area delimiting the Strip (37), in such a way that it is going to partially cut (or cauterize) the flap (or triangular body): by at least the two parts delimited by the two left and right welding lines that have the shape similar to two capital "L" but facing each other in opposite directions, in such a way that the cut will be made, either, bordering and very close to these welding lines, or, on the same welding line but in the outermost area; thus obtaining:
a narrower part of the flap (or triangular body) similar to that of a strip (37), projecting from the container, which corresponds to the central and longitudinal area of the flap (or triangular body) running from the intersection line between the flap and the body of the container, to the V-shaped end of the flap or triangular body.

11. Procedure according to any of claims 9 or 10 **characterized by** the sealing step can incorporate the step of:
- sealing, by means of a method such as for example a heat source such as that of a resistor or ultrasound, at least with a second welding line {it can be made, for example: parallel, perpendicular, oblique, as well as at least one or more than one can be made in different ways such as rectilinear, diagonal, oblique or semicircular} in an area above and separate from the previous welding line made in the intersection area between the flap (or triangular body) and the body of the container, so that this second welding line (2a/e, 2b/e) makes it possible for the strip (37) to fold over itself, precisely, by the intersection area of this second welding line (2a/e, 2b/e) with the rest of the strip (37), in such a way that an extension of at least part of the strip (37) outwards and towards the side of the container is also generated as an eaves.

12. Procedure according to any one of claims [9 or 10] or 11 **characterized by** comprising an additional step of:
- Folding, bending or joining, by means of a mechanical, push or directed air method, at least once over itself and towards at least one direction (for example: a, b): at least part of at least one strip (37) towards at least part of at least one other part of the same strip. Furthermore, at least part of these two parts of at least one strip (37) can be, for example: superimposed in parallel or with some degree of rotation towards one side or the other, as well as the strip (37) can be folded or bent at least once over itself, for example, rectilinearly, obliquely or semi-circularly convex / concave; thus obtaining:
at least part of at least one part of at least two parts or halves of at least one strip (37), which will be folded or bent at least once toward at least one direction and towards (or over) at least part of another part of the same or another strip (37), and
an edge, fold or bend generated at the intersection of at least two parts or halves of at least one strip (37).

13. Procedure according to claim 12 **characterized by** additionally incorporating the step of:
sealing, by means of a method such as for example a heat source such as that of a resistor or ultrasound, at least once {it can be made, for example, with at least one welding line (2a, 2b, 2ae, 2be) which may be, for example, parallel or oblique, it may also be, for example, rectilinear, oblique or semicircular concave / convex} by at least one face of at least part of at least one part of at least two parts or halves folded or bent over themselves of at least one strip (37), so as to keep permanently stable:
at least one part of at least two parts of the strip (37) folded or bent at least once over itself, obtaining:
the permanent positioning of the strip (37) towards the body of the container or towards at least one of the adjacent faces (for example: a, b). In addition, at least part of this strip (37) will also be making contact (although, in some cases, it may not be in contact) permanently with at least one of the adjacent faces of the container, and
an edge (generated at the intersection of at least two parts of the strip (37) that are folded or bent at least once over themselves) better shaped and delimited, as well as more rigid or consistent, above all, if it is sealed on at least part of at least one face of this edge (c) (or intersection area).

14. Procedure according to claims 8 or 13 **characterized by** carrying out the sealing step at least once on at least one of the faces of at least part of the generated edge (c) {at least part of the area adjacent to the edge can also be sealed with the same welding line}.
In addition, it can be, for example: parallel, perpendicular or in different degrees of inclination, as well as also at least one or more than one of the welding lines can be made in different ways, as for example: rectilinear, oblique, diagonal or semicircular.

15. Procedure according to claims 8 or 13, **characterized by** carrying out the sealing step at least once on at least one of the faces of at least part of the area contiguous (d) to the edge. In addition, it can be, for example: parallel, perpendicular or in different degrees of inclination, as well as also at least one or more than one of the welding lines can be made in different ways, as for example: rectilinear, oblique, diagonal or semicircular.

16. Procedure according to claims 14 and 15, **characterized by** carrying out the sealing step at least twice in at least two different areas:
- at least one welding line, on at least one of the faces of at least part of the edge (c), and
- at least one welding line, on at least one of the faces of at least part of the area contiguous (d) to the edge or to the welding line that precedes it.

17. Procedure according to claims [8 or 13] and 16 **characterized by** carrying out the sealing step at least twice in at least two different areas:
- at least a first welding line (2a, 2b), prior to the flap/triangular body or strip (37) is folded or bent over itself, on at least one face of at least part of the intersection area of the flap or triangular body and body of the container. In the case of Procedure 7 or 8, the configuration of the welding line is as follows: at least a first welding line (2a, 2b), before the flap or triangular body is folded or bent over itself, in at least part of at least one face of at least: all or part of the intersection area of the flap (or triangular body) with the body of the container and more, in turn, also followed by the previous two welding lines that delimit the strip on both sides [ 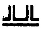 ],
- at least a second welding line (c), on at least one face of at least part of the edge.

18. Procedure according to claims [8 or 13] and 16 **characterized by** carrying out the sealing step out at least twice in at least two different areas:
- at least a first welding line (2a, 2b), prior to the flap/triangular body or strip (37) is folded or bent over itself, on at least one face of at least part of the intersection area of the flap or triangular body and body of the container. In the case of Procedure 7 or 8, the configuration of the welding line is as follows: at least a first welding line (2a, 2b), before the flap or triangular body is folded or bent over itself, in at least part of at least one face of at least: all or part of the intersection area of the flap (or triangular body) with the body of the container and more, in turn, also followed by the previous two welding lines flanking the strip (37) on both sides [ 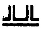 ],
- at least a second welding line (d), on at least one face of at least part of the area contiguous to the edge {generated by folding the flap/triangular body (36) or strip (37)} or the preceding welding line.

19. Procedure according to claims 16 or 17 **characterized by** additionally sealing at least once more by at least one face of at least one part of the area contiguous (e) to the intersection area of the welding line that precedes it from both the flap/triangular body (36) and the strip (37).

20. Procedure according to any of claims 16 or 17, **characterized by** additionally sealing at least once more by at least one face of at least a part of the area contiguous (d) to the contiguous area (d) to the edge of both the flap/triangular body (36) and the strip (37).

21. Procedure according to any one of claims [(1, 2 or 3) and 4, 5, 6, 7, 8, 14 to 20] or [(9 or 10) and 11 to 20] **characterized by** doing the sealing step at least four times in at least four different areas:
- at least a first welding line (2a, 2b), prior to the flap/triangular body or strip (37) is folded or bent over itself, on at least one face of at least part of the intersection area of the flap or triangular body with the body of the container. In the case of Procedure 7 or 8, the configuration of the welding line is as follows: at least a first welding line (2a, 2b), before the flap or triangular body is folded or bent over itself, in at least part of at least one face of at least: all or part of the intersection area of the flap (or triangular body) with the body of the container and more, in turn, also followed by the previous two welding lines flanking the strip (37) on both sides [ 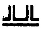 ],
- at least a second welding line (e), prior to the flap/triangular body or strip (37) is folded or bent over itself, on at least one face of at least part of the contiguous area and separate (preferably, parallel) of the welding line made in the intersection area of the flap (triangular body) with the body of the container,
- at least a third welding line (c), on at least part of at least one of the faces of at least part of the edge, and
- at least a fourth welding line, on at least one of the faces of at least part of the area adjacent to the edge (d).

22. Procedure according to claim 21, **characterized by** carrying out the sealing step at least five times in at least five different areas, so that additionally it is going to be added:
- at least a fifth welding line, on at least one face of at least part of the contiguous area and separated from the welding line made in the area adjacent to the edge (d).

23. Procedure according to any of claims [(1, 2 or 3) and 4 to 8] or [(9 or 10) and 11, 12] **characterized by** additionally incorporating the step of:
adhering or gluing, by means of an adhesive or gluing method as a contact glue or a heat strip, at least once on at least one side of at least part of at least a part of at least one flap/triangular body (36) or strip (37) on at least part of at least another part of the same flap/triangular body (36) or strip (37), in which both parts are folded or bent at least once over each other.

24. Procedure according to any one of claims [(1, 2 or 3) and 4, 5, 6, 7, 8, 14 to 22], [(9 or 10) and 11 to 22] or 23 **characterized by** comprising, optionally, additional steps of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- crush, the loose flap/triangular body (36) or strip (37) over the body of the container (because it is already next to the body of the container), by means of a push method, and
- adhere or glue, at least part of this loose flap/triangular body (36) or strip (37) to the body of the container, by means of an adhesive method such as for example contact glue.

25. Procedure according to any one of claims [(1, 2 or 3) and 4, 5, 6, 7, 8, 14 to 22], [(9 or 10) and 11 to 22] or 23 **characterized by** comprising, optionally, an additional step of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- seal, by means of a heat source such as for example a resistor or ultrasound, at least once by at least part of at least one of the loose faces of the flap/triangular body (36) or strip (37).

26. Procedure according to any one of claims [(1, 2 or 3) and 4, 5, 6, 7, 8, 14 to 22], [(9 or 10) and 11 to 22] or 23 **characterized by** comprising, optionally, additional steps of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- seal, by means of a heat source such as for example a resistor or ultrasound, at least once by at least part of at least one of the loose faces of the flap/triangular body (36) or strip (37).
- crush, the loose flap/triangular body (36) or strip (37) over the body of the container (because it is already next to the body of the container), by means of a push method, and
- glue, at least part of this loose flap/triangular body (36) or strip (37) to the body of the container, by means of an adhesion method such as for example contact glue.

27. Procedure according to any one of claims [(1, 2 or 3) and 4, 5, 6, 7, 8, 14 to 22], [(9 or 10) and 11 to 22] or 23 **characterized by** comprising, optionally, an additional step of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- cut/cauterize (46fig15b), by means of a cutting method such as that of a blade, totally or partially at least part of the loose or that is loose flap/triangular body (36) or strip (37) (36afig15a).

28. Procedure according to any one of claims [(1, 2 or 3) and 4, 5, 6, 7, 8, 14 to 22], [(9 or 10) and 11 to 22] or 23 **characterized by** comprising, optionally, additional steps of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- seal (2/efig15c), by means of a heat source such as for example a resistor or ultrasound, at least once by at least part of at least one of the loose faces of the flap/triangular body (36) or strip (37),
- cut/cauterize (46fig15b), by means of a cutting method such as that of a blade, totally or partially at least part of the loose flap/triangular body (36) or strip (37).

29. Procedure according to any one of claims [(1, 2 or 3) and 4, 5, 6, 7, 8, 14 to 22], [(9 or 10) and 11 to 22] or 23 **characterized by** comprising, optionally, an additional step of manipulating the flap/triangular body (36) or strip (37) that is loose or will be loose {from the last welding line made to the flap/triangular body (36) or strip (37) up to the peak or tip of the flap/triangular body (36) or strip (37), by not being folded/bent or/and sealed together with at least another part of the same flap}, as follows:
- fold or bend at least once over itself towards at least one direction and parallel or in different degrees of rotation: at least part of at least two parts of the loose flap/triangular body (36) or strip (37).

30. Procedure according to claim 28 **characterized by** comprising, optionally, an additional step of:
- sealing (2/efig15c), by means of a heat source such as for example a resistor or ultrasound, at least once by at least part of at least one of the loose faces of the flap/triangular body (36) or strip (37) that is folded or bent at least once over itself.

31. Procedure according to any one of claims 28 or 29, **characterized by** comprising, optionally, an additional step of:
- crushing, the flap/triangular body (36) or strip (37) that is folded and bent at least once over itself: over the body of the container or over at least one side of the body of the container, by means of a push method, and
- adhering or gluing to the body of the container or at least one side of the body of the container, by means of an adhesive or gluing method as a contact glue or a heat strip, at least once by at least one face of at least a part of the flap/triangular body (36) or strip (37) that is folded or bent at least once over itself.
Optionally, prior to the flap/triangular body (36) or strip (37) being folded or bent at least once over itself: it has been possible to seal at least once by at least one face of at least part of the flap/triangular body (36) or strip (37).

32. Procedure according to any one of the claims [(1, 2 or 3) and 4, 5, 6, 7, 8, 14], [(1, 2 or 3) and 4, 5, 6, 7, 8, 14 to 22] or 23 **characterized by** that at least part of the flap/triangular body (36) or strip (37) can be torn and detached by the edge {generated at the intersection of at least two parts of the flap/triangular body (36) or strip (37) that are folded or bent at least once over themselves}, provided that this edge is sealed by:
in a first case, at least once by at least one side of the edge of the flap/triangular body (36) or strip (37) with an edge welding line (c), although when the tear is optimized more easy and comfortable is when:
in a second case, it has been sealed twice with an edge welding line (c) on both sides of the flap/triangular body (36) or strip (37), or
in a third case, it has been sealed at least twice but with at least one welding line on at least one side of the intersection area of the flap with the body of the container (2a, 2b) or/and in the contiguous area and higher than the previous one (2ae, 2be) and with at least one other welding line by at least one face of the edge (c) of the flap/triangular body (36) or strip (37); thus obtaining:
in the first two cases, an opening along the edge {generated at the intersection of at least two parts of the flap/triangular body (36) or strip (37) which are folded or bent at least once over themselves} that generates an opening through which the content packaged inside may exit and,
in the third case, a welding line (2a, 2b, 2ae, 2be) that later has to be opened {when pulling in opposite directions from the two sides adjacent to it}, in order to generate an opening from where the content packaged inside can exit.

33. Procedure in accordance with claim 28, **characterized by** the generation of at least one cover (48) in at least one of the faces of any of the sides of the invention, in two different manners:
tearing at least two triangular shapes / covers (36) or strips (37) and then, opening by the edge {generated in the intersection of at least two parts of the strip (37) which are folded at least once over themselves} by pulling in opposite directions from both of its contiguous sides, and
opening the edge welding line (3) {next to the previous two open edges}, when pulling in contrary directions from both sides next to it; or also
tearing at least one triangular shape / cover (36) or strip (37) and then opening by the edge {generated in the intersection of at least two parts of the strip (37) which are folded at least once over each other} when pulling in opposite directions from both sides next to it, and
opening at least two lines of edge welding (3) {next to the previous open edge} when pulling in opposite directions from both of the sides next to it; obtaining:
in both cases, a cover (48) which can be opened or closed, or also, completely pulled off when pulling it.

34. Procedure according with whichever of the claims [(1, 2 or 3) and 4, 5, 6, 7, 8, 14 to 22] or [(9 or 10) and 11 to 22] **characterized by** the inclusion of a system so that the cover / triangular shape (36) or strip (37) folds at least to one side and afterwards, it folds at least once over itself: by means of the division in at least two pieces or units, the body of impact (6) or the zipper (8) {in case of a triple or quadruple set, the body of impact (6) will be divided in at least three units or pieces because it has on both sides a zipper (8)}, in which at least one of the pieces or units of the part above is mobile {actioned by means of, for example, a linear cylinder or a linear transaction unit which can also be fixed to the lateral faces or the base side in which the covers or strips don't get into contact with the others} in such manner that at least one of these units will be able to move, for example, sideways, or up and down, to therefore fold itself at least once with the cover / triangular shape (36) or strip (37) through a push method, as, for example, a stylet (44), rotating rod (45) or guillotine (moving up to down) which will be fixed in the face base or in the lateral faces (which enter into contact with the covers / triangular shapes or strips) of the body of impact (6) or the zipper (8).
Next here, a way to use the device in six steps:
- First the impact body and the zipper will get together {when actioning at least one of them, but, most importantly, the zipper} so as to, for one side, block or catch at least and mostly, part of two faces of the part below the cover / triangular body or stripe, and on the other hand, optionally, sealing at least once with a welding line (it may be, for example: straight line, diagonal, semicircular concave/convex, zig-zag or in two or more directions) {through a heat source as, for example, a resistance or a strip which might be fixated in the impact body as much as in the zipper for closing} in the intersection zone of the cover / triangular body and the container body (2a, 2b) or contiguous zone (e) to the previous welding line.
- On the second step, when trying to attach the cover and strip to the outer face, the piece or unit of the upper part of the zipper jaw will move towards the outside leaving a space between the two pieces above.
- On the third step, the unit of the part above the impact body will move towards the outside, so as to then fold the cover / triangular shape (36) or strip (37) when pushing the desired part of these and, which, in this case, will be the zone of intersection {of the welding line undertaken in the intersection zone of the flap and the container's body} and the rest of the flap or strip.
- Fourth, the piece or unit on the lower part of the zipper jaw will come back to the starting point moving towards the outside, so as to then liberate some space so that the flap, cover or triangular body (36) or strip (37), when folded toward the container's side face, through a push method, as, for example, a stylet (44), a rotating rod (45) or a guillotine (moving up to down), installed or fixated in the lower or lateral face of the piece or unit of the upper part of the impact body (6) or also, depending on the case, in the closing zipper jaw (8).
- Fifth, the piece or unit of the lower part of the zipper jaw (or, depending on the case, the impact body) it is actioned to seal (2a, 2b, 2ae, 2be) at least once with a welding line (they may be, for example: straight, diagonal, concave semi circular/convex, or in zig zag in two or more directions) the flap / triangular shape (36) or stripe (37) which is folded upon itself, for which the stylet (44) or rotating rod (45), in a synchronized manner, will be inserted to the impact body or return to the starting point to permit, this way, that it contacts the lower part of the impact body. At the same time, the rotating rod (45), having a greater breadth than the flap or strip folded upon itself: it is not necessary that it have to return to the starting point since it will not block the path of the piece or unit of the piece below the closing zipper jaw.
On the other hand, the unit on the part above the impact body can be maintained with a protrusion towards the outside, which eases the fixation of the flap or strip folded at least once above itself.
- In the sixth step, both the piece or unit of the piece above the impact body, like the piece or the unit of the part below the closing zipper jaw, will return to the departure point.

35. Procedure according to whichever among claims 1, 2, or 9 **characterized by** the pressing stage comprising the application of pressures simultaneously through impact bodies in two or more different directions on any of its sides: generating therefore a cavity in which the first package, adapting to it, will acquire the same shape.

36. Procedure according to whichever among claims 1, 2, or 9, **characterized by** the impact bodies (6) comprehending a double set of jaws (6, 8) which are positioned in front of each other during the pressing stage, on at least one part of the contiguous perimeter sides, and which move, defining between the perimeter sides, a flap or triangular shape.

37. Procedure to transform a flexible container, according to whichever among claims 1 or 9, where the procedure is **characterized by** the pressing stage being undertaken with an inclination of, preferably, 45 degrees, or also pressing, in a parallel (or approximately) and continuously (when turning the body of impact, preferably 45 degrees) pressing with an inclination of preferably 45 degrees: over, at least, part, or totally, on the left and/or right sides of one same perimeter side of the initial container, or viceversa, obtaining therefore:
at least one supporting side or additional sade and at least one flap or triangular shape of a peak.
Afterwards, at least one part of both sides of the flap / triangular shape in peak shape are pressed, using at least a double set of one or two jaws (6, 8) and / or one or two impact bodies (6), therefore defining the flap / triangular shape
Lastly, the flap will be manipulated.

38. Procedure according to whichever from claims 1, 2, 9, 36 or 37, **characterized by** the pressing stage being undertaken while directing the container to the impact body, and, according to an operation selected either manually or using automated mechanical means, as, for example, a robot claw or a mechanical arm.

39. Procedure according to whichever from claims 1, 2, 9, 35, 36, 37 or 38, **characterized by** the incorporation, previous to the pressing with the impact body (6), an additional step to hold a container to block and / or grab it exerting pressure on the fluid contained within, toward the contour of the container in a zone distant to the flap zone, where the impact body enters into action (6); and an additional step for releasing the container (or releasing but still exerting pressure on the container, so as to keep it within hold), when said impact bodies are applied, in such a manner that it renders impossible to inflate the container so that it may acquire the shape of a three-dimensional geometric body.

40. Procedure according with whichever from claims 1, 2, 9, 35, 36, 37 or 38 which is characterized with it comprising previously the stage of pressing in which at least one flap / triangular shape or strip is generated (37):
The moving of solids (such as: lettuce, vegetables, cereals or dry fruits), granulated or pulverized {canned, and located in the corners or contiguous zones to the vortexes of an initial container} directed to the internal space, preferably, towards the center and middle of the initial container (as, for example, in a rectangle or square-shaped two-faced container, with four vortexes or corners), so as to ease the formation and sealing of the flap / triangular piece or strip (37) when liberating this zone next to the vortex or corner of the beginning container where a flap or triangular shape or strip (37) will be generated.
The procedure can be explained in two simple steps:
- Pressing, using at least one impact body or jaw, impulsed by a mechanical way such as, for example, one lineal cylinder, directed to the interior area of the container with a preferably oblique track of 45 degrees (or approximately that much) from the extreme of the vortex to the half and/or center of the initial container [or also, sine in parallel (or approximately) in at least part of at least one perimeter lateral side next to the vortex, preferably, in the nearest zone to this vortex]; in such a way that the content in the interior, especially the one located precisely in the zone or lateral sides next to the vortex in which a flap or triangular shaped body is going to be generated: it will be displaced or introduced inside preferably, to the middle and center of the container, and
- Afterwards, at least this impact body or jaw (or impact bodies or jaws) introduced to the inside of the container, returns or moves toward the initial starting point, so as to obtain ann area free of, especially, solids, next to the vortex / corner or also to the lateral contiguous sides to the vortex in which a flap / triangular body or stripe is going to be generated (37).
The vortex or corner returns to its initial status by means of:
Pressing the container with holding jaws (3) to direct at least one type of flow like air or liquid toward the vortex area / corner, so as to inflate it, or by
a set of at least two jaws {impulsed by means of a mechanical mode such as, for example, a claw-cylinder and/or linear cylinders} which, throughout the entire Procedure of both previous steps will: grab and hold between both jaws, at least one part of the vortex or at least a part of the sides or lateral sides next to the vortex, so as to, once the vortex/corner is introduced in the interior area, when these claws return to their main departure point, for example, the claaw will also take or drag with it, the vortex/corner to the main starter position.

41. Procedure for perfecting and improving a flexible container, providing this container with:
at least two faces limiting an internal space, which, buy themselves, are limited by an external perimeter surrounding defined by at least one perimeter side, and/or
at least one line of sealing or folding which closes the container partially or totally, in which the container holds at least one type of fluid and optionally or complementary may also hold within at least one type of solids, granulates or pulverized materials,
at least one type of wrapping with a flexible material between 20 and 45 microns in thickness (or approximate to that amount) and of they polypropylene, bi-oriented polypropylene or mono-oriented polypropylene, and single- or multi-layer characteristics is used,
and generation means of at least one flap / triangular body, or also one strip (37) {generated when sealing and cutting through the flap or triangular body} which will be manipulated,
where the procedure is **characterized by** its including sealing (36a fig.14), by means of a source of heat such as, for example, a resistance or ultrasounds, with at least two lines of welding through at least one of the faces of at least one flap (or triangular shape) or strip (37) from a container, such as described next:
on one side, with a welding line (straight line, semi circular, oblique, diagonal, zig-zag, in two or more directions, etcetera), in the intersection area of the flap (or triangular shape) or strip (37) with the body of the container, and
on the other hand, at least another more line of welding (straight line, semi circular, oblique, diagonal, zig-zag, in two or more directions, etc.), separated from the previous one between at least 0.1 and 5 milimeters (or approximately that much), {it is more optimized between 0.1 and 2 milimeters} and preferably, in a parallel fashion, obtaining:
a line of welding (from the intersection area) which will keep permanently stable, at least one of the support sides or the additional face of the container, and
a fold and an arching in the zone where lines of welding for the flap (or triangular shape) or strip (37) will be undertaken towards at least one contiguous face of the container.

42. Procedure of perfecting and improving so as to transform a flexible container, having that container with:
at least two faces limiting an internal space, which, buy themselves, are limited by an external perimeter surrounding defined by at least one perimeter side, and/or
at least one line of sealing or folding which closes the container partially or totally, in which the container holds at least one type of fluid and optionally or complementary may also hold within at least one type of solids, granulates or pulverized materials,
there is the usage of at least one wrapping with flexible material between 10 to 45 microns of thickness (or approximately) and of the same type, as, for example, polypropylene, bi-oriented polypropylene, or single-orientation, single-layer or multiple-layer polypropylene in, for example, 2 layers, and
means of generation of at least one flap / triangular piece and/or also a strip (37) {generated when sealing and cutting the flap or triangular piece} which will be handled, where the procedure is **characterized by** what it comprises: sealing, through a source of heat, as, for example, a resistance or ultrasounds, with at least one welding line in the entirety or at least 3/4 (approximately) of the surface of at least one of the faces of at least one flap (or triangular shape) or stripe (37) obtaining:
one welding line which will keep at least one of the support faces or additional sides of the container stable, and
one arching of the flap (or triangular piece) or stripe (37) toward the contiguous lateral side of the container.

43. A device, in machines which transform initial flexible containers in three-dimensional containers, being those flexible containers initially endowed with:
at least two sides which limit an interior area, and which, at the same time, are limited by a perimeter external surrounding defined by at least one perimeter side, and
at least one line of sealing or folding which closes the container,
in which the container holds at least one fluid and, optionally or complementarily, may hold one solid or different types of solids, granulates or powdered; as can also be,
in filling and sealing machines of flexible containers, which comprises:
- means of generation of container bodies starting from coiled film,
- at least one device with jaws or clamps or a set of two parallel jaws, claws or clamps with which the initial container is sealed and cut, sideways and horizontally (above and below) in at least two sides or faces,
- at least one device that generates at least one flap (or triangular shape) or strip (generated by sealing and cutting the flap / triangular shape) in a flexible container;
where the device in whichever of the machines is characterized for containing:
at least one device, through which there is at least one way of folding:
destined to put together at least once, towards at least one direction, at least one part of one flap / triangular shape (36) or strip (37) over at least part of, at least, another part of the same flap / triangular shape (36) or strip (37), in which besides, they can be, for example: superposed in parallel or with some degree of rotation towards one side or the other, alongside with also being able to fold at least once, the flap / triangular shape (36) or strip (37) over itself, for example, in a straight line, an oblique one, or semicircular convex / concave manner.

44. A device, according to claim 43 which is characterized for its containing of at least one method of adhesion or fixation to keep united at least one part of the flap / triangular shape (36) or strip (38) over at least part of the other part of the same flap / triangular shape (36) or strip (37) as, for example:
- at least one welding system, through a heat source, to seal at least once, the side of at least part of the flap / triangular shape (36) or strip (38) which is folded at least once, over at least part of another part of the same flap / triangular shape (36) or strip (38).

45. A device according to claims 43 and 44 which is **characterized by** it containing in at least one of the lateral sides or faces {which will enter into contact with the flaps/triangular shapes (36) or stripes (37), when these are generated} of an impact body (6) or/and of a zipper jaw (8); at least one hollow-slot (42) and one cavity {laid out, every time, for one single flap / triangular shape (36) or strip (37)} destined to introduce, at least, two folded parts at least once over themselves in the flap (36) or strip (37) ; alongside with, pushing at least part of the flap (36) or strip (37) toward the cavity and crossing the hollow-slot (42) so as to introduce at least two folded parts at least once above themselves in the flap (36) or in the strip (37): we also have at least one stylet (46) in a horizontal or diagonal position {activated through a mode of movement such as, for example, that of at least one linear cylinder (9) or rotating one, which, besides, can be in part or in full located or fixated in or out of the body of impact (6) alongside with the zipper jaw (8)}, which will be fixated in or out in at least one of the lateral sides or faces {which will enter into contact with the flaps / triangular shapes (36) or strips (37), when these are generated} in, precisely, the impact body (6) or/and the zipper jaw (8) which does not contain or is not fixated in the slot-hollow and the cavity. At the same time, there is at least one system of adhesion or fixation as for example, that of at least one welding system using a source of heat as, for example, a resistance or ultrasounds, fixated within the cavity: destined to seal {activated with a means of displacement as that of at least one lineal cylinder (9) or rotative, and from which also, a part or the entirety of the cylinder may be located or fixated outside or inside the impact body (6) or the zipper jaw (8)} at least one, two or more times in at least one of the sides of at least part of the edge (c) or/and the zone next to the edge (d) of the flap/triangular piece (36) or strip (37) which is folded at least in part of two parts over itself within the cavity.
On the other hand, optionally, there can be at least one, two or more systems of adhesion and fixation such as, for example, at least one welding system (placed, every time, for a flap / triangular figure (36) or strip (37)} using a source of heat, such as, for example, a resistance, laser or ultrasound, which could be fixated in at least one of the lateral sides (which will enter in contact with at least one of the sides of the flap / triangular figure (36) or stripe (37) when these are generated} of the impact body (6) or/and the zipper jaw (8): destined to seal (2a, 2b, 2ae, 2be) at least one, two or more times by at least one face of the flap / triangular figure (36) or strip (37) before the flap / triangular figure (36) or the strip (37) is folded at least once upon itself.

46. A device according to claim 45 which is characterized for the hollow-slot being able to have a closing and opening system such as, for example, a mobile trapdoor (43) which opens and closes alternatively {activated through a displacement mode such as, for example, at least one linear or rotation cylinder (16)}, fixated in at least one of the lateral sides of the impact body (6) or/and the zipper jaw (8): destined to open and close so as to ease, on one side, the expulsion towards the body of packaged content in the container which could have remained between both faces of the flap (or triangular body) in the moment of having been generated, and, on the other hand, to serve as supporting surface for the welding system such as, for example, a resistance or ultrasounds, so that in this way, it can be sealed in the lower part of the flap (or triangular shape) before being folded at least once over itself.

47. A device in concordance with claim 45 which is characterized for the stylet having the shape of a plank or platform (46) and besides, when not in action, can be fixated outside or inside the body of impact or/and the zipper jaw (8), and it can also be placed, for example, in a horizontal or oblique position regarding the lateral face or side in which it is placed, to be able to move forward horizontally or diagonally, respectively.

48. A device in accordance with claims 43 and 44 which is characterized for it comprising at least one, two or more systems of adhesion or fixation as for example, at least one welding system {disposed, each time, for one flap/triangular shape (36) or strip (37)}, through a heat source, as, for example, a resistance, lasers or ultrasounds, which may be fixated in at least one of the lateral faces {which shall enter in contact with at least one of the faces of the flap/triangular shapes or strip (37), when this is generated} of the body of impact (6) or/and the zipper jaw (8) destined to seal,
on one side, optionally and before the flap / triangular shape (36) or strip (37) is folded at least once upon itself: at least once, twice or more times (2a, 2b, 2ae, 2be) by at least one side of the flap/triangular shape (36) or strip (37), in such a manner that it would ease, afterwards, that the flap/triangular shape (36) or strip (37) folds itself, precisely by at least one, whichever from the welding lines (2a, 2b, 2ae, 2be) which have been tried to be undertaken, and,
on the other hand, after the flap/triangular shape (36) or strip (37) is folded at least once upon itself, at least seal one, two or more times (2ac, 2bc, 2ad, 2bd) by at least one face of the flap/triangular shape (36) or strip (37) in at least one part of the edge (c) {generated when folding at least once the flap/triangular shape (36) or strip (37)} or/and the contiguous and separated zone (d) of this edge (c), in such manner that it will make the flap/triangular shape (36) or strip (37) permanently stay folded at least once upon itself; alongside with
in at least one of the lateral sides {which will enter into contact with the flaps/triangular shapes (36) or strips (37), when these are generated} of the impact body (6) or/and the zipper jaw (8): there is a kind of push system disposed thereby, such as, for example, at least a stylet (44, 45fig4) {activated by a motion mode such as, for example, at least one linear cylinder (9) or rotating cylinder (16fig4)} disposed, every time, for one single flap/triangular shape (36) or strip (37) and which, besides, will be positioned from within {without outstanding towards the outside, in order to allow for the impact body (6) and the zipper jaw (8) to come together} when the stylet (44, 45) is not activated: with the goal of pushing downwards at least one part of the flap/triangular shape (36) or strip (37), and that besides, part or the entirety of the cylinder can be placed or fixated on the outside or the inside of both the impact body (6) as well as the zipper jaw (8)} so as to make them fold upon themselves: at least one part of the flap/triangular body (36) or strip (37) over at least part of another part of the same flap/triangular shape (36) or strip (37).
On the other hand, in case of not having sealed at least once the flap/triangular shape (36) or strip (37), before whichever of these are folded at least once upon themselves, there can also be fixations on at least one of the lateral faces {which will enter in contact with at least one of the faces of the flaps/triangular shapes or strips (37), when generated} from the impact body (6) or/and the zipper jaw (8): at least one mode of blocking system as, for example, a hook {actioned through a movement mode as, for example, a lineal or rotating cylinder}, so as to catch it in the height required - before folding - at least part of the flap/triangular shape (36) or strip (37): destined to facilitate and make possible that the flap/triangular shape (36) and strip (37) can later be folded precisely along the line or zone in which at least one hook is holding or blocking.

49. A device in accordance with claim 48 which is **characterized by** the stylet having the shape of at least one bar (44) and, besides, when not actioned, is fixated within the impact body and/or the one of the zipper jaw (8) as well as how it can also be placed (besides being in an oblique or diagonal position, to move downwards or sideways) in a parallel or perpendicular position regarding the lateral side in which it is located, besides being oblique or diagonal.

50. A device in accordance with claim 48 which is **characterized by** the stylet having the shape of at least one rotating rod (45) folded in a 90 degree angle, and which, besides, when not actioned, the part of the rod which is horizontal and parallel regarding the lateral face: is positioned within the impact body and/or the zipper jaw (8); besides, this rod (45), is more optimized when fixated to the stem of a rotating cylinder (45), so as to then turn toward one of the sides between 90 and 180 degrees; in such a manner that if, for example, it turns 180 degrees (approximately) downwards: the zipper jaw (8) will be actionable again to get near the impact body (6) without having to turn 180 degrees (approximately) the rotating rod upwards (45).

51. A device according to claims 43 and 44 which is characterized for it comprising a system for the flap/triangular shape or strip folds towards at least one side, and then it can fold upon itself at least once: by dividing in at least two pieces or units of the impact body (6) and/or the zipper claw (8) {in case of a triple or quadruple set, the body of impact (6) is going to be divided in at least three units or pieces because it has on two of its sides a zipper claw (8)}, in which at least one of the pieces or units of the upper part is mobile and independent of the other {activated in a way such as, for example, a linear cylinder or unit of linear displacement which can also be fixated to the lateral faces or sides, or the base side in which the flap or strip does not enter into contact with them}, in such a way that at least one of these units is going to be able to move, for example, sideways or up and down: destined, in first instance, to fold towards at least one side of the flap/triangular shape (36) or strip (37) and, in a second instance, fold the flap/triangular shape (36) or strip (37) at least once upon itself {through a push method such as, for example, a stylet (44), rotating rod (45) or guillotine (moving up to down) fixed in at least one of the sides (it is most optimized in the base face or side, or the lateral side which enters in contact with the flaps / triangular shapes (36) or strips (37) of the impact body (6) and/or the zipper jaw (8)}; alongside with also sealing {previously and/or afterwards, the fold upon itself from the flap (36) or strip (37)} at least oce with a welding line (they may be, for example: straight line, diagonal, oblique, semicircular, concave or convex, in zig-zag or in two or more directions), at least one part of the flap (36) or strip (37) that has not been yet folded, or folded upon itself.

52. A Device in concordance with claims 43 to 48 which is characterized for its comprising a device, optionally from sealing or sealing and cut of flap / triangular shape (36) or strip (37) which stays loose once it has been folded at least once upon itself, endowed with:
- at least one system of adhesion and fixation as, for example, contact tails or at least one system of welding (through a heat source such as, for example, a resistance, to seal at least once, with at least one welding line, at least part of at least one face or side of the flap/triangular shape (36) or loose strip (37)} or/and a system of cut/cauterization {by means of a cutting mode such as a knife to totally cut it or at least in part, the flap/triangular shape (36) or strip (37) which may be loose}, disposed for the flap/triangular shape (36) or strip (37) that ends up loose after having been folded at least once over itself. Besides, they may be fixed, for example: in at least one of the side faces {which will enter in contact with at least one of the faces of the flap/triangular shapes or strip (37), when the latter is generated} or in the cavity (42) of both the impact body (6) or/and a zipper jaw (8).

53. Machine to transform flexible initial containers into three-dimensional containers, being ssaid flexible initial container endowed with:
at least two sides which limit an interior area, and which, at the same time, are limited by a perimeter external surrounding defined by at least one perimeter side, and
at least one line of sealing or folding which closes the container,
in which the container holds at least one fluid and optionally or complementarily may hold one solid or solids, granulate or powdered, and
at least one support, at least one sensor destined to detect the initial container or the container initially introduced in the machine, and
at least one mobile impact body (6) [activated by linear movement means (9) or/and rotating] or/and immobile (figure 2): with the goal to press in one, two or more lateral directions of the perimeter external contour, in at least one part of at least one or more lateral sides in the perimeter to generate at least one flap/triangular shape or strip (37) and,
at least one sealing jaw or clamp (8) or sealing and cut (8) system, activated by linear movement methods (9) or/and rotating ones, with the ends of sealing or sealing and cutting, with a cut method such as the use of a blade, on one or more of the sides and/or in art of the external perimeter or lateral contour, of at least part of at least one of said flaps (or triangular shape) or strip (37) in which the sealing claws (8) have at least one mode of heat source, to keep the support face or additional generated face or side permanently,
where the machine is characterized for its having
- at least one device destined to collect, via folding, at least once upon itself, toward at least one part of a flap/triangular shape (36) or strip (37) over at least part of at least another part of the same flap/triangular shape (36) or strip (37) in which these may all be, as for example: superposed in parallel or with some degree of rotation toward either side, alongside with, also, the capacity of folding at least once the flap/triangular shape or strip (37) upon itself, for example, in a straight line, oblique line or semicircular convex/concave line, and
- at least one, two or more systems of attachment or fixation as for example, that of at least one system of welding {disposed, every time, for one flap/triangular shape (36) or strip (37)}, by means of a source of heat as for example, that of a resistance, laser or ultrasounds, which may be fixed, for example, in at least one of the lateral faces {which will enter in contact with at least one of the faces of the cover/triangular shapes or strips (37), when generated} on the impact body (6) or/and a zipper jaw (8): with the goals of sealing,
on one side, optionally and before the flap / triangular shape (36) or strip (37) is folded at least once upon itself: at least once, twice or more times (2a, 2b, 2ae, 2be) by at least one side of the flap/triangular shape (36) or strip (37), in such a manner that it would ease, afterwards, that the flap/triangular shape (36) or strip (37) folds itself, precisely by at least one, whichever from the welding lines (2a, 2b, 2ae, 2be) which have been tried to be undertaken, and,
on the other hand, after the flap/triangular shape (36) or strip (37) is folded at least once upon itself, at least sealing one, two or more times (2ac, 2bc, 2ad, 2bd) by at least one face of the flap/triangular shape (36) or strip (37) in at least part of the edge (c) {generated when folding at least once the flap/triangular shape (36) or strip (37)} or/and the contiguous area (d) of this edge (c), in such manner that it will make the flap/triangular shape (36) or the strip (37) to maintain itself in place permanently folded at least once upon itself.

54. Perfecting and improving the machines of flexible containers which, in their inside, hold at least one liquid and optionally or complementarily may hold a solid or solids, granulate or pulverized, which comprises:
- Means of generation of container bodies,
- At least one clamp device or set of two parallel clamps or jaws with which flexible containers are sealed and cut transversally and horizontally (above and below), and
- Generation means for at least one flap/triangular shape or also a strip (37) {generated when sealing and cutting the flap or triangular shape} to be manipulated,
where the machine is **characterized by** its comprising:
- at least one device destined to assemble, through a folding method, at least once upon itself, towards at least one direction (for example: a, b) at least one part of the flap/triangular shape (36) or strip (37) over at least part of the other part of the same flap/triangular piece (36) or strip (37), in which, besides, these may be, for example: superposed in parallel or with some degree of rotation, towards one side or the other, alongside with being able to fold at least once the flap/triangular shape (36) or strip (37) over itself, for example, in a straight line, oblique line, or semicircular convex/concave line, and
- at least one, two or more systems of adhesion or fixation as for example, that of at least one system of welding {disposed, every time, for a flap/triangular shape (36) or strip (37)}, by means of a source of heat such as, for example, a resistance, laser or ultrasounds, which may be fixated, for example, in at least one of the lateral faces {those which will enter in contact with at least one of the faces of the flap/triangular shapes or strips (37), when these are generated} of a body of impact (6) and/or a zipper jaw (8): destined to adhere or seal,
on one side, optionally and before the flap / triangular shape (36) or strip (37) is folded at least once upon itself: at least once, twice or more times (2a, 2b, 2ae, 2be) by at least one side of the flap/triangular shape (36) or strip (37), in such a manner that it would ease, afterwards, that the flap/triangular shape (36) or strip (37) folds itself, precisely by at least one, whichever from the welding lines (2a, 2b, 2ae, 2be) which have been tried to be undertaken, and,
on the other hand, after the flap/triangular shape (36) or strip (37) is folded at least once upon itself, at least sealing one, two or more times (2ac, 2bc, 2ad, 2bd) by at least one face of the flap/triangular shape (36) or strip (37) in at least part of the edge (c) {generated when folding at least once the flap/triangular shape (36) or strip (37)} or/and the contiguous area (d) of this edge (c), in such manner that it will make the flap/triangular shape (36) or the strip (37) to maintain itself in place permanently folded at least once upon itself.

55. Machine in accordance with whichever among claims 53 or 54, **characterized by** a device of folding at least once over itself of the flap/triangular shape (36) or strip (37) of a flexible container, endowed with:
at least one hollow-slot (42) and a cavity in at least one of the lateral sides of the impact body (6) and/or the zipper jaw (8): destined to introduce at least two pieces, folded upon themselves at least once in the flap (36) or strip (37), alongside with the hollow-slot, through a closure that opens and closes, it can have a trapdoor fixated (43) {activated by a mode of displacement such as, at least, one linear or rotating cylinder (16)}, and
at least one stylet (46) {activated by means of a movement such as, at least, a linear cylinder (9) or rotating cylinder, in which besides of part or an entirety of the cylinder may be located or fixated outside or inside either the body of impact (6) or the zipper jaw (8)}: destined to push at least part of the flap (36) or strip (37) toward the cavity and crossing the hollow-slot (42) so as to at least introduce two folded pieces at least once over themselves in the flap (36) or strip (37), which will be fixed by, for example, in a horizontal or diagonal position and within or outside of at least one of the lateral faces of the body of impact (6) and/or the zipper jaw (8) which may be absent or fixing the hollow-slot and the cavity.

56. Machine conforming to whichever of claims 53 or 54, **characterized by** it comprising a device for folding at least at once upon itself in the flap/triangular shape (36) or strip (37) of a flexible container, endowed with:
at least one, two or more systems of adhesion and fixation such as, for example, those of at least one welding system: destined to adhere or seal, optionally and before the flap/triangular shape (36) or strip (37) be it folded at least once over itself: at least one, two or more times (2a, 2b, 2ae, 2be) for at least one face of the flap/triangular shape (36) or strip (37) in such a way that it will afterwards make possible that the flap/triangular shape (36) or strip (37) is folded, precisely, for at least one of whichever from the welding lines (2a, 2b, 2ae, 2be) which have been undertaken,
at least one way of pushing in a system such as, for example, a stylet (44) or turning rod (45) {activated by a displacement mode such as for example, that of at least one linear cylinder (9) or/and spinning cylinder (16)} fixated in one of the lateral faces of the body of impact (6) or/and the zipper claw (8) which is positioned from within {without outstanding towards the outside, to allow the impact body (6) and the closing jaw (8) to be put together} when not activated: destined to push down at least part of the flap/triangular shape (36) or strip (37) so as to have folded upon itself at least one part of the flap/triangular shape (36) or strip (37) over at least part of another part of the same flap/triangular shape (36) or strip (37), and
at least one system of adhesion and fixation such as for example, that of at least one welding system, once the flap/triangular shape (36) or strip (37) has been folded at least once upon itself, so as to thereby seal or attach at lesat one, two or more times (2ac, 2bc, 2ad, 2bd) by at least one face of the flap/triangular shape (36) or strip (37) in at least part of the edge (c) {generated when folding at least once the fold/triangular shsape (36) or strip (37)} or/and the zone next to and separate (d) of this edge (c), in such a manner that it will make the flap/triangular shape (36) or strip (37) permanently stuck or folded at least once over itself.

57. Machine in concordance with either of claims 53 or 54, characterized for it having a system for the flap/triangular shape or strip of a flexible container is folded at least towards one side and afterwards, it folds at least one time over itself, endowed with:
- at least one, two or more systems of adhesion and fixation such as for example, one welding system: destined to attach or seal, optionally and before the flap/triangular shape (36) or strip (37) is folded at least once upon itself: at least one, two or more times (2a, 2b, 2ae, 2be) by at least one face of the flap/triangular body (36) or strip (37) in such a way that it will afterwards facilitate that the flap/triangular shape (36) or strip (37) folds itself, precisely, for at least one of whichever of the weld lines (2a, 2b, 2ae, 2be) which may have been wanted to perform,
- at least the body of impact (6) or/and the zipper jaw (8) divided in at least two pieces or units {or at least in three units when the impact body (6) has on both sides a zipper jaw (8)}, in which at least one of these will be mobile and will move {actioned through a mechanical method such as a linear cylinder or linear transaction unit} towards at least one of its sides: destined to fold at least one flap/triangular shape (36) or strip (37).
- at least one way of a push system such as, for example, a stylet(44), rotating rod (45) or guillotine (moving up to down) {activated both through a moving mode as, for example, at least one lineal cylinder (9) or/and rotating (16 fig 4)} fixated in the base face or side or the lateral side of the piece or unit in the upper section of the impact body (6) and/or the zipper jaw (8), which is positioned from inside {without emerging toward the outside, to allow the impact body (6) and the zipper jaw (8) to go together} when it is not actioned: destined to push downwards at least part of the flap/triangular shape (36) or strip (37), so as to make them fold upon themselves in at least one part of the flap/triangular shape (36) or strip (37) over at least part of the other part of the same flap/triangular shape (36) or strip (37), and
- at least one system of attachment or fixation as for example, that of at least one welding system, once that the flap/triangular shape (36) or strip (37) has been folded at least one time upon itself, so as to seal or attach at least one, two or more times (2ac, 2bc, 2ad, 2bd) by at least one face of the flap/triangular shape (36) or strip (37) in at least part of the edge (c) {generated when folding at least once the flap/triangular shape (36) or strip (37)} or/and the next and separate zone (d) of this edge (c), in such manner that it will make the flap/triangular shape (36) or strip (37) keep itself folded at least once over itself.

58. Machine in compliance with any of claims 53 or 54, **characterized by** it being comprised of a device, optionally, for sealing or for sealing and cutting the flap/triangular shape (36) or strip (37) which is loose once it has been folded at least once upon itself, endowed with:
- at least one system of attachment or fixation as, for example, that of at least one welding system {via a source of heat such as a resistance, to seal at least once with at least one welding line and at least part of at least one face of the flap/triangular shape (36) or strip (37) which is loose} or/and cut/cauterizing system {through a way of cutting such as a blade to cut the entirety or at least part of the flap/triangular shape (36) or strip (37) which is loose}, disposed for the flap/triangular shape {36} or strip (37) which is loose after having been folded at least once upon itself. Besides, they may be fixed, for example: in at least one of the lateral sides {those which will enter in contact with the flaps/triangular shape or flap (37), whenever it is generated} or in the cavity (42) of both the impact body (6) or/and a zipper jaw (8).

59. Machine in compliance with claim 53, characterized with the bodies of impact (6) and zipper jaws (8) being selected from among:
- a double set, which comprises a zipper jaw (8) aligned (or which aligns itself) with an impact body (6);
- a triple set, which contains two zipper jaws (8) aligned (or which align themselves) with an impact body (6) located in the center, and
- a quadruple set, which contains two zipper jaws (8) aligned (or which align themselves) with two impact bodies (6) located in the center.

60. Machine complying with claim 59, characterized for it being comprised of two sets of [at least one impact body (6) and one or two zipper claws (8)] which align themselves or are aligned, and which require to have a separation between themselves, in which at least the container or the starter container which was to be transformed, can enter or be introduced within themselves. One of the following sets can be selected:
- one or two sets (Triple and/or quadruple) and/or one, two, three, or four double sets: in which the impact body (6) can be mobile [activated by linear movement means (9) and/or rotating motion ones] and/or immobile.

61. Machine complying with claims 53, 55, 56, 57, 58, 59 and 60 **characterized by** it comprising at least one additional step, previous to being introduced in the initial container in the machine or between the holding claws (3), in which at least one impact body (6) and/or at least one zipper jaw (8) or, also, at least one double, triple or quadruple claw set (6,8) and/or, in some of the cases, the holding claw (3): are going to be displaced and then retaken back to starting point, through an impulse mode such as a linear cylinder (9) and/or rotating one, or also, from an unit of lineal transport: so as to enable some space for the main container to be introduced without any difficulty in the machine's starting place, where the starting package is transformed to the form which we want to get of a geometric body in 3D.

62. Machine complying with claims 53, 55, 56, 57, 58, 59 and 60 and 61 **characterized by** it comprising additionally at least one holding clamp (3) or one of more sets of two or more holding clamps {activated through an impulse mode as for example a claw cylinder or a rotating or linear cylinder}: they are made to grab the container and/or exert some pressure on the fluid which is contained within the container toward the contours of the container, in a zone, distant from the flaps where the body of impact is acting (6), in which the holding clamps (3) are retractable so as to liberate (or liberate but still exerting pressure on the container, so as to keep it in a tight grip) when said impact bodies are applied, in such a manner that the inflation of the container is possible so it can acquire the shape of a three-dimensional geometric object. At the same time, the pressure exerted improves the formation of the flap.

63. Machine complying with claims 53, 55, 56,57,58, 59, 60, 61 and 62, characterized for its comprising of additionally a trapdoor (10) activated by lineal and/or rotating motion means, destined to being positioned and getting away under the starting container or the holding clamp (3), so as to serve as a support base for the initial container before it being transformed, and it also comprises means of displacement in the height of the trapdoor destined to regulate the height of the blueprint and locating the initial container in the precise height required, so that the holding clamps (3) hold the initial container by the middle zone, on the extreme sides or in the zone not next to the lateral perimeter side in which flaps originate.

64. Machine in compliance with claims 53, 55, 56, 57 and 58 which is characterized for its comprising:
- at least one support,
- at least one sensor destined to detecting the initial container or the container initially introduced in the machine,
- at least one triple or quadruple set of clamps or jaws (6,8) in the upper part, which dispose both the impact body (6) and the closing jaws (8): in at least one of the devices for folding the flap (36) or strip (37) over itself, alongside with fixating or sealing at least once the flap/triangular shape (36) or strip (37) folded at least once over itself, in which:
The set of jaws in the upper side (6, 8) and in the lower part, are aligned or align themselves vertically, and they have a separation between themselves in which at least, as a minimum, the container, already transformed, or the initial container, may pass or be introduced between these two sets of jaws (6, 8) in which the impact body (6) {it is more optimized when it has a cylindrical shape, because the flaps get formed better, especially in cases in which the container has inside liquids or pastes} in each set they are fixated to the stem of a rotating cylinder and which, at the same time, the rotating cylinder in the upper part is fixed to the stem of a linear cylinder (9) vertically.
The zipper jaws (8) {they are more optimized when they have a semi-cylindrical shape or they are concave, so as to attach themselves or be assembled with the lateral of the impact body (6)} of each triple and/or quadruple jaw set (6,8) when they are fixed to their respective impact bodies (6).
The starting container shall hit or collide (or vice versa):
- The starting container in first instance, collides with or hits the part above the impact jaw or clamp (6) to give way to two flaps.
- in second instance, after turning 180 degrees and advancing downwwards actioned by the linear cylinder (9) on the upper side}, the other lateral side parallel to the lateral side in which the flaps are located grabbed by the clamps or jaws (6, 8) will crash or hit the body of impact (6) of the lower part, so as to generate the other one or two flaps.
- in third instance, the flaps (or triangular shapes) generated above and below, will be: Firstly, optionally sealed at least once with at least one welding line [in case of generating a strip (37) from the flap or triangular shape: this will be sealed and cut again] and can be sealed and cut; in a second instance, folded over themselves, and thirdly, sealed at least once with at least one welding line.
The zipper clamps or jaws (8), when activated, catch and grab the container by the flaps/triangular shapes, when being caught between both clamps (6,8).
The impact bodies (6) are destined to turn around the container 180° [because these are fixed to the stem of a rotating cylinder (16)] downwards, so as to deposit or release the container, and, afterwards, the impact body (6) can come back to its initial point, turning 180° upwards.

65. Flexible container, **characterized by** being obtainable through the procedure described in claims 1 to 42, or using the device described in claims 43 to 52, alongside with also, using the machine described in claims 53 to 64.

66. Flexible container, according to claim 65, **characterized by** it being comprised of a container body in a similar way to a rhomboid pyramid (figure 17) with just one flap (triangular shape) manipulated in the lower part, being:
folded at least once over itself in at least one direction and/or towards at least one lateral side or face, and also, sealed by at least one or two welding lines in at least part of at least one face: the edge (c) and/or the contiguous zone (d) to the previous edge.

67. Flexible container in compliance with claim 65, **characterized by** it being comprised of a container body similar to a rhomboid pyramid (figure 17) with just one flap (or triangular shape) manipulated from below, being sealed and cut configuring a strip (37) which arches toward the lateral side.

68. Flexible container in compliance with claim 67, **characterized by** it being comprised additionally of a strip (37): At least the folding once upon itself towards at least one direction and/or towards at least one lateral face or side, and also, sealed by at least one or two welding lines in at least part of at least one side or face of the edge (c) and/or the contiguous zone (d) to the previous edge.

69. Flexible container in compliance with claims 66 or [67 and 68] **characterized by** it comprising additionally, before folding the flap (36) or strip (37) at least once over itself, at least one or two welding lines in at least part of it on at least one side: from the intersection of one or both flaps and the body of the container (2a, 2b) or/and the contiguous zone (2ae, 2be) to the intersection line or the welding line that goes before it.

70. Flexible container in compliance with claim 65, **characterized by** it comprising a container body similar to a basket (fig. 6) with at least just two flaps (triangular shapes) manipulated from below, being those:
folded at least once over each other in at least one direction and/or at least one lateral side, and, also, sealed by at least one or two welding lines in at least part of at least one side: the edge (c) and/or the contiguous zone (d) to the previous edge.

71. Flexible container in compliance with claim 65, **characterized by** int comprising a container body in a shape similar to a basket (fig. 6) with at least two flaps (or triangular shapes) manipulated in the lower side, being two or at least one of these, sealed and cut, making a strip (37) that arches toward the lateral side.

72. Flexible container in compliance with claim 71, characterized for it comprising additionally in both or at least one strip (37): at least the fold of at least once over themselves toward at least one direction or/and at least one lateral side and, also, sealed by at least one or two welding lines in at least part of at least one side of the edge (c) and/pr the contiguous zone (d) of the previous edge.

73. Flexible container in compliance with claims 69 or [71 and 72] **characterized by** it comprising, additionally, before the folding of the flap (36) or strip (37) at least once over itself, at least one or two welding lines in at least part of at least one side: the zone of intersection of one or two flaps and the container body (2a, 2b), and/or the contiguous zone (2ae, 2be) to the intersection zone or the welding line that comes before.

74. Flexible container in compliance with claim 65, **characterized by** it comprising a container body similar to a jar (fig 9) with just three flaps (triangular shapes), and the latter being:
folded at least once over themselves toward at least one direction and/or at least one lateral side, and, also, sealed by at least one or two welding lines in at least part of at least one side: the edge (c) and/or the contiguous zone (d) of the edge or the welding line preceding it.

75. Flexible container in compliance with claim 65, **characterized by** it comprising a container body similar to a jar (fig. 9) with just three flaps (triangular shapes) manipulated, being the three or at least one of them, sealed and cut configuring a strip (37) which arches toward the lateral side.

76. Flexible container in compliance with claim 75, **characterized by** it comprising additionally in the three or at least one strip (37): at least folded once over themselves toward at least one direction and/or at least one lateral side, and, also, sealed at least by one or two welding lines in at least part of at least one side of the edge (c) and/or contiguous zone (d) to the previous edge.

77. Flexible container in compliance with claims 74 or [76 and 76] **characterized by** it comprising additionally, before folding the flap (36) or strip (37) at least once over itself, at least one or two welding lines in at least part of at least one face or side: from the zone of intersection of one or two of the flaps and the body of the container (2a, 2b) and/or at least part of at least one face of the contiguous zone (2ae, 2be) to the intersection zone or the welding line before it.

78. Flexible container in compliance with claim 65, **characterized by** it being comprised by a container body in shape of a parallelepiped such as the Cube (fig. 7) or a rectangular prysm with four flaps (triangular shapes), being the latter:
folded at least once over themselves toward at least one direction and/or at least one lateral side, and, also, sealed by at least one or two welding lines in at least part of at least one side: the edge (c) and/or the contiguous zone (d) of the edge or the welding line preceding it.

79. Flexible container in compliance with claim 65, **characterized by** it being comprised by a container body in shape of a parallelepiped such as the cube (fig. 7) or a rectangular prysm with four flaps (triangular shapes), being the four of them or at least one of them sealed and cut creating a strip (37) which arches itself toward the lateral side.

80. Flexible container in compliance with claim 79, **characterized by** it being comprised additionally in four or at least one strip (37), by: at least the fold of at least once over itself toward at least one direction and/or at least one lateral face or side, and, also, sealed by at least one or two welding lines in at least part of at least one side of the edge (c) or/and the contiguous zone (d) to the previous edge.

81. Flexible container in compliance with claim 65, **characterized by** it being comprised by a container body in the shape of a parallelepiped such as the cube (fig. 7) or a rectangular prysm with four flaps (triangular shapes), being these:
both on the lower side, folded at least once over each other toward at least one direction and/or toward at least one lateral side, and also, sealed by at least one or two welding lines in at least part of at least one side: the edge (c) and/or contiguous zone (d) of the edge or the welding line coming before it.
both on the upper side, sealed and cut configuring a strip (37) which arches toward the lateral side in containers positioned vertically (fig. 11) and toward the upper side in containers that are positioned horizontally (fig. 13).

82. Flexible container in compliance with claims 78, [79 and 80] or 81, **characterized by** it being comprised additionally, before the folding of the flap (36) or strip (37) at least once over itself, at least one or two welding lines in at least part of at least one face or side: from the intersection zone of at least [one, both of the top ones, or all four] flaps / triangular shapes and the container body (2a, 2b) and/or, in at least part of at least one face or side of the contiguous zone (2ae, 2be) to the intersection zone or the previous welding line.

83. Flexible container in compliance with claim 65, **characterized by** it being comprised by a container body in the shape of a cylinder (fig. 19) with four flaps (triangular shapes), with them being:
folded at least once over themselves towards at least one direction and/or at least one lateral face or side, and, also, sealed by at least one or two welding lines in at least part of at least one face or side: that of the edge (c/g) and/or the contiguous zone (d/g) to the edge or the welding line before it.

84. Flexible container in compliance with claim 65, **characterized by** it being comprised by a container body in the shape of a cylinder (fig. 19) with four flaps (Triangular shapes), being the four or at least one of them, sealed and cut configuring a strip (37) which arches toward the lateral side.

85. Flexible container in compliance with claim 84, **characterized by** it being comprised, additionally, in the four of, or at least one strip (37): at least the folding of at least once over themselves in at least one direction and/or at least one lateral side or face, and, also, sealed by at least one or two welding lines in at least part of at least one side or face of the edge (c/g) or/and the contiguous zones (d/g) of the previous edge.

86. Flexible container in compliance with claim 65, **characterized by** it being comprised of a container body in the shape of a cylinder (fig. 19), with four flaps (triangular shapes), being these:
both below, folded at least once over each other towards at least one direction and/or at least one lateral face or side, and, sealed by at least one or two welding lines in at least part of at least one side or face: that of the edge (c/g) and/or contiguous zone (d/g) to the edge or the welding line that comes before it.
both on the top, sealed and cut configuring a strip (37) which arches toward the lateral side.

87. Flexible container in compliance with claims 83 or [84 and 85] or 86, characterized for it being comprised, additionally, before the folding of the flap (36) or strip (37) at least once over itself, at least one or two welding lines (they may be, for example: straight lined, diagonal, oblique, semi-circular concave/convex, in zig-zag or two or more directions) in at least part of at least one side or face: the zone of intersection of at least [one, both on top, or all four] flaps/triangular shapes and the container body (2ag, 2bg), or/and, at least in part of at least one side of a contiguous zone (2aeg, 2beg) to the intersection zone or the welding zone that comes before it.

88. Flexible container in compliance with claims [78 to 82] or [83 to 87] characterized for it comprising at least one flap (48), when disposing at least of one edge welding line (3) in at least one of its faces.

89. Flexible container in compliance with any whichever of claims 65 to 88, characterized for it being comprised by the adhesion or sticking of at least two parts of at least one flap/triangular body (36) or strip (37) which is folded at least once over itself.

90. Flexible container in compliance with any of claims (65 to 88), or 89, characterized for it comprising at least one flap/triangular body (36) or loose strip (37): at least by one side and at least by one sealing line (46, 47).

91. Flexible container in compliance with any whichever between claims 89 or 90, characterized for it comprising at least one flap/triangular shape (36) or sealed loose strip (37): at least one cutting line (46, 47).

92. Flexible container in compliance with any whichever among claims (65 to 88) or 89 characterized for it comprising at least one flap/triangular shape (36) or loose strip (37): at least one cut line (46, 47).

93. Flexible container in compliance with any whichever between claims (65 to 87) or 89 characterized for it comprising at least one flap/triangular shape (36) or loose strip (37): attached or stuck to the container body or the flap/triangular shape (36) or strip (37).

94. Flexible container in compliance with whichever among claims (65 to 88) or 89 characterize for it comprising at least one flap/triangular shape (36) or loose strip (37): at least one fold at least once over itself and towards at least one direction of at least one part of at least two other parts.

95. Flexible container in compliance with claim 94 **characterized by** it comprising at least one flap/triangular shape (36) or strip (37) folded at least once over itself by at least two parts: attached to the body of the container or the flap/triangular shape (36) or strip (37).

96. Flexible container in compliance with claim 65 **characterized by** it comprising at least to welding lines (which could be, for example, straight lined, diagonal, oblique, semicircular concave/convex, zig-zag, in two or more directions) by at least one face of the flap/triangular shape or strip (37), where one takes place in the zone of intersection of the flap (or triangular shape) or strip (37) and the container body and, at least another more, takes place separated from the previous one between at least 0.1 and 5 milimeters (or, approximately).

97. Flexible container in compliance with claim 65 **characterized by** it comprising at least one welding line in its entirety or at least 3/4 (or approximately) from the surface of at least one face or side of at least one flap (or triangular shape) or strip (37)

98. Flexible container in compliance with whichever from the claims from 66 to 96 **characterized by** it comprising at least one welding line (which can be, for example: straight line, diagonal, oblique, semicircular concave/convex, in zig-zag or in two or more directions) by at least one face of a flap/triangular shape in the intersection zone of the flap/triangular shape and the body of the container (2 fig. 14).

99. Flexible container in compliance with claim 97 **characterized by** it comprising at least one cut line above or by the same welding line undertaken in the intersection line in the flap/triangular shape and the body of the container (2h fig. 21).
